(19) Europäisches Patentamt
European Patent Office
Office européen des brevets

(11) EP 3 468 366 B1

(12) EUROPEAN PATENT SPECIFICATION

(45) Date of publication and mention of the grant of the patent:
**31.07.2024 Bulletin 2024/31**

(21) Application number: **17810849.4**

(22) Date of filing: **06.06.2017**

(51) International Patent Classification (IPC):
***A01N 43/40*** $^{(2006.01)}$ ***A01N 25/00*** $^{(2006.01)}$
***A01N 25/32*** $^{(2006.01)}$ ***A01N 43/00*** $^{(2006.01)}$
***A01N 43/34*** $^{(2006.01)}$ ***A01N 43/42*** $^{(2006.01)}$

(52) Cooperative Patent Classification (CPC):
(C-Sets available)
**A01N 43/04; A01N 43/40** (Cont.)

(86) International application number:
**PCT/US2017/036135**

(87) International publication number:
**WO 2017/214132 (14.12.2017 Gazette 2017/50)**

(54) **SAFENED HERBICIDAL COMPOSITIONS CONTAINING HALAUXIFEN AND METHODS OF USE THEREOF IN BRASSICA SPECIES**

SICHERE HERBIZIDE ZUSAMMENSETZUNGEN MIT HALAUXIFEN UND VERFAHREN ZUR VERWENDUNG DAVON BEI KOHLPFLANZEN

COMPOSITIONS HERBICIDES PHYTOPROTECTRICES CONTENANT DE L’HALAUXIFÈNE ET LEURS PROCÉDÉS D’UTILISATION SUR DES ESPÈCES DE BRASSICA

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.06.2016 US 201662348528 P**

(43) Date of publication of application:
**17.04.2019 Bulletin 2019/16**

(73) Proprietor: **Corteva Agriscience LLC**
**Indianapolis, IN 46268 (US)**

(72) Inventors:
- **DEGENHARDT, Rory**
  **Edmonton, AB T6R 3G2 (CA)**
- **JURAS, Len**
  **Saskatoon, SK S7N 4L8 (CA)**
- **SATCHIVI, Norbert M.**
  **Indianapolis, IN 46268 (US)**
- **BATH, Shelley**
  **Otane 4277 (NZ)**
- **HARRIS, Bernard M.**
  **New Plymouth 4342 (NZ)**
- **MACRAE, Andrew**
  **Winnipeg, MB R2M 5M3 (CA)**
- **GAST, Roger E.**
  **Indianapolis, IN 46268 (US)**
- **MANN, Richard K.**
  **Indianapolis, IN 46268 (US)**
- **SMITH, Laura**
  **Brunkild, Manitoba R0G 0E0 (CA)**

(74) Representative: **f & e patent**
**Braunsberger Feld 29**
**51429 Bergisch Gladbach (DE)**

(56) References cited:
**WO-A1-2011/144683** **WO-A1-2015/108890**
**WO-A2-2007/082098** **CN-A- 104 170 830**
**US-A1- 2014 213 452** **US-A1- 2015 105 254**
**US-A1- 2015 196 030** **US-A1- 2015 351 398**

- **J. CHRISTOPHER HALL ET AL: "Antagonism by Clopyralid of Picloram-Induced Ethylene Biosynthesis in Rapeseed Plants", ZEITSCHRIFT FUER NATURFORSCHUNG. C, A JOURNAL OF BIOSCIENCES., vol. 46, no. 9, 1 October 1991 (1991-10-01), DE, pages 957 - 962, XP055641748, ISSN: 0939-5075, DOI: 10.1515/znc-1991-9-1040**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



(Cont. next page)

- **"Herbicides - Current Research and Case Studies in Use", 12 June 2013, INTECH, ISBN: 978-953-51-1112-2, article ISTVAN JABLONKAI: "Herbicide Safeners: Effective Tools to Improve Herbicide Selectivity", XP055266619, DOI: 10.5772/55168**

(52) Cooperative Patent Classification (CPC): (Cont.)

C-Sets
**A01N 43/04, A01N 25/32, A01N 43/40, A01N 43/42**

## Description

## BACKGROUND

The protection of *Brassica* species from weeds and other vegetation which inhibit the growth thereof is a constantly recurring problem. To help combat this problem, researchers in the field of synthetic chemistry have investigated an extensive variety of chemicals and chemical formulations effective in the control of such unwanted growth. Chemical herbicides of many types have been described in the literature including some in commercial use. Some herbicides, however, can injure the *Brassica* species in addition to the weeds and other vegetation intended to be controlled. WO 2007/082098 A2 teaches the safening of halauxifen with the safener cloquinocet in cereal crops. However, safening of herbicides in dicotyledonous crops, such as *Brassica,* is known to be difficult. WO 2011/144683 A1 mentions the possible use of a safener with the combination of halauxifen and organophosphate herbicides on Brassica crops, but a safening effect is not shown. Therefore, there exists a need for herbicide compositions that effectively control undesirable vegetation in *Brassica* crops while minimizing or preventing injury to the crops themselves.

## SUMMARY

Provided herein are safened herbicidal compositions for use in *Brassica* species susceptible to injury by halauxifen containing (a) a herbicidally effective amount of halauxifen, an agriculturally acceptable salt or ester thereof, and (b) one or more of (i) one or more herbicides, capable of safening halauxifen in *Brassica* species, or an agriculturally acceptable salt or ester thereof, or (ii) one or more herbicide safeners capable of safening halauxifen in *Brassica* species, or an agriculturally acceptable salt or ester thereof, as defined in appended claim 1. The compositions may also contain one or more agriculturally acceptable adjuvants or carriers and additional inert ingredients.

Provided herein also are methods for safening *Brassica* species susceptible to injury from halauxifen including applying to the *Brassica* species, contacting the vegetation, or area adjacent thereto with a herbicidal composition containing (a) a herbicidally effective amount of halauxifen, an agriculturally acceptable salt or ester thereof, and (b) one or more of (i) one or more herbicides, capable of safening halauxifen in *Brassica* species, or an agriculturally acceptable salt or ester thereof, or (ii) one or more herbicide safeners capable of safening halauxifen in *Brassica* species, or an agriculturally acceptable salt or ester thereof, as defined in appended claim 2.

The one or more herbicides capable of safening halauxifen in *Brassica* species susceptible to injury from halauxifen are clopyralid, quinclorac, agriculturally acceptable salts or esters thereof, and combinations thereof.

The one or more herbicide safeners capable of safening halauxifen in *Brassica* species susceptible to injury from halauxifen are isoxadifen, cloquintocet, mefenpyr, agriculturally acceptable salts or esters thereof, and combinations thereof.

The *Brassica* species susceptible to injury from halauxifen or an agriculturally acceptable salt or ester thereof, include, but are not limited to, all varieties of canola and oilseed rape (*Brassica napus,* BRSNN), forage brassica, garden brassica and seed producing brassica, including spring rape or Spring Argentine rape (*Brassica napus,* BRSNS), winter oilseed rape (*Brassica napus,* BRSNW), Roundup Ready® canola (*Brassica napus,* RR-BRSNN), Nexera™ canola (*Brassica napus,* BRSNN-NEX), stem kale *(Brassica oleracea* var. acephala subvar. medullosa, BRSOM), Aparima Gold swede (*Brassica* sp., BRSSS), rutabaga (*Brassica napus* var. napobrassica, BRSNA), turnip or Polish canola (*Brassica rapa,* BRSRR), kale/Chinese kale (*Brassica alboglabra,* BRSAG), Juncea canola or brown mustard (*Brassicajuncea,* BRSJU), broccoli/cauliflower (*Brassica oleracea* [botrytis], BRSOK), cabbage (*Brassica oleracea* [capitata], BRSOL), Abyssinian mustard (*Brassica carinata,* BRSCA), yellow mustard (*Sinapis alba,* SINAL) and Gold-of-Pleasure (*Camelina sativa,* CMASA).

## DETAILED DESCRIPTION

It has been found that broadleaf herbicides that are normally injurious to *Brassica* crops, can be made less injurious to the *Brassica* crops while still providing excellent control of unwanted vegetation. It has also been surprisingly found that safeners that are traditionally used in monocot crops can reduce injury of certain herbicides to dicot crops.

### I. Definitions

As used herein, "herbicide" means an active ingredient that kills, controls, or otherwise adversely modifies the growth of plants.

As used herein, "one or more herbicides capable of safening halauxifen" refers to those herbicides or agriculturally acceptable salts or esters thereof that do not adversely impact the physical and/or biological properties of halauxifen or an agriculturally acceptable salt or ester thereof or compositions containing the same when used to safen halauxifen

or an agriculturally acceptable salt or ester thereof, in *Brassica* species.

As used herein, a "*Brassica* species susceptible to injury from halauxifen" is a *Brassica* species that upon contact with halauxifen or an agriculturally acceptable salt or ester thereof experiences an adversely modifying effect such as, but not limited to, deviations from natural development, growth regulation, desiccation, growth retardation, plant death, and the like. *Brassica* species to be protected from the adverse effects of undesirable plant growth may be damaged to a certain degree when an effective dose of a herbicide is used.

"Safening", as used herein, means preventing or reducing the adverse effect of a herbicide on the *Brassica* species, *i.e.,* protecting the *Brassica* species without, at the same time, noticeably influencing (*i.e.*, overly diminishing) the herbicidal action on the undesirable plant growth, *i.e.*, weeds, to be combated.

As used herein, "plants and vegetation" include, but are not limited to, dormant seeds, germinant seeds, emerging seedlings, plants emerging from vegetative propagules, immature vegetation, mature vegetation, and established vegetation.

As used herein, "immature vegetation" refers to small vegetative plants prior to reproductive stage, and mature vegetation refers to vegetative plants during and after reproductive stage.

As used herein, "agriculturally acceptable salts and esters" refer to salts and esters that exhibit herbicidal activity or that are or can be converted in plants, water, or soil to the referenced herbicide. Exemplary agriculturally acceptable esters are those that are or can be hydrolyzed, oxidized, metabolized, or otherwise converted, *e.g.*, in plants, water, or soil, to the corresponding carboxylic acid which, depending upon the pH, may be in the dissociated or undissociated form. Exemplary salts include those derived from alkali or alkaline earth metals and those derived from ammonia and amines. Exemplary cations include sodium, potassium, magnesium, and aminium cations of the formula:

$$R^1R^2R^3R^4N^+$$

wherein $R^1$, $R^2$, $R^3$ and $R^4$ each, independently represents hydrogen or $C_1$-$C_{12}$ alkyl, $C_3$-$C_{12}$ alkenyl or $C_3$-$C_{12}$ alkynyl, each of which is optionally substituted by one or more hydroxy, $C_1$-$C_4$ alkoxy, $C_1$-$C_4$ alkylthio or phenyl groups, provided that $R^1$, $R^2$, $R^3$ and $R^4$ are sterically compatible. Additionally, any two of $R^1$, $R^2$, $R^3$ and $R^4$ together may represent an aliphatic difunctional moiety containing one to twelve carbon atoms and up to two oxygen or sulfur atoms. Salts can be prepared by treatment of the corresponding herbicidal carboxylic acid with a metal hydroxide, such as, for example, sodium hydroxide, with ammonia, with an amine, such as, for example, dimethylamine, trimethylamine, diethanolamine, 2-methyl-thiopropylamine, bisallylamine, 2-butoxyethylamine, morpholine, cyclododecylamine, or benzylamine or with a tetraalkylammonium hydroxide, such as, for example, tetramethylammonium hydroxide or choline hydroxide.

Exemplary esters include those derived from $C_1$-$C_{12}$ alkyl, $C_3$-$C_{12}$ alkenyl, $C_3$-$C_{12}$ alkynyl or $C_7$-$C_{10}$ aryl-substituted alkyl alcohols, such as methyl alcohol, isopropyl alcohol, 1-butanol, 2-ethylhexanol, butoxyethanol, methoxypropanol, 2-octanol, allyl alcohol, propargyl alcohol, cyclohexanol or unsubstituted or substituted benzyl alcohols. Benzyl alcohols may be substituted with from 1-3 substituents independently selected from halogen, $C_1$-$C_4$ alkyl or $C_1$-$C_4$ alkoxy. Esters can be prepared by coupling of the acids with the alcohol using any number of suitable activating agents such as those used for peptide couplings such as dicyclohexylcarbodiimide (DCC) or carbonyl diimidazole (CDI); by reacting the acids with alkylating agents such as alkylhalides or alkylsulfonates in the presence of a base such as triethylamine or lithium carbonate; by reacting the corresponding acid chloride of an acid with an appropriate alcohol; by reacting the corresponding acid with an appropriate alcohol in the presence of an acid catalyst or by transesterification.

## II. Compositions

Provided herein are safened herbicidal compositions for use in *Brassica* species susceptible to injury by halauxifen containing: (a) a herbicidally effective amount of halauxifen or an agriculturally acceptable salt or ester thereof, or combinations thereof, and (b) one or more of (i) one or more herbicides capable of safening halauxifen in *Brassica* species, or an agriculturally acceptable salt or ester thereof, or (ii) one or more herbicide safeners capable of safening halauxifen in *Brassica* species, or an agriculturally acceptable salt or ester thereof, or combinations, as defined in appended claim 1. The described compositions may also contain an agriculturally acceptable adjuvant or carrier and additional inert ingredients.

### A. Halauxifen

As used herein, "halauxifen" is 4-amino-3-chloro-6-(4-chloro-2-fluoro-3-methoxyphenyl)-2-pyridineccarboxylate and has the following structure:

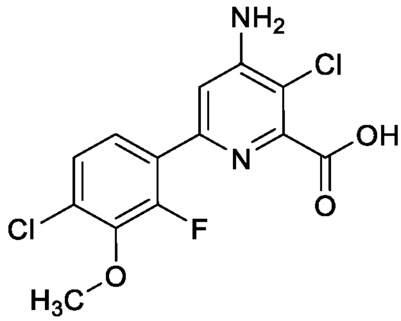

Exemplary chemical forms of halauxifen include, but are not limited to, for example, halauxifen-methyl, which is methyl 4-amino-3-chloro-6-(4-chloro-2-fluoro-3-methoxyphenyl)-2-pyridineccarboxylate and has the following structure:

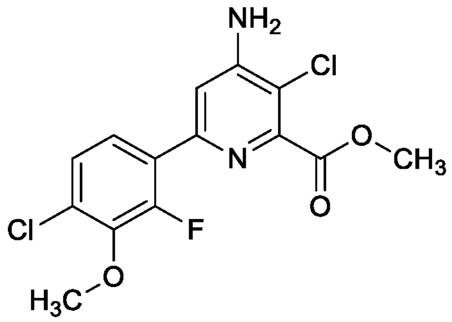

Halauxifen is described in U.S. Patent No. 7,314,849 (B2), which is incorporated herein by reference in its entirety. Exemplary uses of halauxifen-methyl include, but are not limited to, controlling broadleaf weeds, *e.g.*, in cereal crops. Halauxifen-methyl may be used as other forms, *e.g.*, halauxifen $K^+$ (potassium 4-amino-3-chloro-6-(4-chloro-2-fluoro-3-methoxyphenyl) picolinate), which has the following structure:

methoxyphenyl) picolinate), which has the following structure:

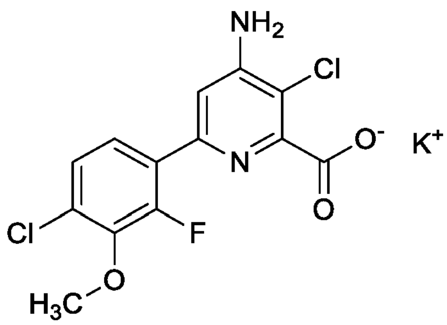

In the compositions and methods described herein, an agriculturally acceptable ester or salt of halauxifen is employed. An agriculturally acceptable ester, such as an aralkyl or alkyl ester, can be employed. The ester can be a $C_1$-$C_4$ alkyl ester, a methyl ester, a n-butyl ester, a benzyl ester, or a substituted benzyl ester. Additionally, the carboxylic acid form or the carboxylate salt of the halauxifen may be used.

**B. Herbicides capable of safening halauxifen**

The herbicide capable of safening halauxifen in *Brassica* species includes, but is not limited to, clopyralid, quinclorac, agriculturally acceptable salts or esters thereof, and combinations thereof.

## 1. Clopyralid

In some embodiments, the herbicide is clopyralid or an agriculturally acceptable salt or ester thereof.

As used herein, clopyralid is 3,6-dichloro-2-pyridinecarboxylic acid, which has the following structure:

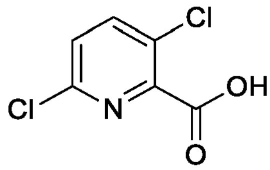

.

Exemplary uses of clopyralid include, but are not limited to, post-emergence control of many annual and perennial broadleaf weeds, *e.g.*, in sugar beet, fodder beet, oilseed rape, maize, cereals, brassicas, onions, leeks, strawberries and flax, and in grassland and non-crop land. Exemplary chemical forms of clopyralid include, but are not limited to, for example, clopyralid MEA or clopyralid olamine, which is 2-hydroxyethanaminium 3,6-dichloro-2-pyridinecarboxylate and has the following structure:

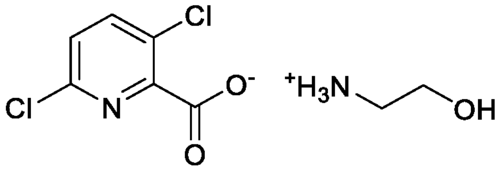

,

and clopyralid-triisopropanolammonium, which is (2*RS*,2'*RS*,2"*RS*)-tris(2-hydroxypropyl)ammonium 3,6-dichloropyridine-2-carboxylate and has the following structure:

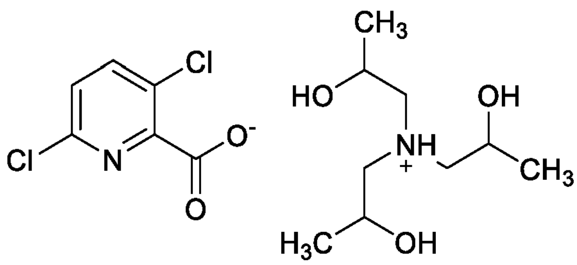

.

In some embodiments, the clopyralid is clopyralid (acid). In other embodiments, the clopyralid is clopyralid-olamine. In yet other embodiments, the clopyralid is clopyralid-triisopropanolammonium (TIPA). In some embodiments, the composition further contains a safener selected from isoxadifen, cloquintocet, mefenpyr, agriculturally acceptable salts or esters thereof, and combinations thereof. In some embodiments, the herbicide safener is isoxadifen-ethyl. In other embodiments, the herbicide safener is cloquintocet-mexyl. In yet other embodiments, the herbicide safener is mefenpyr-diethyl.

The ratio of halauxifen to clopyralid can vary. For example, the weight ratio of the halauxifen or a salt or ester thereof to the clopyralid or an agriculturally acceptable salt or ester thereof to the *Brassica* species is within the range of from 1:400 to 1.7:1. The weight ratio of the halauxifen or a salt or ester thereof, to the clopyralid or an agriculturally acceptable salt or ester thereof can also be within the range from 1:390 to 1.7:1, 1:380 to 1.7:1, 1:370 to 1.7:1, 1:360 to 1.7:1, 1:350 to 1.7:1, 1:340 to 1.7:1, 1:320 to 1.7:1, 1:310 to 1.7:1, 1:190 to 1.7:1, 1:180 to 1.7:1, 1:170 to 1.7:1, 1:160 to 1.7:1, 1:150 to 1.7:1, 1:140 to 1.7:1, 1:400 to 1:1, 1:380 to 1:1, 1:360 to 1:1, 1:340 to 1:1, 1:320 to 1:1, 1:300 to 1:1, 1:280 to 1:1, 1:260 to 1:1, 1:240 to 1:1, 1:220 to 1:1, 1:200 to 1:1, 1:180 to 1:1, 1:160 to 1:1, 1:140 to 1:1, 1:400 to 1:1.5, 1:380 to 1:1.5, 1:360 to 1:1.5, 1:340 to 1:1.5, 1:320 to 1:1.5, 1:300 to 1:1.5, 1:280 to 1:1.5, 1:260 to 1:1.5, 1:240 to 1:1.5, 1:220 to 1:1.5, 1:200 to 1:1.5, 1:180 to 1:1.5, 1:160 to 1:1.5, 1:150 to 1:1.5, 1:125 to 1:1.5, 1:100 to 1:1.5, 1:90 to 1:1.5, 1:80 to 1:1.5, 1:70 to 1:1.5, 1:60 to 1:1.5, 1:50 to 1:1.5, 1:40 to 1:1.5, 1:30 to 1:1.5, 1:20 to 1:1.5, or 1:144 to 1:1.5.

## 2. Quinclorac

In some embodiments, the safening herbicide is quinclorac or an agriculturally acceptable salt or ester thereof.

As used herein, quinclorac is 3,7-dichloro-8-quinolinecarboxylic acid, which has the following structure:

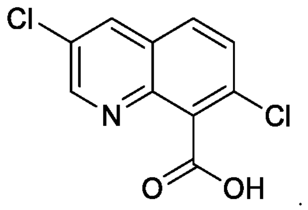

Exemplary uses of quinclorac include, but are not limited to, pre- and post-emergence control of grass weeds (*Echinochloa* spp., *Aeschynomene* spp., *Sesbania* spp.) and other weeds in direct-seeded and transplanted rice.

In some embodiments, the quinclorac is quinclorac (acid). In other embodiments, the quinclorac is quinclorac-dimethylammonium. In some embodiments, the composition further containsa herbicide safener selected from isoxadifen, cloquintocet, mefenpyr, agriculturally acceptable salts or esters thereof, and combinations thereof. In some embodiments, the herbicide safener is isoxadifen-ethyl. In other embodiments, the herbicide safener is cloquintocet-mexyl. In yet other embodiments, the herbicide safener is mefenpyr-diethyl.

The ratio of halauxifen to clopyralid can vary. For example, the weight ratio of the halauxifen or a salt or ester thereof to the quinclorac or an agriculturally acceptable salt or ester thereof is within the range of from 1:300 to 1:1.2. The weight ratio of the halauxifen or a salt or ester thereof, to the quinclorac or an agriculturally acceptable salt or ester thereof can also be within the range from 1:290 to 1:1.2, 1:280 to 1:1.2, 1:270 to 1:1.2, 1:260 to 1:1.2, 1:250 to 1:1.2, 1:240 to 1:1.2, 1:220 to 1:1.2, 1:200 to 1:1.2, 1:180 to 1:1.2, 1:160 to 1:1.2, 1:140 to 1:1.2, 1:120 to 1:1.2, 1:100 to 1:1.2, 1:80 to 1:1.2, 1:300 to 1:2, 1:280 to 1:2, 1:260 to 1:2, 1:240 to 1:2, 1:220 to 1:2, 1:200 to 1:2, 1:180 to1:2, 1:160 to 1:2, 1:140 to 1:2, 1:120 to 1:2, 1:100 to 1:2, 1:90 to 1:2, 1:80 to 1:2, 1:300 to 1:5, 1:280 to 1:5, 1:260 to 1:5, 1:260 to 1:5, 1:240 to 1:5, 1:240 to 1:5, 1:220 to 1:5, 1:200 to 1:5, 1:180 to 1:5, 1:160 to 1:5, 1:120 to 1:5, 1:115 to 1:5, 1:110 to 1:5, 1:105 to 1:5, 1:100 to 1:5, 1:95 to 1:5, 1:90 to 1:5, 1:89 to 1:5, 1:88 to 1:5, 1:87 to 1:5, 1:86 to 1:5, 1:85 to 1:5, 1:84 to 1:5, 1:83 to 1:5, 1:82 to 1:5, or 1:80 to 1:5.

### C. Safeners

The herbicide safener capable of safening halauxifen in *Brassica* species includes isoxadifen, cloquintocet, mefenpyr, agriculturally acceptable salts or esters thereof, and combinations thereof. In some embodiments, the herbicide safener is isoxadifen or an agriculturally acceptable salt or ester thereof.

As used herein, isoxadifen is 4,5-dihydro-5,5-diphenyl-1,2-oxazole-3-carboxylic acid, which has the following structure:

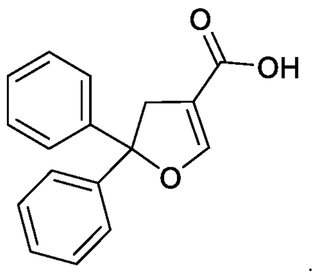

An exemplary form of isoxadifen is isoxadifen-ethyl or ethyl 4,5-dihydro-5,5-diphenyl-1,2-oxazole-3-carboxylate, which has the following structure:

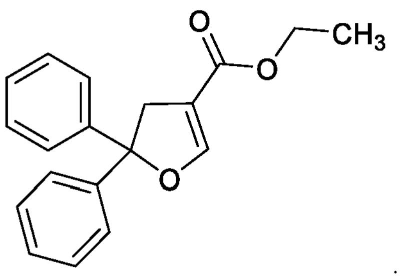

Isoxadifen-ethyl is used as a herbicide safener in maize and rice.

In some embodiments, the isoxadifen is isoxadifen (acid). In other embodiments the isoxadifen is isoxadifen-ethyl.

In some embodiments, the herbicide safener is cloquintocet or an agriculturally acceptable salt or ester thereof.

Safeners from the quinolinyloxyacetate family of chemicals are described in U.S. Patent 4,902,340and include derivatives of cloquintocet, such as cloquintocet acid, cloquintocet mexyl, cloquintocet triisopropylamine, and cloquintocet dimethylamine. Cloquintocet is (5-chloroquinolin-8-yloxy)acetate and has the following structure:

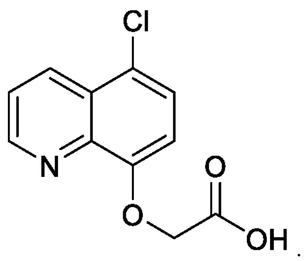

Cloquintocet mexyl is 1-methylhexyl (5-chloroquinolin-8-yloxy)acetate and has the following structure:

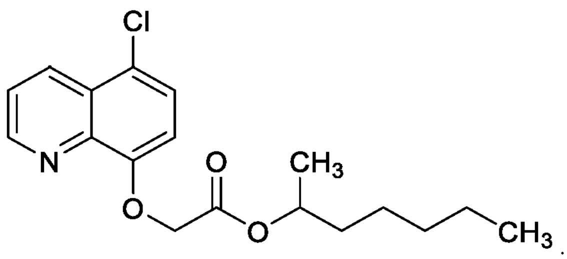

Exemplary uses of cloquintocet mexyl include its use as a herbicide safener in combination with grass-active herbicides (pinoxaden, clodinafop-propargyl) for selective control of annual grasses (*Alopecurus myosuroides, Avena* spp., *Lolium* spp., *Phalaris* spp., *Poa trivialis, Setaria* spp.) in small grain cereals.

In some embodiments, the cloquintocet is cloquintocet (acid). In other embodiments, the cloquintocet is cloquintocet-mexyl.

In some embodiments, the herbicide safener is mefenpyr or an agriculturally acceptable salt or ester thereof.

As used herein, mefenpyr is 1-(2,4-dichlorophenyl)-5-methyl-2-pyrazoline-3,5-dicarboxylic acid, which has the following structure:

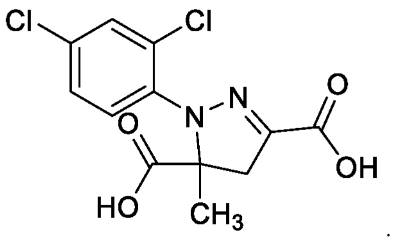

An exemplary form of mefenpyr is mefenpyr-diethyl or diethyl (*RS*)-1-(2,4-dichlorophenyl)-5-methyl-2-pyrazoline-3,5-dicarboxylate, which has the following structure:

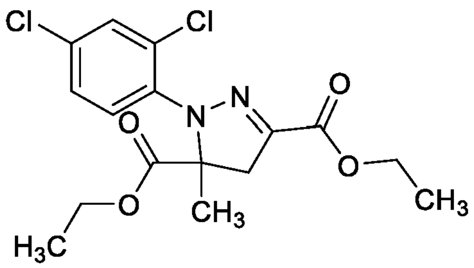

Mefenpyr-diethyl is used as a herbicide safener in combination with fenoxaprop-P-ethyl, for selective weed control in wheat, rye, triticale and some barley varieties.

In some embodiments, the herbicide safener is mefenpyr-diethyl.

**D. Relative ratios of halauxifen to safener**

In the compositions and methods described herein, the halauxifen or a salt or ester thereof is used in combination with (ii) a herbicide safener capable of safening the halauxifen to the *Brassica* species. The weight ratio of the halauxifen or a salt or ester thereof to (ii) a herbicide safener capable of safening the halauxifen to the *Brassica* species is within the range of from 1:50 to 10:1. The weight ratio of the halauxifen or a salt or ester thereof, to (ii) a herbicide safener capable of safening the halauxifen to the *Brassica* species can also be within the range from 1:45 to 10:1, 1:40 to 10:1, 1:35 to 10:1, 1:30 to 10:1, 1:25 to 10:1, 1:24 to 10:1, 1:23 to 10:1, 1:22 to 10:1, 1:20 to 10:1, 1:19 to 10:1, 1:18 to 10:1, 1:17 to 10:1, 1:16 to 10:1, 1:15 to 10:1, 1:10 to 10:1, 1:5 to 5:1, 1:2 to 2:1, 1:1.5 to 1.5:1, 1:1 to 1:2, 1:50 to 5:1, 1:48 to 5:1, 1:45 to 5:1, 1:40 to 5:1, 1:39 to 5:1, 1:38 to 5:1, 1:37 to 5:1, 1:36 to 5:1, 1:34 to 5:1, 1:32 to 5:1, 1:30 to 5:1, 1:30 to 5:1, 1:28 to 5:1, 1:26 to 5:1, 1:24 to 5:1, 1:20 to 5:1, 1:18 to 5:1, 1:16 to 5:1, 1:50 to 2:1, 1:48 to 2:1, 1:46 to 2:1, 1:44 to 2:1, 1:42 to 2:1, 1:40 to 2:1, 1:38 to 2:1, 1:36 to 2:1, 1:34 to 2:1, 1:34 to 2:1, 1:32 to 2:1, 1:30 to 2:1, 1:28 to 2:1, 1:26 to 2:1, 1:25 to 2:1, 1:24 to 2:1, 1:23 to 2:1, 1:22 to 2:1, 1:20 to 2:1, 1:19 to 2:1, 1:18 to 2:1, 1:17 to 2:1, or 1:16 to 2:1.

In certain embodiments of the compositions and methods described herein, the (a) halauxifen or a salt or ester thereof is used in combination with (b) one or more of (i) a herbicide[s], capable of safening the halauxifen to the *Brassica* species, or a salt or ester thereof, and (ii) a herbicide safener, capable of safening the halauxifen to the *Brassica* species, or a salt or ester thereof, as defined in appended claims 1 and 2. With regard to the compositions, in some embodiments, the three components are used in amounts such that the weight ratio of the (a) halauxifen or a salt or ester thereof is used in combination with (b) (i) clopyralid or an agriculturally acceptable salt or ester thereof, and (ii) a herbicide safener, capable of safening the halauxifen to the *Brassica* species, or a salt or ester thereof [i.e. (a):(i):(ii)] is from about 1-10 of (a) to about 1-400 of (i) to about 1-50 of (ii). In additional embodiments, the weight ratios of the three components include from about 1-9 of (a) to about 1-375 of (i) to about 1-47 of (ii); from about 1-8 of (a) to about 1-350 of (i) to about 1-46 of (ii); from about 1-7 of (a) to about 1-335 of (i) to about 1-38 of (ii); from about 1-6 of (a) to about 1-320 of (i) to about 1-37 of (ii); from about 1-5 of (a) to about 1-300 of (i) to about 1-36 of (ii); from about 1-4.7 of (a) to about 1.1-275 of (i) to about 1-33 of (ii); from about 1-4.3 of (a) to about 1.2-250 of (i) to about 1-30 of (ii); from about 1-4 of (a) to about 1.2-200 of (i) to about 1-25 of (ii); and from about 1-3.5 of (a) to about 1.4-175 of (i) to about 1-20 of (c). In other embodiments, the weight ratio of the (a) halauxifen or a salt or ester thereof is used in combination with (b) (i) clopyralid or an agriculturally acceptable salt or ester thereof, and (ii) a herbicide safener, capable of safening the halauxifen to the *Brassica* species, or a salt or ester thereof is within the range from about 1-3 of (a) to about 1.5-144 of (i) to about 1-16 of (ii).

Stated another way, the three components are used in amounts such that the weight ratio of the (a) halauxifen or a salt or ester thereof is used in combination with (b) (i) clopyralid or an agriculturally acceptable salt or ester thereof and (ii) a herbicide safener, capable of safening the halauxifen to the *Brassica* species, or a salt or ester thereof [i.e. (a):(i):(ii)] is from about 1:400:50 to about 10:6: 1; from 1:30:50 to about 10:120:1; from about 1:200:36 to about 5: 10: 1; from about 1:32: 36 to about 5:62.5: 1; from about 1:80: 16 to about 2: 10:1; or from about 1:20: 16 to about 2:40: 1.

In certain embodiments of the compositions and methods described herein, the (a) halauxifen or a salt or ester thereof is used in combination with (b) one or more of (i) a herbicide[s], capable of safening the halauxifen to the *Brassica* species, or a salt or ester thereof, and (ii) a herbicide safener, capable of safening the halauxifen to the *Brassica* species, or a salt or ester thereof. With regard to the compositions, in some embodiments, the three components are used in amounts such that the weight ratio of the (a) halauxifen or a salt or ester thereof is used in combination with (b) (i) quinclorac or an agriculturally acceptable salt or ester thereof, and (ii) a herbicide safener, capable of safening the halauxifen to the *Brassica* species, or a salt or ester thereof [i.e. (a):(i):(ii)] is from about 1-25 of (a) to about 1.2-300 of (i) to about 1-50 of (ii). In additional embodiments, the weight ratios of the three components include from about 1-20 of (a) to about 1.2-250 of (i) to about 1-45 of (ii); from about 1-15 of (a) to about 1.2-200 of (i) to about 1-40 of (ii); from

about 1-10 of (a) to about 1.2-150 of (i) to about 1-38 of (ii); from about 1-7.5 of (a) to about 1.2-140 of (i) to about 1-37 of (ii); from about 1-5 of (a) to about 2-200 of (i) to about 1-36 of (ii); from about 1-4.5 of (a) to about 1.2-100 of (i) to about 1-33 of (ii); from about 1-4 of (a) to about 1.2-80 of (i) to about 1-30 of (ii); from about 1-3.5 of (a) to about 3-180 of (i) to about 1-25 of (ii); and from about 1-3 of (a) to about 4-120 of (i) to about 1-20 of (c). In other embodiments, the weight ratio of the (a) halauxifen or a salt or ester thereof is used in combination with (b) (i) quinclorac or an agriculturally acceptable salt or ester thereof, and (ii) a herbicide safener, capable of safening the halauxifen to the *Brassica* species, or a salt or ester thereof is within the range from about 1-2 of (a) to about 5-80 of (i) to about 1-16 of (ii).

Stated another way, the three components are used in amounts such that the weight ratio of the (a) halauxifen or a salt or ester thereof is used in combination with (b) (i) quinclorac or an agriculturally acceptable salt or ester thereof, and (ii) a herbicide safener, capable of safening the halauxifen to the *Brassica* species, or a salt or ester thereof [i.e. (a):(i):(ii)] is from about 1:300:50 to about 10:12:1; from 1:15:50 to about 10:160:1; from about 1:300:36 to about 5:5:1; from about 1:16: 36 to about 5:93.8:1; from about 1:144:16 to about 3:4.5: 1; or from about 1:9:16 to about 3:72:1.

### E. Additional active ingredients

The safened compositions can further, be used in conjunction with 5-enolpyruvylshikimate-3-phosphate (EPSP) synthase inhibitors (*e.g.,* glyphosate), glutamine synthetase inhibitors (*e.g.,* glufosinate), synthetic auxins (*e.g.,* dicamba, phenoxy auxins, pyridyloxy auxins), auxin transport inhibitors, acetyl CoA carboxylase (ACCase) inhibitors (*e.g.,* aryloxyphenoxypropionates, cyclohexanediones, phenylpyrazolines), acetolactate synthase (ALS) or acetohydroxy acid synthase (AHAS) inhibitors (*e.g.,* imidazolinones, sulfonylureas, pyrimidinylthiobenzoates, triazolopyrimidines, sulfonylaminocarbonyltriazolinones), 4-hydroxyphenyl-pyruvate dioxygenase (HPPD) inhibitors, phytoene desaturase inhibitors, carotenoid biosynthesis inhibitors, protoporphyrinogen oxidase (PPO) inhibitors, cellulose biosynthesis inhibitors, mitosis inhibitors, microtubule inhibitors, very long chain fatty acid inhibitors, fatty acid and lipid biosynthesis inhibitors, photosystem I inhibitors, and photosystem II inhibitors (*e.g.,* triazines and bromoxynil).

The safened herbicide mixtures described herein can be applied in conjunction with one or more other herbicides to control a wider variety of undesirable vegetation. When used in conjunction with other herbicides, the composition can be formulated with the other herbicide or herbicides, tank mixed with the other herbicide or herbicides, or applied sequentially with the other herbicide or herbicides. Some of the herbicides that can be employed in conjunction with the compositions and methods described herein include, but are not limited to: 4-CPA, 4-CPB, 4-CPP, 2,4-D, 3,4-DA, 2,4-DB, 3,4-DB, 2,4-DEB, 2,4-DEP, 3,4-DP, 2,3,6-TBA, 2,4,5-T, 2,4,5-TB, acetochlor, acifluorfen, aclonifen, alachlor, allidochlor, alloxydim, alorac, ametridione, ametryn, amibuzin, amicarbazone, amidosulfuron, aminocyclopyrachlor, aminopyralid, amiprofos-methyl, amitrole, ammonium sulfamate, anilofos, anisuron, asulam, atraton, atrazine, azafenidin, azimsulfuron, aziprotryne, barban, BCPC, beflubutamid, benazolin, bencarbazone, benfluralin, benfuresate, bensulfuron-methyl, bensulide, benthiocarb, bentazon-sodium, benzadox, benzfendizone, benzipram, benzobicyclon, benzofenap, benzofluor, benzoylprop, benzthiazuron, bialaphos, bicyclopyrone, bifenox, bilanafos, bispyribac-sodium, borax, bromacil, bromobonil, bromobutide, bromofenoxim, bromoxynil, brompyrazon, butachlor, butafenacil, butamifos, butenachlor, buthidazole, buthiuron, butralin, butroxydim, buturon, butylate, cacodylic acid, cafenstrole, calcium chlorate, calcium cyanamide, cambendichlor, carbasulam, carbetamide, carboxazole, chlorprocarb, carfentrazone-ethyl, CDEA, CEPC, chlomethoxyfen, chloramben, chloranocryl, chlorazifop, chlorazine, chlorbromuron, chlorbufam, chloreturon, chlorfenac, chlorfenprop, chlorflurazole, chlorflurenol, chloridazon, chlorimuron, chlornitrofen, chloropon, chlorotoluron, chloroxuron, chloroxynil, chlorpropham, chlorsulfuron, chlorthal, chlorthiamid, cinidon-ethyl, cinmethylin, cinosulfuron, cisanilide, clethodim, cliodinate, clodinafop-propargyl, clofop, clomazone, clomeprop, cloprop, cloproxydim, cloransulam-methyl, CMA, copper sulfate, CPMF, CPPC, credazine, cresol, cumyluron, cyanatryn, cyanazine, cycloate, cyclopyrimorate, cyclosulfamuron, cycloxydim, cycluron, cyhalofop-butyl, cyperquat, cyprazine, cyprazole, cypromid, dalapon, dazomet, delachlor, desmedipham, desmetryn, di-allate, dicamba, dichlobenil, dichloralurea, dichlormate, dichlorprop, dichlorprop-P, diclofop-methyl, diclosulam, diethamquat, diethatyl, difenopenten, difenoxuron, difenzoquat, diflufenican, diflufenzopyr, dimefuron, dimethachlor, dimethametryn, dimethenamid, dimethenamid-P, dimexano, dimidazon, dinitramine, dinofenate, dinoprop, dinosam, dinoseb, dinoterb, diphenamid, dipropetryn, diquat, disul, dithiopyr, diuron, DMPA, DNOC, DSMA, EBEP, eglinazine, endothal, epronaz, EPTC, erbon, esprocarb, ethalfluralin, ethametsulfuron, ethidimuron, ethiolate, ethofumesate, ethoxyfen, ethoxysulfuron, etinofen, etnipromid, etobenzanid, EXD, fenasulam, fenoprop, fenoxaprop, fenoxaprop-P-ethyl, fenoxaprop-P-ethyl + isoxadifen-ethyl, fenoxasulfone, fenquinotrione, fenteracol, fenthiaprop, fentrazamide, fenuron, flamprop, flamprop-M, flazasulfuron, florasulam, florpyrauxifen, fluazifop, fluazifop-P-butyl, fluazolate, flucarbazone, flucetosulfuron, fluchloralin, flufenacet, flufenican, flufenpyr-ethyl, flumetsulam, flumezin, flumiclorac-pentyl, flumioxazin, flumipropyn, fluometuron, fluorodifen, fluoroglycofen, fluoromidine, fluoronitrofen, fluothiuron, flupoxam, flupropacil, flupropanate, flupyrsulfuron, fluridone, flurochloridone, fluroxypyr, flurtamone, fluthiacet, fomesafen, foramsulfuron, fosamine, fumiclorac, furyloxyfen, glufosinate salts and esters, glufosinate-ammonium, glufosinate-P-ammonium, glyphosate salts and esters, halosafen, halosulfuron-methyl, haloxydine, haloxyfop-methyl, haloxyfop-P-methyl, hexachloroacetone, hexaflurate, hexazinone, imazamethabenz, imazamox, imazapic, imazapyr, imazaquin, imazethapyr, imazosulfuron, indanofan, indaziflam, iodobonil, iodomethane, iodosulfuron, iodosulfuron-ethyl-sodium, iofensulfuron, ioxynil, ipazine, ipfencarbazone, iprymidam, isocarbamid, isocil, isomethiozin, isonoruron, isopolinate, isopropalin, isoproturon, isouron, isoxaben, isoxachlortole, isoxaflutole, isoxapyrifop, karbutilate, ketospiradox, lancotrione, lactofen, lenacil, linuron, MAA, MAMA, MCPA, MCPB, mecoprop, mecoprop-P, medinoterb, mefenacet, mefluidide, mesoprazine, mesosulfuron, mesotrione, metam, metamifop, metamitron, metazachlor, metazosulfuron, metflurazon, methabenzthiazuron, methalpropalin, methazole, methiobencarb, methiozolin, methiuron, methometon, methoprotryne, methyl isothiocyanate, methyldymron, metobenzuron, metobromuron, metolachlor, metosulam, metoxuron, metribuzin, metsulfuron, metsulfuron-methyl, molinate, monalide, monisouron, monochloroacetic acid, monolinuron, monuron, morfamquat, MSMA, naproanilide, napropamide, napropamide-M, naptalam, neburon, nicosulfuron, nipyraclofen, nitralin, nitrofen, nitrofluorfen, norflurazon, noruron, orbencarb, orthosulfamuron, oryzalin, oxadiargyl, oxadiazon, oxapyrazon, oxasulfuron, oxaziclomefone, oxyfluorfen, paraflufen-ethyl, parafluron, paraquat, pebulate, pelargonic acid, pendimethalin, penoxsulam, pentachlorophenol, pentanochlor, pentoxazone, perfluidone, pethoxamid, phenisopham, phenmedipham, phenmedipham-ethyl, phenobenzuron, phenyl mercury acetate, picloram, picolinafen, pinoxaden, piperophos, potassium arsenite, potassium azide, potassium cyanate, pretilachlor, primisulfuron-methyl, procyazine, prodiamine, profluazol, profluralin, profoxydim, proglinazine, prohexadione-calcium, prometon, prometryn, pronamide, propachlor, propanil, propaquizafop, propazine, propham, propisochlor, propoxycarbazone, propyrisulfuron, propyzamide, prosulfalin, prosulfocarb, prosulfuron, proxan, prynachlor, pydanon, pyraclonil, pyraflufen-ethyl, pyrasulfotole, pyrazogyl, pyrazolynate, pyrazosulfuron-ethyl, pyrazoxyfen, pyribenzoxim, pyributicarb, pyriclor, pyridafol, pyridate, pyriftalid, pyriminobac, pyrimisulfan, pyrithiobac-sodium, pyroxasulfone, pyroxsulam, quinclorac, quinmerac, quinoclamine, quinonamid, quizalofop, quizalofop-P-ethyl, rhodethanil, rimsulfuron, saflufenacil, S-metolachlor, sebuthylazine, secbumeton, sethoxydim, siduron, simazine, simeton, simetryn, SMA, sodium arsenite, sodium azide, sodium chlorate, sulcotrione, sulfallate, sulfentrazone, sulfometuron, sulfosate, sulfosulfuron, sulfuric acid, sulglycapin, swep, SYN-523, TCA, tebutam, tebuthiuron, tefuryltrione, tembotrione, tepraloxydim, terbacil, terbucarb, terbuchlor, terbumeton, terbuthylazine, terbutryn, tetrafluron, thenylchlor, thiazafluron, thiazopyr, thidiazimin, thidiazuron, thiencarbazone-methyl, thifensulfuron, thifensulfuron-methyl, thiobencarb, tiafenacil, tiocarbazil, tioclorim, tolpyralate, topramezone, tralkoxydim, triafamone, tri-allate, triasulfuron, triaziflam, tribenuron, tribenuron-methyl, tricamba, triclopyr, tridiphane, trietazine, trifloxysulfuron, trifludimoxazin, trifluralin, triflusulfuron, trifop, trifopsime, trihydroxytriazine, trimeturon, tripropindan, tritac, tritosulfuron, vernolate, xylachlor and salts, esters, optically active isomers and mixtures thereof.

In some embodiments, the compositions described herein are employed in combination with one or more plant growth regulators, such as 2,3,5-tri-iodobenzoic acid, IAA, IBA, naphthaleneacetamide, α-naphthaleneacetic acids, benzyladenine, 4-hydroxyphenethyl alcohol, kinetin, zeatin, endothal, pentachlorophenol, thidiazuron, tribufos, aviglycine, ethephon, maleic hydrazide, gibberellins, gibberellic acid, abscisic acid, ancymidol, fosamine, glyphosine, isopyrimol, jasmonic acid, maleic hydrazide, mepiquat, morphactins, dichlorflurenol, flurprimidol, mefluidide, paclobutrazol, tetcyclacis, uniconazole, brassinolide, brassinolide-ethyl, cycloheximide, ethylene, methasulfocarb, prohexadione, triapenthenol, and trinexapac-ethyl. In some embodiments, the plant growth regulator is mixed with the halauxifen to cause a preferentially advantageous effect on plants.

### F. Adjuvants and carriers

The compositions provided herein can further include one or more agriculturally acceptable adjuvant or carrier. Suitable adjuvants or carriers should not be phytotoxic to the *Brassica* species, particularly at the concentrations employed in applying the compositions for selective weed control in the presence of the *Brassica* species and should not react chemically with herbicidal components or other composition ingredients. Such mixtures can be designed for application directly to weeds or their locus or can be concentrates or formulations that are normally diluted with additional carriers and adjuvants before application. The adjuvants or carriers can be solids, such as, for example, dusts, granules, water-dispersible granules, or wettable powders, or liquids, such as, for example, emulsifiable concentrates, solutions, emulsions or suspensions. Additionally, the adjuvants or carriers can also be provided as a premix or tank mixed.

Suitable agricultural adjuvants and carriers are well known to those of skill in the art and include, but are not limited to, crop oil concentrate; nonylphenol ethoxylate; benzylcocoalkyldimethyl quaternary ammonium salt; blend of petroleum hydrocarbon, alkyl esters, organic acid, and anionic surfactant; $C_9$-$C_{11}$ alkylpolyglycoside; phosphated alcohol ethoxylate; natural primary alcohol ($C_{12}$-$C_{16}$) ethoxylate; di-*sec*-butylphenol EO-PO block copolymer; polysiloxane-methyl cap; nonylphenol ethoxylate + urea ammonium nitrate; emulsified methylated seed oil; tridecyl alcohol (synthetic) ethoxylate (8EO); tallow amine ethoxylate (15 EO); PEG(400) dioleate-99.

Examples of liquid carriers that can be used in the compositions and methods described herein include water and organic solvents. Examples of useful organic solvents include, but are not limited to, petroleum fractions or hydrocarbons such as mineral oil, aromatic solvents, paraffinic oils, and the like; vegetable oils such as soybean oil, rapeseed oil, olive oil, castor oil, sunflower seed oil, coconut oil, corn oil, cottonseed oil, linseed oil, palm oil, peanut oil, safflower

oil, sesame oil, tung oil and the like; esters of the above vegetable oils; esters of monoalcohols or dihydric, trihydric, or other lower polyalcohols (4-6 hydroxy containing), such as 2-ethyl hexyl stearate, *n*-butyl oleate, isopropyl myristate, propylene glycol dioleate, di-octyl succinate, di-butyl adipate, di-octyl phthalate and the like; esters of mono, di and polycarboxylic acids and the like. Specific organic solvents include, but are not limited to toluene, xylene, petroleum naphtha, crop oil, acetone, methyl ethyl ketone, cyclohexanone, trichloroethylene, perchloroethylene, ethyl acetate, amyl acetate, butyl acetate, propylene glycol monomethyl ether and diethylene glycol monomethyl ether, methyl alcohol, ethyl alcohol, isopropyl alcohol, amyl alcohol, ethylene glycol, propylene glycol, glycerine, *N*-methyl-2-pyrrolidinone, *N*,*N*-dimethyl alkylamides, dimethyl sulfoxide, liquid fertilizers and the like. Water is useful as a carrier for the dilution of concentrates.

Suitable solid carriers include but are not limited to talc, pyrophyllite clay, silica, attapulgus clay, kaolin clay, kieselguhr, chalk, diatomaceous earth, lime, calcium carbonate, bentonite clay, Fuller's earth, cottonseed hulls, wheat flour, soybean flour, pumice, wood flour, walnut shell flour, lignin, cellulose, and the like.

The compositions described herein may further include one or more surface-active agents. Such surface-active agents can be used in both solid and liquid compositions, and can be designed to be diluted with a carrier before application. The surface-active agents can be anionic, cationic or nonionic in character and can be employed as emulsifying agents, wetting agents, suspending agents, or for other purposes. Surfactants which may also be used in the present formulations are described, *inter alia,* in McCutcheon's Detergents and Emulsifiers Annual, MC Publishing Corporation: Ridgewood, NJ, 1998 and in Encyclopedia of Surfactants, Vol. I-III, Chemical Publishing Company: New York, 1980-81. Surface-active agents include, but are not limited to salts of alkyl sulfates, such as diethanolammonium lauryl sulfate; alkylarylsulfonate salts, such as calcium dodecylbenzenesulfonate; alkylphenol-alkylene oxide addition products, such as nonylphenol-$C_{18}$ ethoxylate; alcohol-alkylene oxide addition products, such as tridecyl alcohol-$C_{16}$ ethoxylate; soaps, such as sodium stearate; alkylnaphthalene-sulfonate salts, such as sodium dibutylnaphthalenesulfonate; dialkyl esters of sulfosuccinate salts, such as sodium di(2-ethylhexyl) sulfosuccinate; sorbitol esters, such as sorbitol oleate; quaternary amines, such as lauryl trimethylammonium chloride; polyethylene glycol esters of fatty acids, such as polyethylene glycol stearate; block copolymers of ethylene oxide and propylene oxide; salts of mono and dialkyl phosphate esters; vegetable or seed oils such as soybean oil, rapeseed/canola oil, olive oil, castor oil, sunflower seed oil, coconut oil, corn oil, cottonseed oil, linseed oil, palm oil, peanut oil, safflower oil, sesame oil, tung oil and the like; and esters of the above vegetable oils, *e.g.,* methyl esters. These materials, such as vegetable or seed oils and their esters, can be used interchangeably as an agricultural adjuvant, as a liquid carrier or as a surface active agent.

Other additives useful in the compositions provided herein include, but are not limited to, compatibilizing agents, antifoam agents, sequestering agents, neutralizing agents and buffers, corrosion inhibitors, dyes, odorants, spreading agents, penetration aids, sticking agents, dispersing agents, thickening agents, freezing point depressants, antimicrobial agents, and the like. The compositions may also contain other compatible components, for example, other herbicides, plant growth regulants, fungicides, insecticides, and the like and can be formulated with liquid fertilizers or solid, particulate fertilizer carriers such as ammonium nitrate, urea and the like.

The concentration of active ingredients in the compositions described herein is generally from 0.0005 to 98 percent by weight. Additionally, concentrations from 0.0006 to 90 percent by weight can be used. In compositions designed to be employed as concentrates, the active ingredients can be present in a concentration from 0.1 to 98 weight percent or from 0.5 to 90 weight percent. Such compositions can be diluted with an inert carrier, such as, for example, water, before application. The diluted compositions usually applied to vegetation or the soil adjacent thereto can contain from 0.0006 to 15.0 weight percent active ingredient or from 0.001 to 10.0 weight percent active ingredient.

### III. Methods of Use

Provided herein also are methods for safening *Brassica* species susceptible to injury from halauxifen, including applying to the *Brassica* species, contacting the vegetation, or area adjacent thereto with a herbicidal composition containing (a) a herbicidally effective amount of halauxifen, an agriculturally acceptable salt or ester thereof, or combinations thereof and (b) one or more of (i) a herbicide[s], capable of safening the halauxifen to the *Brassica* species, or an agriculturally acceptable salt or ester thereof; or (ii) a herbicide safener, capable of safening the halauxifen to the *Brassica* species, or an agriculturally acceptable salt or ester thereof, as defined in appended claim 2.

The *Brassica* species susceptible to injury from halauxifen or an agriculturally acceptable salt or ester thereof, include, but are not limited to, all varieties of canola and oil seed rape (*Brassica napus,* BRSNN), forage brassica, garden brassica and seed producing brassica, including spring rape or Spring Argentine canola (*Brassica napus,* BRSNS), winter oilseed rape *(Brassica napus,* BRSNW), Roundup Ready® canola (*Brassica napus,* RR-BRSNN), Nexera™ canola (*Brassica napus,* BRSNN-NEX), stem kale (*Brassica oleracea* var. acephala subvar. medullosa, BRSOM), Aparima Gold swede (*Brassica* sp., BRSSS), rutabaga (*Brassica napus* var. napobrassica, BRSNA), turnip or Polish canola (*Brassica rapa,* BRSRR), kale/Chinese kale (*Brassica alboglabra,* BRSAG), Juncea canola or brown mustard (*Brassica juncea,* BRSJU), broccoli/cauliflower (*Brassica oleracea* [botrytis], BRSOK), cabbage (*Brassica oleracea* [capitata], BRSOL), Abyssinian mustard (*Brassica carinata,* BRSCA), yellow mustard (*Sinapis alba,* SINAL) and Gold-of-Pleasure

(*Camelina sativa,* CMASA).

The halauxifen or an agriculturally acceptable salt or ester of thereof and the one or more of (i) one or more herbicide[s] capable of safening halauxifen in *Brassica* species, or an agriculturally acceptable salt or ester thereof; or (ii) a herbicide safener, capable of safening halauxifen in *Brassica* species, or an agriculturally acceptable salt or ester thereof as described herein, can be applied either separately or together as part of a system. When part of a system, for example, halauxifen or an agriculturally acceptable salt or ester of thereof and the one or more of (i) one or more herbicide[s] capable of safening halauxifen in *Brassica* species, or an agriculturally acceptable salt or ester thereof; or (ii) a herbicide safener, capable of safening halauxifen in *Brassica* species, or an agriculturally acceptable salt or ester thereof as described herein, can be formulated in one composition, tank mixed, applied simultaneously, or applied sequentially. The halauxifen or an agriculturally acceptable salt or ester of thereof and the one or more of (i) one or more herbicide[s] capable of safening halauxifen in *Brassica* species or an agriculturally acceptable salt or ester thereof; or (ii) a herbicide safener, capable of safening halauxifen in *Brassica* species, or an agriculturally acceptable salt or ester thereof as described herein, can be applied pre-emergently to the *Brassica* species or the undesirable vegetation or post-emergently to the *Brassica* species or the undesirable vegetation.

Herbicidal activity is exhibited by halauxifen or an agriculturally acceptable salt or ester of thereof, when it is applied directly to a plant or to the area adjacent to the plant at any stage of growth. The herbicidal activity observed depends upon the plant species to be controlled, the stage of growth of the plant, the application parameters of dilution and spray drop size, the particle size of solid components, the environmental conditions at the time of use, the specific compound employed, the specific adjuvants and carriers employed, the soil type, and the like, as well as the amount of chemical applied. These and other factors can be adjusted to promote non-selective or selective herbicidal action. The compositions of halauxifen described herein may be applied as a post-emergence application, or pre-emergence application, to relatively immature undesirable vegetation to achieve the maximum control of the undesirable vegetation.

The application rate will depend upon the particular type of weed to be controlled, the degree of control required, and the timing and method of application. In the compositions described herein the halauxifen, or a salt or ester thereof, can be applied at an application rate of from 1 gram acid equivalent per hectare (g ae/ha) to 25 g ae/ha based on the total amount of the halauxifen, or a salt or ester thereof, in the composition. Additionally, in the compositions described herein the halauxifen, or a salt or ester thereof, can be applied at an application rate of from 1 g ae/ha to 22 g ae/ha, 1 g ae/ha to 20 g ae/ha, 1 g ae/ha to 19 g ae/ha, 1 g ae/ha to 18 g ae/ha, 1 g ae/ha to 17 g ae/ha, 1 g ae/ha to 16 g ae/ha, 1 g ae/ha to 15 g ae/ha, 1.1 g ae/ha to 25 g ae/ha, 1.1 g ae/ha to 22 g ae/ha, 1.1 g ae/ha to 20 g ae/ha, 1.1 g ae/ha to 19 g ae/ha, 1.1 g ae/ha to 18 g ae/ha, 1.1 g ae/ha to 17 g ae/ha, 1.1 g ae/ha to 16 g ae/ha, 1.1 g ae/ha to 15 g ae/ha, 1.25 g ae/ha to 25 g ae/ha, 1.25 g ae/ha to 22 g ae/ha, 1.25 g ae/ha to 20 g ae/ha, 1.25 g ae/ha to 19 g ae/ha, 1.25 g ae/ha to 18 g ae/ha, 1.25 g ae/ha to 17 g ae/ha, 1.25 g ae/ha to 16 g ae/ha, 1.25 g ae/ha to 15 g ae/ha, 1.15 g ae/ha to 10 g ae/ha, 2.5 g ae/ha to 25 g ae/ha, 2.5 g ae/ha to 20 g ae/ha, 2.5 g ae/ha to 17.5 g ae/ha, or 2.5 g ae/ha to 15 g ae/ha based on the total amount of the halauxifen, or a salt or ester thereof, in the composition.

In some embodiments, the (i) herbicide capable of safening the halauxifen to the *Brassica* species is clopyralid or an agriculturally acceptable salt or ester thereof. In the compositions described herein the clopyralid or an agriculturally acceptable salt or ester thereof, can be applied at an application rate of from 15 g ae/ha to 400 g ae/ha. Additionally, in the compositions described herein the clopyralid or an agriculturally acceptable salt or ester thereof, can be applied at an application rate of from 15 g ae/ha to 380 g ae/ha, 15 g ae/ha to 360 g ae/ha, 15 g ae/ha to 340 g ae/ha, 15 g ae/ha to 320 g ae/ha, 15 g ae/ha to 300 g ae/ha, 15 g ae/ha to 280 g ae/ha, 15 g ae/ha to 260 g ae/ha, 15 g ae/ha to 240 g ae/ha, 15 g ae/ha to 220 g ae/ha, 15 g ae/ha to 200 g ae/ha, 15 g ae/ha to 100 g ae/ha, 15 g ae/ha to 80 g ae/ha, 20 g ae/ha to 400 g ae/ha, 20 g ae/ha to 375 g ae/ha, 20 g ae/ha to 360 g ae/ha, 20 g ae/ha to 340 g ae/ha, 20 g ae/ha to 320 g ae/ha, 20 g ae/ha to 300 g ae/ha, 20 g ae/ha to 280 g ae/ha, 20 g ae/ha to 260 g ae/ha, 20 g ae/ha to 240 g ae/ha, 20 g ae/ha to 220 g ae/ha, 40 g ae/ha to 200 g ae/ha, 20 g ae/ha to 100 g ae/ha, 20 g ae/ha to 80 g ae/ha, 20 g ae/ha to 60 g ae/ha, 22.5 g ae/ha to 50 g ae/ha, 22.5 g ae/ha to 60 g ae/ha, 22.5 g ae/ha to 70 g ae/ha, 22.5 g ae/ha to 80 g ae/ha, 22.5 g ae/ha to 90 g ae/ha, 22.5 g ae/ha to 100 g ae/ha, 22.5 g ae/ha to 120 g ae/ha, 22.5 g ae/ha to 140 g ae/ha, 22.5 g ae/ha to 160 g ae/ha, 22.5 g ae/ha to 180 g ae/ha, 22.5 g ae/ha to 200 g ae/ha, 22.5 g ae/ha to 220 g ae/ha, 22.5 g ae/ha to 240 g ae/ha, 22.5 g ae/ha to 260 g ae/ha, 22.5 g ae/ha to 280 g ae/ha, 22.5 g ae/ha to 300 g ae/ha, 22.5 g ae/ha to 305 g ae/ha, 22.5 g ae/ha to 310 g ae/ha, 22.5 g ae/ha to 315 g ae/ha, 22.5 g ae/ha to 320 g ae/ha, 22.5 g ae/ha to 325 g ae/ha, 22.5 g ae/ha to 330 g ae/ha, 22.5 g ae/ha to 340 g ae/ha, 22.5 g ae/ha to 350 g ae/ha, 22.5 g ae/ha to 395 g ae/ha, 22.5 g ae/ha to 390 g ae/ha, 22.5 g ae/ha to 385 g ae/ha, 22.5 g ae/ha to 380 g ae/ha, 22.5 g ae/ha to 375 g ae/ha, 22.5 g ae/ha to 370 g ae/ha, or 22.5 g ae/ha to 360 g ae/ha, based on the total amount of the clopyralid or an agriculturally acceptable salt or ester thereof in the composition.

In some embodiments, the (i) herbicide capable of safening the halauxifen to the *Brassica* species is quinclorac or an agriculturally acceptable salt or ester thereof. In the compositions described herein the quinclorac or an agriculturally acceptable salt or ester thereof, can be applied at an application rate of from 30 g ae/ha to 300 g ae/ha. Additionally, in the compositions described herein the (i) herbicide[s], capable of safening the halauxifen to the *Brassica* species, or salt or ester thereof, can be applied at an application rate of from 30 g ae/ha to 280 g ae/ha, 30 g ae/ha to 260 g ae/ha,

30 g ae/ha to 240 g ae/ha, 30 g ae/ha to 220 g ae/ha, 30 g ae/ha to 200 g ae/ha, 30 g ae/ha to 180 g ae/ha, 30 g ae/ha to 160 g ae/ha, 30 g ae/ha to 140 g ae/ha, 30 g ae/ha to 120 g ae/ha, 30 g ae/ha to 100 g ae/ha, 30 g ae/ha to 90 g ae/ha, 30 g ae/ha to 80 g ae/ha, 40 g ae/ha to 300 g ae/ha, 40 g ae/ha to 280 g ae/ha, 40 g ae/ha to 260 g ae/ha, 40 g ae/ha to 240 g ae/ha, 40 g ae/ha to 220 g ae/ha, 40 g ae/ha to 200 g ae/ha, 40 g ae/ha to 180 g ae/ha, 40 g ae/ha to 160 g ae/ha, 40 g ae/ha to 140 g ae/ha, 40 g ae/ha to 120 g ae/ha, 40 g ae/ha to 100 g ae/ha, 40 g ae/ha to 90 g ae/ha, 40 g ae/ha to 80 g ae/ha, 50 g ae/ha to 300 g ae/ha, 50 g ae/ha to 280 g ae/ha, 50 g ae/ha to 260 g ae/ha, 50 g ae/ha to 240 g ae/ha, 50 g ae/ha to 220 g ae/ha, 50 g ae/ha to 190 g ae/ha, 50 g ae/ha to 180 g ae/ha, 50 g ae/ha to 160 g ae/ha, 50 g ae/ha to 140 g ae/ha, 50 g ae/ha to 120 g ae/ha, 50 g ae/ha to 100 g ae/ha, 50 g ae/ha to 90 g ae/ha, 50 g ae/ha to 80 g ae/ha, 50 g ae/ha to 290 g ae/ha, 50 g ae/ha to 270 g ae/ha, 30 g ae/ha to 40 g ae/ha, 40 g ae/ha to 50 g ae/ha, 40 g ae/ha to 250 g ae/ha, 50 g ae/ha to 250 g ae/ha, 60 g ae/ha to 300 g ae/ha, 60 g ae/ha to 280 g ae/ha, 70 g ae/ha to 260 g ae/ha, 80 g ae/ha to 250 g ae/ha, 80 g ae/ha to 230 g ae/ha, 80 g ae/ha to 210 g ae/ha, 80 g ae/ha to 190 g ae/ha, 80 g ae/ha to 170 g ae/ha, 90 g ae/ha to 170 g ae/ha, 100 g ae/ha to 170 g ae/ha, or 50 g ae/ha to 200 g ae/ha, based on the total amount of the quinclorac or an agriculturally acceptable salt or ester thereof in the composition.

In the compositions described herein the (ii) herbicide safener, capable of safening the halauxifen to the *Brassica* species, or salt or ester thereof, can be applied at an application rate of from 2.5 g ae/ha to 50 g ae/ha. Additionally, in the compositions described herein the (ii) herbicide safener, capable of safening the halauxifen to the *Brassica* species, or salt or ester thereof, can be applied at an application rate of from 2.5 g ae/ha to 48 g ae/ha, 2.5 g ae/ha to 46 g ae/ha, 2.5 g ae/ha to 44 g ae/ha, 2.5 g ae/ha to 42 g ae/ha, 2.5 g ae/ha to 40 g ae/ha, 4 g ae/ha to 50 g ae/ha, 4 g ae/ha to 48 g ae/ha, 4 g ae/ha to 46 g ae/ha, 4 g ae/ha to 45 g ae/ha, 4 g ae/ha to 44 g ae/ha, 4 g ae/ha to 43 g ae/ha, 4 g ae/ha to 42 g ae/ha, 4 g ae/ha to 41 g ae/ha, 4 g ae/ha to 40 g ae/ha, 5 g ae/ha to 50 g ae/ha, 5 g ae/ha to 48 g ae/ha, 5 g ae/ha to 46 g ae/ha, 5 g ae/ha to 45 g ae/ha, 5 g ae/ha to 44 g ae/ha, 5 g ae/ha to 43 g ae/ha, 5 g ae/ha to 42 g ae/ha, 5 g ae/ha to 41 g ae/ha, or 5 g ae/ha to 40 g ae/ha based on the total amount of the (ii) herbicide safener, capable of safening the halauxifen to the *Brassica* species in the composition. For example, the (i) herbicide[s], capable of safening the halauxifen to the *Brassica* species, or a salt or ester thereof, may be applied at a rate from 30 g ae/ha to 300 g ae/ha, the (ii) herbicide safener, capable of safening the halauxifen to the *Brassica* species, or a salt or ester thereof, may be applied at a rate from 5 g ae/ha to 50 g ae/ha, and the halauxifen, or a salt or ester thereof, may be applied at a rate from 1 g ae/ha to 25 g ae/ha.

The components of the mixtures described herein can be applied either separately or as part of a multipart herbicidal system.

The compositions and methods provided herein can be used to control weeds in *Brassica* species, and also in 5-enolpyruvylshikimate-3-phosphate (EPSP) synthase inhibitor-tolerant (*e.g.,* glyphosate-tolerant), glutamine synthetase inhibitor-tolerant (*e.g.,* glufosinate-tolerant), synthetic auxin-tolerant (*e.g.,* dicamba-tolerant, phenoxy auxin-tolerant, pyridyloxy auxin-tolerant), auxin transport inhibitor-tolerant, acetyl CoA carboxylase (ACCase) inhibitor-tolerant (*e.g.,* aryloxyphenoxypropionate-tolerant), acetolactate synthase (ALS) or acetohydroxy acid synthase (AHAS) inhibitor-tolerant (*e.g.,* imidazolinone-tolerant, sulfonylurea-tolerant, pyrimidinylthiobenzoate-tolerant, triazolopyrimidine-tolerant, and sulfonylaminocarbonyltriazolinone-tolerant), 4-hydroxyphenyl-pyruvate dioxygenase (HPPD) inhibitor-tolerant, phytoene desaturase inhibitor-tolerant, carotenoid biosynthesis inhibitor-tolerant, protoporphyrinogen oxidase (PPO) inhibitor-tolerant, cellulose biosynthesis inhibitor-tolerant, mitosis inhibitor-tolerant, microtubule inhibitor-tolerant, very long chain fatty acid inhibitor-tolerant, fatty acid and lipid biosynthesis inhibitor-tolerant, photosystem I inhibitor-tolerant, and photosystem II inhibitor-tolerant (*e.g.,* triazine-tolerant and bromoxynil-tolerant) *Brassica* species. The compositions and methods provided herein can be used applied to nursery *Brassica* species, pre-plant treatments and post-emergence treatments to *Brassica* species. The compositions and methods may be used in controlling undesirable vegetation in *Brassica* species genetically transformed to express specialized traits. Examples of specialized traits may include agronomic stress tolerance (including but not limited to drought, cold, heat, salt, water, nutrient, fertility, pH), pest tolerance (including but not limited to insects, fungi and pathogens) and crop improvement traits (including but not limited to yield; protein, carbohydrate, or oil content; protein, carbohydrate, or oil composition; plant stature and plant architecture). Additional examples include those expressing proteins toxic to invertebrate pests, such as *Bacillus thuringiensis* or other insecticidal toxins, or those with multiple or "stacked" foreign genes expressing insecticidal toxins, herbicide resistance, nutrition-enhancement and/or other beneficial traits, for example, grasses possessing multiple or stacked traits conferring tolerance to multiple chemistries and/or multiple modes of action via single and/or multiple resistance mechanisms.

The halauxifen or a salt or ester thereof and one or more of (i) one or more herbicide[s], capable of safening halauxifen in *Brassica* species, or salt or ester thereof; or (ii) a herbicide safener, capable of safening halauxifen in *Brassica* species, or an agriculturally acceptable salt or ester thereof, can be used in combination with herbicides that are selective to the *Brassica* species and which complement the spectrum of weeds controlled by the halauxifen. The compositions described herein and the complementary herbicides can be applied at the same time, either as a combination formulation, as a tank mix or sequentially. The compositions and methods may be used in controlling undesirable vegetation in *Brassica* species possessing agronomic stress tolerance (including but not limited to drought, cold, heat, salt, water, nutrient, fertility, pH), pest tolerance (including but not limited to insects, fungi and pathogens) and crop

improvement traits (including but not limited to yield; protein, carbohydrate, or oil content; protein, carbohydrate, or oil composition; plant stature and plant architecture).

The present compositions can be applied to vegetation or the soil or water adjacent thereto by the use of conventional ground or aerial dusters, sprayers, and granule applicators, by addition to irrigation or paddy water, and by other conventional means known to those skilled in the art.

The following Examples are presented to illustrate various aspects of the compositions and methods described herein and should not be construed as limitations to the claims.

**Examples**

Colby's equation was used to determine the herbicidal effects expected from the mixtures evaluated in the described trials (Colby, S. R. Calculation of the synergistic and antagonistic response of herbicide combinations. Weeds 1967, 15, 20-22.).

The following equation was used to calculate the expected activity of mixtures containing two active ingredients, A and B:

$$\text{Expected} = A + B - (A \times B/100)$$

A = observed efficacy of active ingredient A at the same concentration as used in the mixture;

B = observed efficacy of active ingredient B at the same concentration as used in the mixture.

The compositions tested, application rates employed, plant species tested, and results are given in Table 1 through Table 41.

BRSOM = *Brassica oleracea* var. acephala subvar. Medullosa (stem kale)

BRSSS = *Brassica* sp. (Aparima Gold swede)

BRSNS = *Brassica napus* (spring rape or Spring Argentine rape)

BRSNW = *Brassica napus* (winter oilseed rape)

BRSAG = *Brassica alboglabra* (kale/Chinese kale)

BRSJU = *Brassica juncea* (Juncea canola or brown mustard)

BRSNA = *Brassica napus* var. napobrassica (rutabaga)

BRSNN = *Brassica napus* (all varieties of canola and oilseed rape)

BRSNN-NEX = *Brassica napus* (Nexera™ canola)

BRSRR = *Brassica rapa* (turnip or Polish canola)

RR-BRSNN = *Brassica napus* (Roundup Ready® canola)

g ae/ha = grams acid equivalent per hectare

g ai/ha = grams active ingredient per hectare

Mean % visual injury = observed value of percent (%) injury rated visually

Observed Mean % visual injury = observed value of percent (%) injury rated visually

Colby predicted mean % visual injury = expected value of percent (%) injury as calculated by Colby's equation

Mean % visual deformation = observed value of percent (%) deformation rated visually

Observed Mean % visual deformation = observed value of percent (%) deformation rated visually

Colby predicted mean % visual deformation = expected value of percent (%) deformation as calculated by Colby's equation

Mean % visual growth inhibition = observed value of percent (%) growth inhibition rated visually

Observed Mean % visual growth inhibition = observed value of percent (%) growth inhibition rated visually

Colby predicted mean % visual growth inhibition = expected value of percent (%) growth inhibition as calculated by Colby's equation

Mean % visual leafroll = observed value of percent (%) leafroll rated visually

Observed Mean % visual leafroll = observed value of percent (%) leafroll rated visually

Colby predicted mean % visual leafroll = expected value of percent (%) leafroll as calculated by Colby's equation

Mean % visual epinasty = observed value of percent (%) epinasty rated visually

Observed Mean % visual epinasty = observed value of percent (%) epinasty rated visually

Colby predicted mean % visual epinasty = expected value of percent (%) epinasty as calculated by Colby's equation

Obs = observed value of percent (%) injury rated visually

Exp = expected value of percent (%) injury as calculated by Colby's equation

Δ = difference between Obs and Exp values

**Example 1. Evaluation of Postemergence Herbicidal Safening of Halauxifen-Methyl in *Brassica* Species**

Two pot trials were established at Dow AgroSciences Waireka Field Station, New Zealand to evaluate crop safety of herbicide treatments to two species of leafy and bulb forage brassica crops (stem kale (*Brassica oleracea* var. acephala subvar. medullosa, BRSOM) and Aparima Gold swede (*Brassica* sp., BRSSS)). Trials were designed as randomized complete blocks with five replicates. Trials were established as weed-free tolerance trials. Pot size was 10 by 10 centimeters (cm, width x length). The forage brassica crops were grown using normal cultural practices for fertilization, seeding, watering and maintenance to ensure good growth of the crops.

All herbicide treatments were applied post-emergence with applications made to the crops at the 2 to 5-leaf stage. Herbicides were applied with a belt spray chamber system with compressed air as a propellant. The sprayer utilized a flat fan spray nozzle calibrated to deliver a uniform spray pattern that provided thorough coverage of the foliage using a 200 liters per hectare (L/ha) spray volume. All treatments were applied with Uptake adjuvant (paraffinic oil + non-ionic surfactant blend) at 0.5% volume per volume (v/v). Phytotoxicity to the crops was assessed visually at several intervals after application as percent overall injury, compared to an untreated control plot. The overall injury assessments were based on visual ratings of growth inhibition, leaf deformity, epinasty, and chlorosis. In general, three to four replicates were assessed for each treatment. All treatment results, both for the single product and mixtures, are an average of five replicates.

*Herbicide Treatments*

Halauxifen-methyl was applied as a technical formulation (95.94 grams acid equivalent per liter (g ae/L) suspension concentrate (SC)), and clopyralid-TIPA was applied as Versatill™ (300 g ae/L soluble (liquid) concentrate (SL)),

The compositions tested, application rates employed, plant species tested, and results are given in Table 1 through Table 3.

Table 1. Reduction in Percent (%) Visual Injury to BRSOM from Postemergence Applications of Halauxifen-methyl + Clopyralid-triisopropanolammonium (TIPA) in Field Trials.

| | | | Halauxifen-methyl | | Clopyralid-TIPA | | Clopyralid-TIPA + Halauxifen-methyl | |
|---|---|---|---|---|---|---|---|---|
| Crop Bayer Code | Trial Number | Evaluation Interval | g ae/ha | Mean % Visual Injury | g ae/ha | Mean % Visual Injury | Observed Mean % Visual Injury | Colby Predicted Mean % Visual Injury |
| BRSOM | 1 | 15DAA1 | 15 | 18.0 | 90 | 0.0 | 8.0 | 18.0 |
| BRSOM | 1 | 28DAA1 | 15 | 26.0 | 90 | 0.0 | 9.2 | 26.0 |
| BRSOM | 2 | 7DAA1 | 15 | 36.7 | 180 | 0.0 | 13.3 | 36.7 |
| BRSOM | 2 | 7DAA1 | 15 | 36.7 | 360 | 0.0 | 5.8 | 36.7 |
| BRSOM | 2 | 7DAA1 | 15 | 36.7 | 90 | 0.0 | 14.2 | 36.7 |
| BRSOM | 2 | 7DAA1 | 15 | 6.0 | 180 | 0.7 | 3.6 | 6.7 |
| BRSOM | 2 | 7DAA1 | 15 | 6.0 | 22.5 | 0.7 | 5.3 | 6.7 |
| BRSOM | 2 | 7DAA1 | 15 | 6.0 | 360 | 0.7 | 2.4 | 6.7 |
| BRSOM | 2 | 7DAA1 | 15 | 6.0 | 45 | 0.7 | 5.2 | 6.7 |
| BRSOM | 2 | 7DAA1 | 15 | 6.0 | 90 | 0.7 | 3.8 | 6.7 |
| BRSOM | 2 | 15DAA1 | 15 | 52.5 | 180 | 0.0 | 21.7 | 52.5 |
| BRSOM | 2 | 15DAA1 | 15 | 52.5 | 22.5 | 0.0 | 34.2 | 52.5 |
| BRSOM | 2 | 15DAA1 | 15 | 52.5 | 360 | 0.0 | 20.0 | 52.5 |
| BRSOM | 2 | 15DAA1 | 15 | 52.5 | 45 | 0.0 | 27.5 | 52.5 |
| BRSOM | 2 | 15DAA1 | 15 | 52.5 | 90 | 0.0 | 24.2 | 52.5 |
| BRSOM | 2 | 15DAA1 | 15 | 46.4 | 180 | 0.0 | 27.6 | 46.4 |
| BRSOM | 2 | 15DAA1 | 15 | 46.4 | 22.5 | 0.0 | 35.4 | 46.4 |
| BRSOM | 2 | 15DAA1 | 15 | 46.4 | 360 | 0 | 26.4 | 46.4 |
| BRSOM | 2 | 15DAA1 | 15 | 46.4 | 45 | 0 | 31.5 | 46.4 |
| BRSOM | 2 | 15DAA1 | 15 | 46.4 | 90 | 0 | 29.2 | 46.4 |
| BRSOM | 2 | 28DAA1 | 15 | 70.8 | 180 | 0 | 50.0 | 70.8 |
| BRSOM | 2 | 28DAA1 | 15 | 70.8 | 360 | 0 | 38.3 | 70.8 |

Table 2. Reduction in Percent (%) Visual Injury to BRSSS from Postemergence Applications of Halauxifen-methyl + Clopyralid-triisopropanolammonium (TIPA) in Field Trials.

| | | Halauxifen-methyl | | Clopyralid-TIPA | | Clopyralid-TIPA + Halauxifen-methyl | |
|---|---|---|---|---|---|---|---|
| Crop Bayer Code | Evaluation Interval | g ae/ha | Mean % Visual Injury | g ae/ha | Mean % Visual Injury | Observed Mean % Visual Injury | Colby Predicted Mean % Visual Injury |
| BRSSS | 3DAA1 | 15 | 14.4 | 90 | 2.2 | 10.0 | 16.3 |
| BRSSS | 7DAA1 | 15 | 16.2 | 90 | 0.4 | 3.4 | 16.5 |
| BRSSS | 15DAA1 | 15 | 16.2 | 90 | 0.0 | 5.2 | 16.2 |
| BRSSS | 28DAA1 | 15 | 39.0 | 90 | 0.0 | 33.0 | 39.0 |

Table 3. Reduction in Percent (%) Visual Deformation to BRSOM from Postemergence Applications of Halauxifen-methyl + Clopyralid-triisopropanolammonium (TIPA) in Field Trials.

| | | Halauxifen-methyl | | Clopyralid-TIPA | | Clopyralid-TIPA + Halauxifen-methyl | |
|---|---|---|---|---|---|---|---|
| Crop Bayer Code | Evaluation Interval | g ae/ha | Mean % Visual Deformation | g ae/ha | Mean % Visual Deformation | Observed Mean % Visual Deformation | Colby Predicted Mean % Visual Deformation |
| BRSOM | 7DAA1 | 15 | 55.0 | 180 | 0.0 | 8.0 | 55.0 |
| BRSOM | 7DAA1 | 15 | 55.0 | 22.5 | 0.0 | 20.8 | 55.0 |
| BRSOM | 7DAA1 | 15 | 55.0 | 360 | 0.0 | 3.5 | 55.0 |
| BRSOM | 7DAA1 | 15 | 55.0 | 45 | 0.0 | 19.2 | 55.0 |
| BRSOM | 7DAA1 | 15 | 55.0 | 90 | 0.0 | 10.0 | 55.0 |
| BRSOM | 7DAA1 | 15 | 7.3 | 180 | 0.7 | 2.6 | 7.9 |
| BRSOM | 7DAA1 | 15 | 7.3 | 22.5 | 0.7 | 4.5 | 7.9 |
| BRSOM | 7DAA1 | 15 | 7.3 | 360 | 0.7 | 1.8 | 7.9 |
| BRSOM | 7DAA1 | 15 | 7.3 | 45 | 0.7 | 4.3 | 7.9 |
| BRSOM | 7DAA1 | 15 | 7.3 | 90 | 0.7 | 3.2 | 7.9 |
| BRSOM | 15DAA1 | 15 | 42.5 | 180 | 0.0 | 15.0 | 42.5 |
| BRSOM | 15DAA1 | 15 | 42.5 | 22.5 | 0.0 | 21.7 | 42.5 |
| BRSOM | 15DAA1 | 15 | 42.5 | 360 | 0.0 | 10.0 | 42.5 |
| BRSOM | 15DAA1 | 15 | 42.5 | 45 | 0.0 | 20.8 | 42.5 |
| BRSOM | 15DAA1 | 15 | 42.5 | 90 | 0.0 | 19.2 | 42.5 |
| BRSOM | 15DAA1 | 15 | 40.0 | 180 | 0.0 | 22.3 | 40.0 |
| BRSOM | 15DAA1 | 15 | 40.0 | 360 | 0.0 | 16.2 | 40.0 |
| BRSOM | 15DAA1 | 15 | 40.0 | 45 | 0.0 | 27.0 | 40.0 |
| BRSOM | 15DAA1 | 15 | 40.0 | 90 | 0.0 | 25.6 | 40.0 |
| BRSOM | 28DAA1 | 15 | 70.0 | 180 | 0.0 | 36.7 | 70.0 |
| BRSOM | 28DAA1 | 15 | 70.0 | 360 | 0.0 | 30.0 | 70.0 |
| BRSOM | 28DAA1 | 15 | 70.0 | 90 | 0.0 | 41.7 | 70.0 |

**Example 2. Evaluation of Postemergence Herbicidal Safening of Halauxifen-Methyl in *Brassica* Species**

Two field trials were established in Canterbury, New Zealand to evaluate crop safety of herbicide treatments to leafy forage brassica crops (Aparima Gold swede *(Brassica* sp., BRSSS)). Trials were designed as randomized complete blocks with four replicates. All trials were established as weed-free tolerance trials with plot size of 3 meters (m) by 8 m (width x length). The crops were grown using normal cultural practices for fertilization, seeding, and maintenance to ensure good growth of the crop.

All herbicide treatments were applied post-emergence with applications made to the crops at the 3 to 5-leaf stage. Herbicides were applied with backpack sprayers using carbon dioxide ($CO_2$) as a propellant. The sprayers utilized flat fan spray nozzles calibrated to deliver a uniform spray pattern that provided thorough coverage of the foliage using a 187 L/ha spray volume. All treatments were applied with Uptake adjuvant (paraffinic oil + non-ionic surfactant blend) at 1% v/v. Phytotoxicity to the crops was assessed visually at several intervals after application as percent overall injury, compared to an untreated control plot. The overall injury assessments were based on visual ratings of growth inhibition, leaf deformity, epinasty, and chlorosis. In general, three to four replicates were assessed for each treatment. All treatment results, both for the single product and mixtures, are an average of five replicates.

*Herbicide Treatments*

Halauxifen-methyl was applied as a technical formulation (95.94 g ae/L SC), and clopyralid-TIPA was applied as Versatill™ (300 g ae/L SL).

The compositions tested, application rates employed, plant species tested, and results are given in Table 4 through Table 6.

Table 4. Reduction in Percent (%) Visual Injury to BRSSS from Postemergence Applications of Halauxifen-methyl + Clopyralid-triisopropanolammonium (TIPA) in Field Trials.

| | | Halauxifen-methyl | | Clopyralid-TIPA | | Clopyralid-TIPA + Halauxifen-methyl | |
|---|---|---|---|---|---|---|---|
| Crop Bayer Code | Evaluation Interval | g ae/ha | Mean % Visual Injury | g ae/ha | Mean % Visual Injury | Observed Mean % Visual Injury | Colby Predicted Mean % Visual Injury |
| BRSSS | 22DAA1 | 7.5 | 32.5 | 180 | 0.5 | 20.0 | 32.8 |
| BRSSS | 22DAA1 | 7.5 | 32.5 | 90 | 0.5 | 27.5 | 32.9 |
| BRSSS | 28DAA1 | 3.75 | 10.0 | 180 | 3.0 | 3.5 | 12.7 |
| BRSSS | 28DAA1 | 3.75 | 10.0 | 45 | 2.8 | 4.5 | 12.5 |
| BRSSS | 28DAA1 | 3.75 | 10.0 | 90 | 4.5 | 5.5 | 14.1 |
| BRSSS | 28DAA1 | 7.5 | 27.5 | 180 | 3.0 | 15.0 | 29.7 |

Table 5. Reduction in Percent (%) Visual Growth Inhibition to BRSSS from Postemergence Applications of Halauxifen-methyl + Clopyralid-triisopropanolammonium (TIPA) in Field Trials.

| | | Halauxifen-methyl | | Clopyralid-TIPA | | Clopyralid-TIPA + Halauxifen-methyl | |
|---|---|---|---|---|---|---|---|
| Crop Bayer Code | Evaluation Interval | g ae/ha | Mean % Visual Growth Inhibition | g ae/ha | Mean % Visual Growth Inhibition | Observed Mean % Visual Growth Inhibition | Colby Predicted Mean % Visual Growth Inhibition |
| BRSSS | 22DAA1 | 3.75 | 16.3 | 90 | 8.0 | 9.3 | 22.8 |
| BRSSS | 22DAA1 | 7.5 | 25.0 | 180 | 7.0 | 18.8 | 30.3 |
| BRSSS | 22DAA1 | 7.5 | 25.0 | 45 | 2.0 | 20.5 | 26.5 |
| BRSSS | 22DAA1 | 7.5 | 25.0 | 90 | 8.0 | 21.8 | 31.0 |
| BRSSS | 28DAA1 | 3.75 | 15.0 | 45 | 2.5 | 7.5 | 17.0 |
| BRSSS | 28DAA1 | 3.75 | 15.0 | 90 | 5.0 | 9.0 | 19.2 |
| BRSSS | 28DAA1 | 7.5 | 22.5 | 45 | 2.5 | 17.5 | 24.6 |
| BRSSS | 56DAA1 | 7.5 | 23.8 | 180 | 4.0 | 6.5 | 26.7 |
| BRSSS | 56DAA1 | 7.5 | 23.8 | 45 | 6.0 | 15.0 | 28.3 |
| BRSSS | 56DAA1 | 7.5 | 23.8 | 90 | 2.0 | 12.5 | 25.2 |

Table 6. Reduction in Percent (%) Visual Leafroll to BRSOM from Postemergence Applications of Halauxifen-methyl + Clopyralid-triisopropanolammonium (TIPA) in Field Trials.

| | | Halauxifen-methyl | | Clopyralid-TIPA | | Clopyralid-TIPA + Halauxifen-methyl | |
|---|---|---|---|---|---|---|---|
| Crop Bayer Code | Evaluation Interval | g ae/ha | Mean % Visual Leafroll | g ae/ha | Mean % Visual Leafroll | Observed Mean % Visual Leafroll | Colby Predicted Mean % Visual Leafroll |
| BRSOM | 1DAA1 | 15 | 13.3 | 180 | 0 | 0.3 | 13.3 |
| BRSOM | 1DAA1 | 15 | 13.3 | 22.5 | 0 | 2.2 | 13.3 |
| BRSOM | 1DAA1 | 15 | 13.3 | 360 | 0 | 0.5 | 13.3 |
| BRSOM | 1DAA1 | 15 | 13.3 | 45 | 0 | 1.7 | 13.3 |
| BRSOM | 1DAA1 | 15 | 13.3 | 90 | 0 | 0.8 | 13.3 |
| BRSOM | 4DAA1 | 15 | 27.5 | 180 | 0 | 1.7 | 27.5 |
| BRSOM | 4DAA1 | 15 | 27.5 | 22.5 | 0 | 13.3 | 27.5 |
| BRSOM | 4DAA1 | 15 | 27.5 | 360 | 0 | 1.0 | 27.5 |
| BRSOM | 4DAA1 | 15 | 27.5 | 45 | 0 | 7.5 | 27.5 |
| BRSOM | 4DAA1 | 15 | 27.5 | 90 | 0 | 2.3 | 27.5 |
| BRSOM | 7DAA1 | 15 | 19.2 | 180 | 0 | 4.7 | 19.2 |
| BRSOM | 7DAA1 | 15 | 19.2 | 360 | 0 | 3.2 | 19.2 |
| BRSOM | 7DAA1 | 15 | 19.2 | 45 | 0 | 9.8 | 19.2 |
| BRSOM | 7DAA1 | 15 | 19.2 | 90 | 0 | 6.3 | 19.2 |
| BRSOM | 15DAA1 | 15 | 27.5 | 180 | 0 | 17.2 | 27.5 |
| BRSOM | 15DAA1 | 15 | 27.5 | 90 | 0 | 18.8 | 27.5 |
| BRSOM | 28DAA1 | 15 | 59.2 | 360 | 0 | 31.7 | 59.2 |
| BRSOM | 28DAA1 | 15 | 59.2 | 90 | 0 | 38.3 | 59.2 |

**Example 3. Evaluation of Postemergence Herbicidal Safening of Halauxifen-Methyl in *Brassica* Species**

Field trials were established in Canada (in Carman, Manitoba; Edmonton, Alberta; Osler, Saskatchewan; Nisku, Alberta; and Devon, Alberta) to evaluate crop safety of herbicide treatments to Spring Argentine canola (*Brassica napus,* BRSNS). Trials were designed as randomized complete blocks with four replicates. Trials were established as weed efficacy and crop tolerance trials with plot sizes of 2-3 meters (m) by 8-25 m (width x length). The crops were grown using normal cultural practices for fertilization, seeding, and maintenance to ensure good growth of the crop.

All herbicide treatments were applied post-emergence with applications made to the crops at the cotyledon to 6-leaf stage. Herbicides were applied with backpack, bicycle, or tractor-mounted sprayers using carbon dioxide ($CO_2$) as a propellant. The sprayers utilized flat fan air-induction spray nozzles calibrated to deliver a uniform spray pattern that provided thorough coverage of the foliage using a 100 L/ha spray volume. All treatments were applied with Uptake adjuvant (paraffinic oil + non-ionic surfactant blend) at 1% v/v. Phytotoxicity to the crops was assessed visually at several intervals after application as percent overall injury, compared to an untreated control plot. The overall injury assessments were based on visual ratings of growth inhibition, leaf deformity, epinasty, chlorosis and delay in maturity. In general, three to four replicates were assessed for each treatment. All treatment results, both for the single product and mixtures, are an average of four replicates.

*Herbicide Treatments*

Halauxifen-methyl was applied as a technical formulation (200 g ae/kg WG); clopyralid-olamine was applied as Lontrel™ 360 (360 g ae/L SL), isoxadifen-ethyl was applied as a suspension concentrate formulation (100 g/L SC); and quinclorac was applied as Accord™ (750 grams active ingredient per kilogram (g ai/kg)). Halauxifen-methyl + clopyralid premixes were applied as emulsifiable concentrate (EC) formulations at 250 g ae/L EC and 125 g ae/L EC.

The compositions tested, application rates employed, plant species tested, and results are given in Table 7 through Table 28, as well as 30B.

Table 7. Reduction in Percent (%) Visual Injury to BRSNS from Postemergence Applications of Halauxifen-methyl + Clopyralid-olamine in Field Trials.

| | | | Halauxifen-methyl | | Clopyralid-olamine | | Clopyralid-olamine + Halauxifen-methyl | |
|---|---|---|---|---|---|---|---|---|
| Crop Bayer Code | Trial Number | Evaluation Interval | g ae/ha | Mean % Visual Injury | g ae/ha | Mean % Visual Injury | Observed Mean % Visual Injury | Colby Predicted Mean % Visual Injury |
| BRSNS | 1 | 7DAA1 | 1.25 | 1.8 | 150 | 1.0 | 1.0 | 2.7 |
| BRSNS | 1 | 7DAA1 | 2.5 | 1.8 | 150 | 1.0 | 1.3 | 2.7 |
| BRSNS | 1 | 7DAA1 | 5 | 2.0 | 150 | 1.0 | 1.5 | 3.0 |
| BRSNS | 1 | 17DAA1 | 0.62 | 2.5 | 150 | 1.3 | 1.8 | 3.7 |
| BRSNS | 1 | 17DAA1 | 1.25 | 2.5 | 150 | 1.3 | 2.0 | 3.7 |
| BRSNS | 1 | 17DAA1 | 2.5 | 3.3 | 150 | 1.3 | 2.5 | 4.5 |
| BRSNS | 1 | 17DAA1 | 5 | 3.3 | 150 | 1.3 | 2.3 | 4.5 |
| BRSNS | 1 | 32DAA1 | 0.62 | 8.3 | 150 | 7.0 | 4.8 | 14.7 |
| BRSNS | 1 | 32DAA1 | 1.25 | 13.0 | 150 | 7.0 | 10.0 | 19.0 |
| BRSNS | 1 | 49DAA1 | 0.62 | 0.3 | 150 | 2.8 | 0.3 | 3.0 |
| BRSNS | 1 | 49DAA1 | 1.25 | 2.3 | 150 | 2.8 | 1.3 | 5.0 |
| BRSNS | 1 | 49DAA1 | 2.5 | 2.5 | 150 | 2.8 | 1.5 | 5.2 |
| BRSNS | 2 | 8DAA1 | 10 | 4.8 | 150 | 1.8 | 4.0 | 6.4 |
| BRSNS | 2 | 8DAA1 | 5 | 4.0 | 150 | 1.8 | 3.0 | 5.7 |
| BRSNS | 2 | 8DAA1 | 10 | 3.3 | 150 | 2.0 | 3.3 | 5.2 |
| BRSNS | 2 | 8DAA1 | 5 | 3.0 | 150 | 2.0 | 2.0 | 4.9 |
| BRSNS | 2 | 8DAA1 | 10 | 2.8 | 150 | 1.3 | 2.0 | 4.0 |
| BRSNS | 2 | 8DAA1 | 5 | 2.0 | 150 | 1.4 | 2.3 | 3.2 |
| BRSNS | 2 | 8DAA1 | 5 | 2.0 | 150 | 1.5 | 2.0 | 3.5 |
| BRSNS | 2 | 8DAA1 | 10 | 2.0 | 150 | 1.0 | 1.8 | 3.0 |
| BRSNS | 2 | 17DAA1 | 10 | 35.5 | 150 | 2.5 | 25.3 | 37.3 |
| BRSNS | 2 | 48DAA1 | 5 | 1.8 | 150 | 2.0 | 0.5 | 3.7 |
| BRSNS | 2 | 48DAA1 | 5 | 1.5 | 150 | 0.8 | 0.5 | 2.2 |
| BRSNS | 3 | 33DAA1 | 10 | 5.5 | 150 | 0.5 | 3.5 | 6.0 |
| BRSNS | 3 | 33DAA1 | 5 | 6.5 | 150 | 0.5 | 2.5 | 7.0 |
| BRSNS | 3 | 33DAA1 | 5 | 2.0 | 150 | 1.0 | 1.0 | 3.0 |
| BRSNS | 3 | 69DAA1 | 2.5 | 3.0 | 150 | 0.0 | 1.0 | 3.0 |
| BRSNS | 3 | 69DAA1 | 5 | 4.0 | 150 | 0.0 | 0.0 | 4.0 |
| BRSNS | 4 | 8DAA1 | 5 | 8.0 | 150 | 1.5 | 4.0 | 9.4 |
| BRSNS | 4 | 15DAA1 | 0.62 | 3.5 | 150 | 1.5 | 0.0 | 5.0 |
| BRSNS | 4 | 15DAA1 | 2.5 | 14.3 | 150 | 1.5 | 8.5 | 15.6 |

(continued)

| | | | Halauxifen-methyl | | Clopyralid-olamine | | Clopyralid-olamine + Halauxifen-methyl | |
|---|---|---|---|---|---|---|---|---|
| Crop Bayer Code | Trial Number | Evaluation Interval | g ae/ha | Mean % Visual Injury | g ae/ha | Mean % Visual Injury | Observed Mean % Visual Injury | Colby Predicted Mean % Visual Injury |
| BRSNS | 4 | 15DAA1 | 5 | 26.3 | 150 | 1.5 | 17.5 | 27.3 |
| BRSNS | 4 | 41DAA1 | 5 | 8.0 | 150 | 0.8 | 5.0 | 8.7 |
| BRSNS | 4 | 82DAA1 | 5 | 6.0 | 150 | 0.0 | 2.3 | 6.0 |
| BRSNS | 5 | 7DAA1 | 5 | 7.5 | 150 | 0.5 | 0.5 | 8.0 |
| BRSNS | 5 | 7DAA1 | 10 | 9.0 | 150 | 0.0 | 2.0 | 9.0 |
| BRSNS | 5 | 7DAA1 | 10 | 3.5 | 150 | 0.0 | 0.5 | 3.5 |
| BRSNS | 5 | 7DAA1 | 10 | 2.0 | 150 | 1.3 | 0.0 | 3.3 |
| BRSNS | 5 | 7DAA1 | 10 | 1.5 | 150 | 1.5 | 0.0 | 3.0 |
| BRSNS | 5 | 15DAA1 | 5 | 27.0 | 150 | 0.0 | 9.8 | 27.0 |
| BRSNS | 5 | 15DAA1 | 10 | 9.0 | 150 | 0.0 | 2.5 | 9.0 |
| BRSNS | 5 | 15DAA1 | 10 | 2.5 | 150 | 0.5 | 1.0 | 3.0 |
| BRSNS | 5 | 15DAA1 | 10 | 1.0 | 150 | 0.5 | 0.0 | 1.5 |
| BRSNS | 5 | 36DAA1 | 10 | 6.0 | 150 | 0.5 | 2.5 | 6.5 |
| BRSNS | 5 | 79DAA1 | 10 | 3.0 | 150 | 0.0 | 0.0 | 3.0 |
| BRSNS | 5 | 79DAA1 | 10 | 4.5 | 150 | 0.0 | 0.8 | 4.5 |
| BRSNS | 5 | 79DAA1 | 10 | 5.3 | 150 | 0.0 | 2.3 | 5.3 |
| BRSNS | 6 | 6DAA1 | 10 | 27.5 | 150 | 0.0 | 12.0 | 27.5 |
| BRSNS | 6 | 6DAA1 | 5 | 24.5 | 150 | 0.0 | 3.8 | 24.5 |
| BRSNS | 6 | 23DAA1 | 2.5 | 38.8 | 150 | 0.0 | 15.5 | 38.8 |
| BRSNS | 6 | 23DAA1 | 5 | 52.5 | 150 | 0.0 | 28.8 | 52.5 |
| BRSNS | 6 | 33DAA1 | 2.5 | 22.5 | 150 | 2.0 | 1.0 | 24.3 |
| BRSNS | 6 | 33DAA1 | 5 | 43.0 | 150 | 2.0 | 10.5 | 44.5 |
| BRSNS | 6 | 59DAA1 | 2.5 | 28.5 | 150 | 3.5 | 11.0 | 31.7 |
| BRSNS | 7 | 17DAA1 | 5 | 45.0 | 150 | 0.0 | 11.7 | 45.0 |
| BRSNS | 7 | 17DAA1 | 5 | 45.0 | 200 | 0.0 | 4.3 | 45.0 |
| BRSNS | 7 | 17DAA1 | 5 | 45.0 | 100 | 0.0 | 18.3 | 45.0 |
| BRSNS | 7 | 27DAA1 | 5 | 34.0 | 150 | 0.0 | 11.0 | 34.0 |
| BRSNS | 7 | 27DAA1 | 5 | 34.0 | 200 | 3.0 | 14.3 | 36.2 |
| BRSNS | 8 | 7DAA1 | 5 | 0.8 | 150 | 1.5 | 0.3 | 2.3 |
| BRSNS | 8 | 57DAA1 | 0.62 | 4.8 | 150 | 2.3 | 4.5 | 6.9 |
| BRSNS | 9 | 27DAA1 | 5 | 6.8 | 150 | 1.0 | 1.0 | 7.7 |
| BRSNS | 9 | 60DAA1 | 10 | 22.5 | 150 | 0.0 | 12.5 | 22.5 |
| BRSNS | 9 | 60DAA1 | 10 | 12.5 | 150 | 0.0 | 5.5 | 12.5 |

Table 8. Reduction in Percent (%) Visual Growth Inhibition to BRSNS from Postemergence Applications of Halauxifen-methyl + Clopyralid-olamine in Field Trials.

| | | | Halauxifen-methyl | | Clopyralid-olamine | | Clopyralid-olamine + Halauxifen-methyl | |
|---|---|---|---|---|---|---|---|---|
| Crop Bayer Code | Trial Number | Evaluation Interval | g ae/ha | Mean % Visual Growth Inhibition | g ae/ha | Mean % Visual Growth Inhibition | Observed Mean % Visual Growth Inhibition | Colby Predicted Mean % Visual Growth Inhibition |
| BRSNS | 1 | 16DAA1 | 2.5 | 1.5 | 150 | 5.5 | 3.0 | 6.9 |
| BRSNS | 1 | 30DAA1 | 2.5 | 3.3 | 150 | 6.3 | 4.5 | 9.3 |
| BRSNS | 1 | 58DAA1 | 2.5 | 1.0 | 150 | 2.8 | 0.8 | 3.7 |
| BRSNS | 2 | 32DAA1 | 0.62 | 1.0 | 150 | 2.8 | 0.3 | 3.7 |
| BRSNS | 2 | 32DAA1 | 1.25 | 3.8 | 150 | 2.8 | 1.0 | 6.4 |
| BRSNS | 2 | 32DAA1 | 2.5 | 8.0 | 150 | 2.8 | 2.8 | 10.5 |
| BRSNS | 2 | 49DAA1 | 0.62 | 0.3 | 150 | 2.8 | 0.3 | 3.0 |
| BRSNS | 2 | 49DAA1 | 1.25 | 2.3 | 150 | 2.8 | 1.3 | 5.0 |
| BRSNS | 2 | 49DAA1 | 2.5 | 2.5 | 150 | 2.8 | 1.5 | 5.2 |
| BRSNS | 3 | 8DAA1 | 10 | 3.3 | 150 | 0.8 | 2.3 | 4.0 |
| BRSNS | 3 | 8DAA1 | 5 | 2.5 | 150 | 0.8 | 1.3 | 3.2 |
| BRSNS | 3 | 8DAA1 | 10 | 2.3 | 150 | 0.3 | 1.5 | 2.5 |
| BRSNS | 3 | 8DAA1 | 5 | 1.5 | 150 | 0.3 | 0.5 | 1.8 |
| BRSNS | 3 | 17DAA1 | 10 | 29.5 | 150 | 1.0 | 16.8 | 30.2 |
| BRSNS | 3 | 17DAA1 | 5 | 1.3 | 150 | 1.0 | 1.0 | 2.2 |
| BRSNS | 3 | 17DAA1 | 10 | 2.8 | 150 | 1.3 | 1.3 | 4.0 |
| BRSNS | 3 | 17DAA1 | 5 | 1.5 | 150 | 1.3 | 1.0 | 2.7 |
| BRSNS | 3 | 35DAA1 | 10 | 0.8 | 150 | 0.8 | 0.3 | 1.5 |
| BRSNS | 3 | 48DAA1 | 5 | 1.8 | 150 | 2.0 | 0.5 | 3.7 |
| BRSNS | 3 | 48DAA1 | 5 | 1.5 | 150 | 0.8 | 0.5 | 2.2 |
| BRSNS | 4 | 13DAA1 | 10 | 57.5 | 150 | 0.0 | 45.0 | 57.5 |
| BRSNS | 4 | 13DAA1 | 10 | 31.3 | 150 | 0.0 | 21.3 | 31.3 |
| BRSNS | 5 | 7DAA1 | 0.62 | 1.0 | 150 | 1.3 | 1.3 | 2.2 |
| BRSNS | 5 | 7DAA1 | 1.25 | 1.5 | 150 | 1.3 | 1.0 | 2.7 |
| BRSNS | 5 | 7DAA1 | 2.5 | 1.5 | 150 | 1.3 | 1.5 | 2.7 |
| BRSNS | 5 | 7DAA1 | 5 | 2.0 | 150 | 1.3 | 0.5 | 3.2 |
| BRSNS | 6 | 33DAA1 | 5 | 4.5 | 150 | 0.5 | 0.0 | 5.0 |
| BRSNS | 7 | 8DAA1 | 5 | 8.0 | 150 | 1.5 | 4.0 | 9.4 |
| BRSNS | 7 | 15DAA1 | 0.62 | 2.5 | 150 | 1.0 | 0.0 | 3.5 |
| BRSNS | 7 | 15DAA1 | 5 | 15.5 | 150 | 1.0 | 10.0 | 16.3 |
| BRSNS | 8 | 7DAA1 | 5 | 7.5 | 150 | 0.5 | 0.5 | 8.0 |
| BRSNS | 8 | 7DAA1 | 10 | 9.0 | 150 | 0.0 | 2.0 | 9.0 |

(continued)

| | | | Halauxifen-methyl | | Clopyralid-olamine | | Clopyralid-olamine + Halauxifen-methyl | |
|---|---|---|---|---|---|---|---|---|
| Crop Bayer Code | Trial Number | Evaluation Interval | g ae/ha | Mean % Visual Growth Inhibition | g ae/ha | Mean % Visual Growth Inhibition | Observed Mean % Visual Growth Inhibition | Colby Predicted Mean % Visual Growth Inhibition |
| BRSNS | 8 | 7DAA1 | 10 | 3.5 | 150 | 0.0 | 0.5 | 3.5 |
| BRSNS | 8 | 7DAA1 | 10 | 2.0 | 150 | 1.3 | 0.0 | 3.3 |
| BRSNS | 8 | 7DAA1 | 10 | 1.5 | 150 | 1.5 | 0.0 | 3.0 |
| BRSNS | 8 | 15DAA1 | 5 | 20.0 | 150 | 0.0 | 7.0 | 20.0 |
| BRSNS | 8 | 15DAA1 | 10 | 6.0 | 150 | 0.0 | 2.5 | 6.0 |
| BRSNS | 8 | 15DAA1 | 10 | 2.0 | 150 | 0.5 | 1.0 | 2.5 |
| BRSNS | 9 | 6DAA1 | 5 | 16.3 | 150 | 0.0 | 3.8 | 16.3 |
| BRSNS | 9 | 23DAA1 | 2.5 | 35.0 | 150 | 0.0 | 8.8 | 35.0 |
| BRSNS | 9 | 23DAA1 | 5 | 50.0 | 150 | 0.0 | 26.3 | 50.0 |
| BRSNS | 9 | 33DAA1 | 5 | 25.0 | 150 | 0.0 | 3.8 | 25.0 |
| BRSNS | 9 | 59DAA1 | 5 | 6.3 | 150 | 0.0 | 0.0 | 6.3 |
| BRSNS | 10 | 17DAA1 | 5 | 46.7 | 150 | 0.0 | 13.3 | 46.7 |
| BRSNS | 10 | 17DAA1 | 5 | 46.7 | 200 | 0.0 | 3.3 | 46.7 |
| BRSNS | 10 | 17DAA1 | 5 | 46.7 | 100 | 0.0 | 20.0 | 46.7 |
| BRSNS | 10 | 27DAA1 | 5 | 16.7 | 150 | 0.0 | 1.7 | 16.7 |
| BRSNS | 10 | 27DAA1 | 5 | 16.7 | 200 | 1.7 | 5.0 | 18.2 |
| BRSNS | 11 | 7DAA1 | 5 | 1.3 | 150 | 2.5 | 0.8 | 3.8 |
| BRSNS | 11 | 15DAA1 | 0.62 | 2.0 | 150 | 3.0 | 2.5 | 4.9 |
| BRSNS | 11 | 15DAA1 | 1.25 | 6.5 | 150 | 3.0 | 4.5 | 9.3 |
| BRSNS | 12 | 15DAA1 | 10 | 25.0 | 150 | 0.0 | 13.8 | 25.0 |
| BRSNS | 12 | 27DAA1 | 5 | 5.8 | 150 | 1.0 | 0.5 | 6.7 |

Table 9. Reduction in Percent (%) Visual Epinasty to BRSNS from Postemergence Applications of Halauxifen-methyl + Clopyralid-olamine in Field Trials.

| | | | Halauxifen-methyl | | Clopyralid-olamine | | Clopyralid-olamine + Halauxifen-methyl | |
|---|---|---|---|---|---|---|---|---|
| Crop Bayer Code | Trial Number | Evaluation Interval | g ae/ha | Mean % Visual Epinasty | g ae/ha | Mean % Visual Epinasty | Observed Mean % Visual Epinasty | Colby Predicted Mean % Epinasty |
| BRSNS | 1 | 17DAA1 | 0.62 | 2.5 | 150 | 1.0 | 1.3 | 3.5 |
| BRSNS | 1 | 17DAA1 | 1.25 | 2.5 | 150 | 1.0 | 1.8 | 3.5 |
| BRSNS | 1 | 17DAA1 | 2.5 | 3.0 | 150 | 1.0 | 2.3 | 4.0 |
| BRSNS | 1 | 17DAA1 | 5 | 2.5 | 150 | 1.0 | 2.0 | 3.5 |

(continued)

| | | | Halauxifen-methyl | | Clopyralid-olamine | | Clopyralid-olamine + Halauxifen-methyl | |
|---|---|---|---|---|---|---|---|---|
| Crop Bayer Code | Trial Number | Evaluation Interval | g ae/ha | Mean % Visual Epinasty | g ae/ha | Mean % Visual Epinasty | Observed Mean % Visual Epinasty | Colby Predicted Mean % Epinasty |
| BRSNS | 1 | 32DAA1 | 0.62 | 5.0 | 150 | 3.5 | 3.5 | 8.3 |
| BRSNS | 2 | 35DAA1 | 10 | 4.0 | 150 | 3.5 | 5.5 | 7.4 |
| BRSNS | 2 | 35DAA1 | 10 | 2.8 | 150 | 2.0 | 3.0 | 4.7 |
| BRSNS | 3 | 6DAA1 | 10 | 8.8 | 150 | 0.0 | 1.3 | 8.8 |
| BRSNS | 3 | 6DAA1 | 5 | 9.5 | 150 | 0.0 | 0.0 | 9.5 |
| BRSNS | 3 | 23DAA1 | 2.5 | 38.8 | 150 | 0.0 | 15.0 | 38.8 |
| BRSNS | 3 | 23DAA1 | 5 | 50.0 | 150 | 0.0 | 30.0 | 50.0 |
| BRSNS | 4 | 17DAA1 | 5 | 23.3 | 200 | 0.0 | 5.0 | 23.3 |

Table 10. Reduction in Percent (%) Visual Injury to BRSNS from Postemergence Applications of Halauxifen-methyl + Clopyralid-olamine in Field Trials.

| | | Halauxifen-methyl | | Clopyralid-olamine | | Halauxifen-methyl + Clopyralid-olamine | |
|---|---|---|---|---|---|---|---|
| Crop Bayer Code | Evaluation Interval | g ae/ha | Mean % Visual Injury | g ae/ha | Mean % Visual Injury | Observed Mean % Visual Injury | Colby Predicted Mean % Visual Injury |
| BRSNS | 7DAAA | 5 | 0.8 | 150 | 0.0 | 0.0 | 0.8 |
| BRSNS | 15DAAA | 5 | 50.5 | 150 | 1.5 | 17.0 | 51.2 |
| BRSNS | 27DAAA | 5 | 48.5 | 150 | 1.0 | 16.0 | 49.0 |
| BRSNS | 57DAAA | 5 | 30.3 | 150 | 2.0 | 20.8 | 31.7 |

Table 11. Reduction in Percent (%) Visual Injury to BRSNS from Postemergence Applications of Halauxifen-methyl + Clopyralid-olamine + Isoxadifen-ethyl in Field Trials.

| | | Halauxifen-methyl | | Clopyralid-olamine | | Isoxadifen-ethyl | | Halauxifen-methyl + Clopyralid-olamine + Isoxadifen-ethyl | |
|---|---|---|---|---|---|---|---|---|---|
| Crop Bayer Code | Evaluation Interval | g ae/ha | Mean % Visual Injury | g ae/ha | Mean % Visual Injury | g ae/ha | Mean % Visual Injury* | Observed Mean % Visual Injury | Colby Predicted Mean % Visual Injury |
| BRSNS | 7DAAA | 5 | 0.8 | 150 | 0.0 | 20 | 0 | 0.3 | 0.8 |
| BRSNS | 15DAAA | 5 | 50.5 | 150 | 1.5 | 20 | 0 | 7.5 | 51.2 |
| BRSNS | 27DAAA | 5 | 48.5 | 150 | 1.0 | 20 | 0 | 10.0 | 49.0 |
| BRSNS | 57DAAA | 5 | 30.3 | 150 | 2.0 | 20 | 0 | 12.0 | 31.7 |
| *Assumed to be no injury based upon greenhouse data; however there were no treatments in the field. | | | | | | | | | |

Table 12. Reduction in Percent (%) Visual Injury to BRSNS from Postemergence Applications of Halauxifen-methyl + Clopyralid Premix (250 g ae/L EC) plus Isoxadifen-ethyl in Field Trials.

| | | Halauxifen-methyl + Clopyralid Premix* | | Isoxadifen-ethyl | | Halauxifen-methyl + Clopyralid Premix + Isoxadifen-ethyl | |
|---|---|---|---|---|---|---|---|
| Crop Bayer Code | Evaluation Interval | g ae/ha | Mean % Visual Injury | g ae/ha | Mean % Visual Injury** | Observed Mean % Visual Injury | Colby Predicted Mean % Visual Injury |
| BRSNS | 7DAAA | 125 | 0.0 | 20 | 0 | 0.0 | 0.8 |
| BRSNS | 15DAAA | 125 | 20.5 | 20 | 0 | 13.0 | 51.2 |
| BRSNS | 27DAAA | 125 | 23.0 | 20 | 0 | 16.3 | 49.0 |
| BRSNS | 57DAAA | 125 | 23.0 | 20 | 0 | 20.8 | 31.7 |
| *Halauxifen-methyl (5 g ae/ha) + clopyralid (120 g ae/ha)<br>**Assumed to be no injury based upon greenhouse data; however there were no treatments in the field. | | | | | | | |

Table 13. Reduction in Percent (%) Visual Injury to BRSNS from Postemergence Applications of Halauxifen-methyl + Clopyralid Premix (125 g ae/L EC) plus Isoxadifen-ethyl in Field Trials.

| | | Halauxifen-methyl + Clopyralid Premix* | | Isoxadifen-ethyl | | Halauxifen-methyl + Clopyralid Premix + Isoxadifen-ethyl | |
|---|---|---|---|---|---|---|---|
| Crop Bayer Code | Evaluation Interval | g ae/ha | Mean % Visual Injury | g ae/ha | Mean % Visual Injury** | Observed Mean % Visual Injury | Colby Predicted Mean % Visual Injury |
| BRSNS | 7DAAA | 125 | 0.0 | 20 | 0 | 0 | 0.8 |
| BRSNS | 15DAAA | 125 | 21.3 | 20 | 0 | 16 | 51.2 |
| BRSNS | 27DAAA | 125 | 19.3 | 20 | 0 | 15 | 49.0 |
| BRSNS | 57DAAA | 125 | 20.0 | 20 | 0 | 16 | 31.7 |
| *Halauxifen-methyl (5 g ae/ha) + clopyralid (120 g ae/ha)<br>**Assumed to be no injury based upon greenhouse data; however there were no treatments in the field. | | | | | | | |

Table 14. Reduction in Percent (%) Visual Injury to BRSNS from Postemergence Applications of Halauxifen-methyl + Quinclorac in Field Trials.

| | | Halauxifen-methyl | | Quinclorac | | Halauxifen-methyl + Quinclorac | |
|---|---|---|---|---|---|---|---|
| Crop Bayer Code | Evaluation Interval | g ae/ha | Mean % Visual Injury | g ae/ha | Mean % Visual Injury | Observed Mean % Visual Injury | Colby Predicted Mean % Visual Injury |
| BRSNS | 7DAAA | 5 | 0.8 | 101 | 0.8 | 0.0 | 1.6 |
| BRSNS | 15DAAA | 5 | 50.5 | 101 | 1.0 | 8.0 | 51.0 |
| BRSNS | 27DAAA | 5 | 48.5 | 101 | 3.0 | 8.3 | 50.1 |
| BRSNS | 57DAAA | 5 | 30.3 | 101 | 1.5 | 10.8 | 31.4 |

Table 15. Reduction in Percent (%) Visual Injury to BRSNS from Postemergence Applications of Halauxifen-methyl + Clopyralid-olamine + Quinclorac in Field Trials.

| | | Halauxifen-methyl | | Clopyralid-olamine | | Quinclorac | | Halauxifen-methyl + Clopyralid-olamine + Quinclorac | |
|---|---|---|---|---|---|---|---|---|---|
| Crop Bayer Code | Evaluation Interval | g ae/ha | Mean% Visual Injury | g ae/ha | Mean% Visual Injury | g ae/ha | Mean% Visual Injury | Observed Mean % Visual Injury | Colby Predicted Mean % Visual Injury |
| BRSNS | 7DAAA | 5 | 0.8 | 150 | 0.0 | 101 | 0.8 | 0.8 | 1.6 |
| BRSNS | 15DAAA | 5 | 50.5 | 150 | 1.5 | 101 | 1.0 | 7.8 | 51.7 |
| BRSNS | 27DAAA | 5 | 48.5 | 150 | 1.0 | 101 | 3.0 | 9.0 | 50.5 |
| BRSNS | 57DAAA | 5 | 30.3 | 150 | 2.0 | 101 | 1.5 | 12.0 | 32.7 |

Table 16. Reduction in Percent (%) Visual Injury to BRSNS from Postemergence Applications of Halauxifen-methyl + Isoxadifen-ethyl in Field Trials.

| | | Halauxifen-methyl | | Isoxadifen-ethyl | | Halauxifen-methyl + Isoxadifen-ethyl | |
|---|---|---|---|---|---|---|---|
| Crop Bayer Code | Evaluation Interval | g ae/ha | Mean % Visual Injury | g ae/ha | Mean % Visual Injury* | Observed Mean % Visual Injury | Colby Predicted Mean % Visual Injury |
| BRSNS | 7DAAA | 5 | 0.8 | 5 | 0 | 0.0 | 0.8 |
| BRSNS | 15DAAA | 5 | 50.5 | 5 | 0 | 17.0 | 50.5 |
| BRSNS | 27DAAA | 5 | 48.5 | 5 | 0 | 16.0 | 48.5 |
| BRSNS | 57DAAA | 5 | 30.3 | 5 | 0 | 20.8 | 30.3 |
| *Assumed to be no injury based upon greenhouse data; however there were no treatments in the field. | | | | | | | |

Table 17. Reduction in Percent (%) Visual Injury to BRSNS from Postemergence Applications of Halauxifen-methyl + Clopyralid-olamine + Isoxadifen-ethyl in Field Trials.

| | | Halauxifen-methyl | | Clopyralid-olamine | | Isoxadifen-ethyl | | Halauxifen-methyl + Clopyralid-olamine + Isoxadifen-ethyl | |
|---|---|---|---|---|---|---|---|---|---|
| Crop Bayer Code | Evaluation Interval | g ae/ha | Mean % Visual Injury | g ae/ha | Mean % Visual Injury | g ae/ha | Mean% Visual Injury* | Observed Mean % Visual Injury | Colby Predicted Mean % Visual Injury |
| BRSNS | 7DAAA | 5 | 0.8 | 150 | 0.0 | 5 | 0 | 0.3 | 0.8 |
| BRSNS | 15DAAA | 5 | 50.5 | 150 | 1.5 | 5 | 0 | 26.0 | 51.2 |
| BRSNS | 27DAAA | 5 | 48.5 | 150 | 1.0 | 5 | 0 | 20.0 | 49.0 |
| BRSNS | 57DAAA | 5 | 30.3 | 150 | 2.0 | 5 | 0 | 21.8 | 31.7 |
| *Assumed to be no injury based upon greenhouse data; however there were no treatments in the field. | | | | | | | | | |

Table 18. Reduction in Percent (%) Visual Injury to BRSNS from Postemergence Applications of Halauxifen-methyl + Clopyralid-olamine in Field Trials.

| | | Halauxifen-methyl | | Clopyralid-olamine | | Halauxifen-methyl + Clopyralid-olamine | |
|---|---|---|---|---|---|---|---|
| Crop Bayer Code | Evaluation Interval | g ae/ha | Mean % Visual Injury | g ae/ha | Mean % Visual Injury | Observed Mean % Visual Injury | Colby Predicted Mean % Visual Injury |
| BRSNS | 8DAAA | 5 | 10 | 150 | 0.5 | 3.0 | 10.5 |
| BRSNS | 14DAAA | 5 | 24 | 150 | 0.5 | 14.5 | 24.4 |
| BRSNS | 40DAAA | 5 | 7 | 150 | 0.0 | 6.8 | 7.0 |
| BRSNS | 81DAAA | 5 | 6 | 150 | 0.0 | 5.3 | 6.0 |

Table 19. Reduction in Percent (%) Visual Injury to BRSNS from Postemergence Applications of Halauxifen-methyl + Clopyralid-olamine + Isoxadifen-ethyl in Field Trials.

| | | Halauxifen-methyl | | Clopyralid-olamine | | Isoxadifen-ethyl | | Halauxifen-methyl + Clopyralid-olamine + Isoxadifen-ethyl | |
|---|---|---|---|---|---|---|---|---|---|
| Crop Bayer Code | Evaluation Interval | g ae/ha | Mean % Visual Injury | g ae/ha | Mean % Visual Injury | g ae/ha | Mean % Visual Injury* | Observed Mean % Visual Injury | Colby Predicted Mean % Visual Injury |
| BRSNS | 8DAAA | 5 | 10 | 150 | 0.5 | 20 | 0 | 1.0 | 10.5 |
| BRSNS | 14DAAA | 5 | 24 | 150 | 0.5 | 20 | 0 | 12.0 | 24.4 |
| BRSNS | 40DAAA | 5 | 7 | 150 | 0.0 | 20 | 0 | 3.8 | 7.0 |
| BRSNS | 81DAAA | 5 | 6 | 150 | 0.0 | 20 | 0 | 1.5 | 6.0 |
| *Assumed to be no injury based upon greenhouse data; however there were no treatments in the field. | | | | | | | | | |

Table 20. Reduction in Percent (%) Visual Injury to BRSNS from Postemergence Applications of Halauxifen-methyl + Clopyralid Premix plus Isoxadifen-ethyl in Field Trials.

| | | Halauxifen-methyl + Clopyralid Premix* | | Isoxadifen-ethyl | | Halauxifen-methyl + Clopyralid Premix + Isoxadifen-ethyl | |
|---|---|---|---|---|---|---|---|
| Crop Bayer Code | Evaluation Interval | g ae/ha | Mean % Visual Injury | g ae/ha | Mean % Visual Injury** | Observed Mean % Visual Injury | Colby Predicted Mean % Visual Injury |
| BRSNS | 8DAAA | 125 | 4.0 | 20 | 0 | 3.5 | 4.0 |
| BRSNS | 14DAAA | 125 | 11.5 | 20 | 0 | 10.0 | 11.5 |
| BRSNS | 40DAAA | 125 | 9.8 | 20 | 0 | 5.3 | 9.8 |
| BRSNS | 81DAAA | 125 | 3.5 | 20 | 0 | 2.0 | 3.5 |
| *Halauxifen-methyl (5 g ae/ha) + clopyralid (120 g ae/ha)<br>**Assumed to be no injury based upon greenhouse data; however there were no treatments in the field. | | | | | | | |

Table 21. Reduction in Percent (%) Visual Injury to BRSNS from Postemergence Applications of Halauxifen-methyl + Quinclorac in Field Trials.

| | | Halauxifen-methyl | | Quinclorac | | Halauxifen-methyl + Quinclorac | |
|---|---|---|---|---|---|---|---|
| Crop Bayer Code | Evaluation Interval | g ae/ha | Mean % Visual Injury | g ae/ha | Mean % Visual Injury | Observed Mean % Visual Injury | Colby Predicted Mean % Visual Injury |
| BRSNS | 8DAAA | 5 | 10 | 101 | 3.5 | 2.9 | 13.2 |
| BRSNS | 14DAAA | 5 | 24 | 101 | 1.0 | 2.5 | 24.8 |
| BRSNS | 40DAAA | 5 | 7 | 101 | 0.5 | 1.5 | 7.5 |
| BRSNS | 81DAAA | 5 | 6 | 101 | 0.0 | 1.5 | 6.0 |

Table 22. Reduction in Percent (%) Visual Injury to BRSNS from Postemergence Applications of Halauxifen-methyl + Clopyralid-olamine + Quinclorac in Field Trials.

| | | Halauxifen-methyl | | Clopyralid-olamine | | Quinclorac | | Halauxifen-methyl + Clopyralid-olamine + Quinclorac | |
|---|---|---|---|---|---|---|---|---|---|
| Crop Bayer Code | Evaluation Interval | g ae/ha | Mean% Visual Injury | g ae/ha | Mean% Visual Injury | g ae/ha | Mean% Visual Injury | Observed Mean % Visual Injury | Colby Predicted Mean % Visual Injury |
| BRSNS | 8DAAA | 5 | 10 | 150 | 0.5 | 101 | 3.5 | 2.5 | 13.6 |
| BRSNS | 14DAAA | 5 | 24 | 150 | 0.5 | 101 | 1.0 | 0.5 | 25.1 |
| BRSNS | 40DAAA | 5 | 7 | 150 | 0.0 | 101 | 0.5 | 0.5 | 7.5 |
| BRSNS | 81DAAA | 5 | 6 | 150 | 0.0 | 101 | 0.0 | 0.0 | 6.0 |

Table 23. Reduction in Percent (%) Visual Injury to BRSNS from Postemergence Applications of Halauxifen-methyl + Clopyralid-olamine in Field Trials.

| | | Halauxifen-methyl | | Clopyralid-olamine | | Halauxifen-methyl + Clopyralid-olamine | |
|---|---|---|---|---|---|---|---|
| Crop Bayer Code | Evaluation Interval | g ae/ha | Mean % Visual Injury | g ae/ha | Mean % Visual Injury | Observed Mean % Visual Injury | Colby Predicted Mean % Visual Injury |
| BRSNS | 7DAAA | 5 | 2.5 | 150 | 2.0 | 1.8 | 2.5 |
| BRSNS | 17DAAA | 5 | 3.0 | 150 | 1.0 | 2.5 | 4.5 |
| BRSNS | 32DAAA | 5 | 21.3 | 150 | 2.0 | 28.3 | 22.1 |
| BRSNS | 49DAAA | 5 | 2.5 | 150 | 0.8 | 2.8 | 4.5 |

Table 24. Reduction in Percent (%) Visual Injury to BRSNS from Postemergence Applications of Halauxifen-methyl + Clopyralid-olamine + Isoxadifen-ethyl in Field Trials.

| | | Halauxifen-methyl | | Clopyralid-olamine | | Isoxadifen-ethyl | | Halauxifen-methyl + Clopyralid-olamine + Isoxadifen-ethyl | |
|---|---|---|---|---|---|---|---|---|---|
| Crop Bayer Code | Evaluation Interval | g ae/ha | Mean % Visual Injury | g ae/ha | Mean % Visual Injury | g ae/ha | Mean % Visual Injury* | Observed Mean % Visual Injury | Colby Predicted Mean % Visual Injury |
| BRSNS | 7DAAA | 5 | 2.5 | 150 | 2.0 | 20 | 0 | 2.0 | 4.5 |
| BRSNS | 17DAAA | 5 | 3.0 | 150 | 1.0 | 20 | 0 | 3.0 | 4.0 |
| BRSNS | 32DAAA | 5 | 21.3 | 150 | 2.0 | 20 | 0 | 16.3 | 22.9 |
| BRSNS | 49DAAA | 5 | 2.5 | 150 | 0.8 | 20 | 0 | 1.3 | 3.3 |
| *Assumed to be no injury based upon greenhouse data; however there were no treatments in the field. | | | | | | | | | |

Table 25. Reduction in Percent (%) Visual Injury to BRSNS from Postemergence Applications of Halauxifen-methyl + Clopyralid Premix (250 g ae/L EC) plus Isoxadifen-ethyl in Field Trials.

| | | Halauxifen-methyl + Clopyralid Premix* | | Isoxadifen-ethyl | | Halauxifen-methyl + Clopyralid Premix + Isoxadifen-ethyl | |
|---|---|---|---|---|---|---|---|
| Crop Bayer Code | Evaluation Interval | g ae/ha | Mean % Visual Injury | g ae/ha | Mean % Visual Injury** | Observed Mean % Visual Injury | Colby Predicted Mean % Visual Injury |
| BRSNS | 7DAAA | 125 | 1.8 | 20 | 0 | 1.5 | 1.8 |
| BRSNS | 17DAAA | 125 | 2.0 | 20 | 0 | 3.5 | 2.0 |
| BRSNS | 32DAAA | 125 | 23.5 | 20 | 0 | 18.0 | 23.5 |
| BRSNS | 49DAAA | 125 | 2.3 | 20 | 0 | 0.5 | 2.3 |
| *Halauxifen-methyl (5 g ae/ha) + clopyralid (120 g ae/ha)<br>* *Assumed to be no injury based upon greenhouse data; however there were no treatments in the field. | | | | | | | |

Table 26. Reduction in Percent (%) Visual Injury to BRSNS from Postemergence Applications of Halauxifen-methyl + Clopyralid Premix (125 g ae/L EC) plus Isoxadifen-ethyl in Field Trials.

| | | Halauxifen-methyl + Clopyralid Premix* | | Isoxadifen-ethyl | | Halauxifen-methyl + Clopyralid Premix + Isoxadifen-ethyl | |
|---|---|---|---|---|---|---|---|
| Crop Bayer Code | Evaluation Interval | g ae/ha | Mean % Visual Injury | g ae/ha | Mean % Visual Injury** | Observed Mean % Visual Injury | Colby Predicted Mean % Visual Injury |
| BRSNS | 7DAAA | 125 | 1.8 | 20 | 0 | 2.0 | 1.8 |
| BRSNS | 17DAAA | 125 | 2.5 | 20 | 0 | 2.8 | 2.5 |
| BRSNS | 32DAAA | 125 | 18.0 | 20 | 0 | 15.5 | 18.0 |
| BRSNS | 49DAAA | 125 | 0.5 | 20 | 0 | 0.3 | 0.5 |
| *Halauxifen-methyl (5 g ae/ha) + clopyralid (120 g ae/ha)<br>* *Assumed to be no injury based upon greenhouse data; however there were no treatments in the field. | | | | | | | |

Table 27. Reduction in Percent (%) Visual Injury to BRSNS from Postemergence Applications of Halauxifen-methyl + Quinclorac in Field Trials.

| | | Halauxifen-methyl | | Quinclorac | | Halauxifen-methyl + Quinclorac | |
|---|---|---|---|---|---|---|---|
| Crop Bayer Code | Evaluation Interval | g ae/ha | Mean % Visual Injury | g ae/ha | Mean % Visual Injury | Observed Mean % Visual Injury | Colby Predicted Mean % Visual Injury |
| BRSNS | 7DAAA | 5 | 2.5 | 101 | 2.3 | 1.8 | 4.7 |
| BRSNS | 17DAAA | 5 | 3.0 | 101 | 1.8 | 3.5 | 4.8 |
| BRSNS | 32DAAA | 5 | 21.3 | 101 | 5.3 | 17.5 | 25.5 |
| BRSNS | 49DAAA | 5 | 2.5 | 101 | 0.5 | 2.3 | 3.0 |

Table 28. Reduction in Percent (%) Visual Injury to BRSNS from Postemergence Applications of Halauxifen-methyl + Clopyralid-olamine + Quinclorac in Field Trials.

| | | Halauxifen-methyl | | Clopyralid-olamine | | Quinclorac | | Halauxifen-methyl + Clopyralid-olamine + Quinclorac | |
|---|---|---|---|---|---|---|---|---|---|
| Crop Bayer Code | Evaluation Interval | g ae/ha | Mean% Visual Injury | g ae/ha | Mean% Visual Injury | g ae/ha | Mean% Visual Injury | Observed Mean % Visual Injury | Colby Predicted Mean % Visual Injury |
| BRSNS | 7DAAA | 5 | 2.5 | 150 | 2.0 | 101 | 2.3 | 2.3 | 6.7 |
| BRSNS | 17DAAA | 5 | 3.0 | 150 | 1.0 | 101 | 1.8 | 4.0 | 5.7 |
| BRSNS | 32DAAA | 5 | 21.3 | 150 | 2.0 | 101 | 5.3 | 15.0 | 27.0 |
| BRSNS | 49DAAA | 5 | 2.5 | 150 | 0.8 | 101 | 0.5 | 0.5 | 3.8 |

**Example 4. Evaluation of Postemergence Herbicidal Safening of Halauxifen-Methyl in *Brassica* Species**

Field trials were established in Europe (Germany, Poland, and Sweden) to evaluate crop safety of herbicide treatments to oilseed brassica crops (spring oilseed rape (*Brassica napus,* BRSNS) and winter oilseed rape *(Brassica napus,* BRSNW)). Trials were designed as randomized complete blocks with four replicates. Trials were established as weed efficacy or tolerance trials with plot sizes of 1.4-3 meters (m) by 8-14.3 m (width x length). The crops were grown using normal cultural practices for fertilization, seeding, and maintenance to ensure good growth of the crop.

All herbicide treatments were applied post-emergence with applications made to the crops at the beginning of stem elongation to flower bud formation (B30-B50) stage. Herbicides were applied with mechanical, high clearance or bicycle sprayers using air or carbon dioxide ($CO_2$) as a propellant. The sprayers utilized flat fan spray nozzles calibrated to deliver a uniform spray pattern that provided thorough coverage of the foliage using a 150-200 L/ha spray volume. All treatments were applied with Actirob B (methylated seed oil (MSO)) adjuvant at 0.5 L/ha. Phytotoxicity to the crops was assessed visually at several intervals after application as percent overall injury, compared to an untreated control plot. The overall injury assessments were based on visual ratings of growth inhibition, leaf deformity, epinasty, and chlorosis. All treatment results, both for the single product and mixtures, are an average of four replicates.

*Herbicide Treatments*

Halauxifen-methyl was applied as a suspension concentration (SC) formulation (95.9 g ae/L SC), and clopyralid-olamine was applied as Lontrel™ 100 (100 g ae/L SL).

The compositions tested, application rates employed, plant species tested, and results are given in Table 29 through Table 32.

Table 29. Reduction in Percent (%) Visual Injury to BRSNW from Postemergence Applications of Halauxifen-methyl + Clopyralid-olamine in Field Trials.

| | | Halauxifen-methyl | | Clopyralid-olamine | | Clopyralid-olamine + Halauxifen-methyl | |
|---|---|---|---|---|---|---|---|
| Crop Bayer Code | Evaluation Interval | g ae/ha | Mean % Visual Injury | g ae/ha | Mean % Visual Injury | Observed Mean % Visual Injury | Colby Predicted Mean % Visual Injury |
| BRSNW | 19DAA1 | 5 | 1 | 120 | 1 | 1 | 2.0 |
| BRSNW | 6DAA1 | 5 | 1 | 120 | 1 | 1 | 2.0 |
| BRSNW | 7DAA1 | 5 | 1 | 120 | 1 | 1 | 2.0 |

Table 30A. Reduction in Percent (%) Visual Deformation Injury to BRSNW from Postemergence Applications of Halauxifen-methyl + Clopyralid-olamine in Field Trials.

| | | | Halauxifen-methyl | | Clopyralid-olamine | | Clopyralid-olamine + Halauxifen-methyl | |
|---|---|---|---|---|---|---|---|---|
| Crop Bayer Code | Trial Number | Evaluation Interval | g ae/ha | Mean % Visual Deformation | g ae/ha | Mean % Visual Deformation | Observed Mean % Visual Deformation | Colby Predicted Mean % Visual Deformation |
| BRSNW | 1 | 27DAA1 | 5 | 0 | 120 | 23.8 | 16.3 | 23.8 |
| BRSNW | 2 | 6DAA1 | 5 | 1 | 120 | 1.0 | 1.0 | 2.0 |
| BRSNW | 2 | 7DAA1 | 5 | 1 | 120 | 1.0 | 1.0 | 2.0 |

Table 30B. Reduction in Percent (%) Visual Deformation Injury to BRSNS from Postemergence Applications of Halauxifen-methyl + Clopyralid-olamine in Field Trials.

| | | Halauxifen-methyl | | Clopyralid-olamine | | Clopyralid-olamine + Halauxifen-methyl | |
|---|---|---|---|---|---|---|---|
| Crop Bayer Code | Evaluation Interval | g ae/ha | Mean % Visual Deformation | g ae/ha | Mean % Visual Deformation | Observed Mean % Visual Deformation | Colby Predicted Mean % Visual Deformation |
| BRSNS | 60DAA1 | 10 | 13.8 | 150 | 0.0 | 7.5 | 13.8 |

Table 31. Reduction in Percent (%) Visual Growth Inhibition to BRSNS from Postemergence Applications of Halauxifen-methyl + Clopyralid-olamine in Field Trials.

| | | | Halauxifen-methyl | | Clopyralid-olamine | | Clopyralid-olamine + Halauxifen-methyl | |
|---|---|---|---|---|---|---|---|---|
| Crop Bayer Code | Trial Number | Evaluation Interval | g ae/ha | Mean % Visual Growth Inhibition | g ae/ha | Mean % Visual Growth Inhibition | Observed Mean % Visual Growth Inhibition | Colby Predicted Mean % Visual Growth Inhibition |
| BRSNS | 1 | 14DAA1 | 10 | 3 | 125 | 3.0 | 3.0 | 5.9 |
| BRSNS | 1 | 14DAA1 | 10 | 3 | 250 | 3.0 | 3.0 | 5.9 |
| BRSNS | 1 | 14DAA1 | 12 | 3 | 125 | 3.0 | 3.0 | 5.9 |
| BRSNS | 1 | 14DAA1 | 12 | 3 | 250 | 3.0 | 3.0 | 5.9 |
| BRSNS | 1 | 14DAA1 | 5 | 3 | 125 | 3.0 | 3.0 | 5.9 |
| BRSNS | 1 | 14DAA1 | 5 | 3 | 250 | 3.0 | 3.0 | 5.9 |
| BRSNS | 1 | 14DAA1 | 6 | 3 | 125 | 3.0 | 3.0 | 5.9 |
| BRSNS | 1 | 14DAA1 | 6 | 3 | 250 | 3.0 | 3.0 | 5.9 |
| BRSNS | 2 | 17DAA1 | 5 | 10 | 100 | 0.0 | 2.3 | 10.0 |
| BRSNS | 2 | 17DAA1 | 5 | 10 | 120 | 2.3 | 2.3 | 12.0 |
| BRSNS | 2 | 24DAA1 | 5 | 10 | 100 | 0.0 | 2.0 | 10.0 |
| BRSNS | 2 | 24DAA1 | 5 | 10 | 120 | 2.0 | 2.0 | 11.8 |

Table 32. Reduction in Percent (%) Visual Growth Inhibition to BRSNW from Postemergence Applications of Halauxifen-methyl + Clopyralid-olamine in Field Trials.

| | | Halauxifen-methyl | | Clopyralid-olamine | | Clopyralid-olamine + Halauxifen-methyl | |
|---|---|---|---|---|---|---|---|
| Crop Bayer Code | Evaluation Interval | g ae/ha | Mean % Visual Growth Inhibition | g ae/ha | Mean % Visual Growth Inhibition | Observed Mean % Visual Growth Inhibition | Colby Predicted Mean % Visual Growth Inhibition |
| BRSNW | 85DAA1 | 5 | 5.0 | 120 | 3.8 | 4.0 | 8.6 |

**Example 5. Evaluation of Postemergence Herbicidal Safening of Halauxifen-Methyl in *Brassica* Species - Greenhouse Trials**

Seeds of the desired test plant species were planted in Sun Gro MetroMix® 306 planting mixture, which typically has a pH of 6.0 to 6.8 and an organic matter content of about 30 percent, in plastic pots with a surface area of 103.2 square centimeters ($cm^2$). When required to ensure good germination and healthy plants, a fungicide treatment and/or other chemical or physical treatment was applied. The plants were grown for 7-36 days (d) in a greenhouse with an approximate 14-hour (h) photoperiod which was maintained at about 23 °C during the day and 22 °C during the night. Nutrients and water were added on a regular basis and supplemental lighting was provided with overhead metal halide 1000-Watt lamps as necessary. The plants were employed for testing when they reached the second or third true leaf stage.

An aliquot of formulated halauxifen-methyl (95.94 g ae/L; 100 g ai/L SC) was placed in a 25 mL glass vial and diluted in a volume of 1.25% (v/v) aqueous Agri-dex crop oil concentrated to obtain a stock solution. If the compound did not dissolve readily, the mixture was warmed and/or sonicated. The concentrated stock solutions were diluted with an aqueous mixture of 1.25% v/v of aqueous Agri-dex crop oil concentrate to provide the appropriate application rates. Compound requirements are based upon a 12 milliliter (mL) application volume at a rate of 187 liters per hectare (L/ha). Stock solutions of the formulated materials were prepared following the same procedure. Spray solutions of the compound mixtures were prepared by adding the stock solutions to the appropriate amount of dilution solution to form a 12 mL spray solution in two-way combinations. Formulated compounds were applied to the plant material with an overhead Mandel track sprayer equipped with 8002E nozzles calibrated to deliver 187 L/ha over an application area of 0.503 square meters ($m^2$) at a spray height of 18 inches (43 centimeters (cm)) above average plant canopy. Control plants were sprayed in the same manner with the solvent blank.

The treated plants and control plants were placed in a greenhouse as described above and watered by sub-irrigation to prevent wash-off of the test compounds. After 20-22 d, the condition of the test plants as compared with that of the control plants was determined visually and scored on a scale of 0 to 100 percent where 0 corresponds to no injury and 100 corresponds to complete kill. The condition of the test plants was compared with that of the control plants as determined visually and scored on a scale of 0 to 100 percent, where 0 corresponds to no injury and 100 corresponds to complete kill. Colby's equation was used to determine the herbicidal effects expected from the mixtures.

Halauxifen-methyl (95.94 g ae/L; 100 g ai/L SC) was combined in two-, three-, and four-way mixtures with one or more of the following: clopyralid-olamine (as Lontrel™ 35A Herbicidal Concentrate, 560 g ai/L SL), quinclorac (as Facet 75DF), isoxadifen-ethyl 100 g/L SC), cloquintocet-mexyl (120 g/L EC) or mefenpyr-diethyl (as mefenpyr-diethyl 15WP). The mixtures were applied to kale/Chinese kale (*Brassica alboglabra,* BRSAG), Juncea canola or brown mustard (*Brassica juncea,* BRSJU), rutabaga *(Brassica napus* var. napobrassica, BRSNA), all varieties of canola and oil seed rape *(Brassica napus,* BRSNN), Nexera™ canola *(Brassica napus,* BRSNN-NEX), winter oilseed rape *(Brassica napus,* BRSNW), turnip or Polish canola (*Brassica rapa,* BRSRR), and Roundup Ready® canola (*Brassica napus,* RR-BRSNN), and the phytotoxicity of the compositions was measured. The results are summarized in Tables 33-41.

Table 33. Reduction in Percent (%) Visual Injury to *Brassica* species from Postemergence Applications of Halauxifen-methyl + Clopyralid-olamine in Greenhouse Trials.

| Application Rate (g ai/ha) | | BRSAG | | BRSJU | | BRSNA | | BRSNN | |
|---|---|---|---|---|---|---|---|---|---|
| Halauxifen-methyl | Clopyralid-olamine | Obs | Exp | Obs | Exp | Obs | Exp | Obs | Exp |
| 2.5 | 0 | 6 | - | 4 | - | 5 | - | 12 | - |
| 0 | 50 | 0 | - | 0 | - | 0 | - | 2 | - |
| 0 | 100 | 0 | - | 0 | - | 0 | - | 0 | - |
| 0 | 200 | 0 | - | 0 | - | 0 | - | 0 | - |
| 2.5 | 50 | 5 | 6 | 0 | 4 | 2 | 5 | 14 | 14 |
| 2.5 | 100 | 5 | 6 | 0 | 4 | 0 | 5 | 9 | 12 |
| 2.5 | 200 | 3 | 6 | 0 | 4 | 0 | 5 | 8 | 12 |
| 5 | 0 | 10 | - | 8 | - | 5 | - | 19 | - |
| 0 | 50 | 0 | - | 0 | - | 0 | - | 2 | - |
| 0 | 100 | 0 | - | 0 | - | 0 | - | 0 | - |

(continued)

| Application Rate (g ai/ha) | | BRSAG | | BRSJU | | BRSNA | | BRSNN | |
|---|---|---|---|---|---|---|---|---|---|
| Halauxifen-methyl | Clopyralid-olamine | Obs | Exp | Obs | Exp | Obs | Exp | Obs | Exp |
| 0 | 200 | 0 | - | 0 | - | 0 | - | 0 | - |
| 5 | 50 | 5 | 10 | 0 | 8 | 0 | 5 | 16 | 20 |
| 5 | 100 | 8 | 10 | 0 | 8 | 0 | 5 | 10 | 19 |
| 5 | 200 | 6 | 10 | 0 | 8 | 0 | 5 | 11 | 19 |
| 10 | 0 | 16 | - | 5 | - | 10 | - | 21 | - |
| 0 | 50 | 0 | - | 0 | - | 0 | - | 2 | - |
| 0 | 100 | 0 | - | 0 | - | 0 | - | 0 | - |
| 0 | 200 | 0 | - | 0 | - | 0 | - | 0 | - |
| 10 | 50 | 9 | 16 | 8 | 5 | 3 | 10 | 15 | 22 |
| 10 | 100 | 6 | 16 | 3 | 5 | 0 | 10 | 11 | 21 |
| 10 | 200 | 7 | 16 | 0 | 5 | 3 | 10 | 14 | 21 |
| Application Rate (g ai/ha) | | BRSNN-NEX | | BRSNW | | BRSRR | | RR-BRSNN | |
| Halauxifen-methyl | Clopyralid-olamine | Obs | Exp | Obs | Exp | Obs | Exp | Obs | Exp |
| 2.5 | 0 | 15 | - | 7 | - | 5 | - | 11 | - |
| 0 | 50 | 0 | - | 0 | - | 0 | - | 0 | - |
| 0 | 100 | 0 | - | 0 | - | 0 | - | 0 | - |
| 0 | 200 | 0 | - | 0 | - | 0 | - | 0 | - |
| 2.5 | 50 | 10 | 15 | 2 | 7 | 0 | 5 | 6 | 11 |
| 2.5 | 100 | 3 | 15 | 2 | 7 | 0 | 5 | 9 | 11 |
| 2.5 | 200 | 3 | 15 | 0 | 7 | 0 | 5 | 4 | 11 |
| 5 | 0 | 20 | - | 10 | - | 6 | - | 14 | - |
| 0 | 50 | 0 | - | 0 | - | 0 | - | 0 | - |
| 0 | 100 | 0 | - | 0 | - | 0 | - | 0 | - |
| 0 | 200 | 0 | - | 0 | - | 0 | - | 0 | - |
| 5 | 50 | 14 | 20 | 3 | 10 | 0 | 6 | 13 | 14 |
| 5 | 100 | 5 | 20 | 0 | 10 | 0 | 6 | 15 | 14 |
| 5 | 200 | 6 | 20 | 0 | 10 | 0 | 6 | 8 | 14 |
| 10 | 0 | 23 | - | 14 | - | 10 | - | 21 | - |
| 0 | 50 | 0 | - | 0 | - | 0 | - | 0 | - |
| 0 | 100 | 0 | - | 0 | - | 0 | - | 0 | - |
| 0 | 200 | 0 | - | 0 | - | 0 | - | 0 | - |
| 10 | 50 | 14 | 23 | 8 | 14 | 0 | 10 | 18 | 21 |
| 10 | 100 | 9 | 23 | 9 | 14 | 5 | 10 | 14 | 21 |
| 10 | 200 | 8 | 23 | 4 | 14 | 4 | 10 | 13 | 21 |

Table 34. Reduction in Percent (%) Visual Injury to *Brassica* species from Postemergence Applications of Halauxifen-methyl + Quinclorac in Greenhouse Trials.

| Application Rate (g ai/ha) | | BRSAG | | BRSJU | | BRSNA | | BRSNN | |
|---|---|---|---|---|---|---|---|---|---|
| Halauxifen-methyl | Quinclorac | Obs | Exp | Obs | Exp | Obs | Exp | Obs | Exp |
| 2.5 | 0 | 6 | - | 4 | - | 5 | - | 12 | - |
| 0 | 50 | 0 | - | 0 | - | 0 | - | 0 | - |
| 0 | 100 | 0 | - | 0 | - | 0 | - | 0 | - |
| 0 | 200 | 0 | - | 0 | - | 0 | - | 0 | - |
| 2.5 | 50 | 3 | 6 | 0 | 4 | 0 | 5 | 9 | 12 |
| 2.5 | 100 | 3 | 6 | 0 | 4 | 0 | 5 | 4 | 12 |
| 2.5 | 200 | 4 | 6 | 0 | 4 | 0 | 5 | 3 | 12 |
| 5 | 0 | 10 | - | 8 | - | 5 | - | 19 | - |
| 0 | 50 | 0 | - | 0 | - | 0 | - | 0 | - |
| 0 | 100 | 0 | - | 0 | - | 0 | - | 0 | - |
| 0 | 200 | 0 | - | 0 | - | 0 | - | 0 | - |
| 5 | 50 | 5 | 10 | 5 | 8 | 0 | 5 | 10 | 19 |
| 5 | 100 | 5 | 10 | 3 | 8 | 0 | 5 | 9 | 19 |
| 5 | 200 | 3 | 10 | 3 | 8 | 0 | 5 | 8 | 19 |
| 10 | 0 | 16 | - | 5 | - | 10 | - | 21 | - |
| 0 | 50 | 0 | - | 0 | - | 0 | - | 0 | - |
| 0 | 100 | 0 | - | 0 | - | 0 | - | 0 | - |
| 0 | 200 | 0 | - | 0 | - | 0 | - | 0 | - |
| 10 | 50 | 6 | 16 | 0 | 5 | 0 | 10 | 14 | 21 |
| 10 | 100 | 9 | 16 | 0 | 5 | 4 | 10 | 11 | 21 |
| 10 | 200 | 9 | 16 | 0 | 5 | 5 | 10 | 13 | 21 |
| Application Rate (g ai/ha) | | BRSNN-NEX | | BRSNW | | BRSRR | | RR-BRSNN | |
| Halauxifen-methyl | Quinclorac | Obs | Exp | Obs | Exp | Obs | Exp | Obs | Exp |
| 2.5 | 0 | 15 | - | 7 | - | 5 | - | 11 | - |
| 0 | 50 | 0 | - | 0 | - | 0 | - | 0 | - |
| 0 | 100 | 0 | - | 0 | - | 0 | - | 0 | - |
| 0 | 200 | 0 | - | 0 | - | 0 | - | 0 | - |
| 2.5 | 50 | 2 | 15 | 0 | 7 | 0 | 5 | 4 | 11 |
| 2.5 | 100 | 0 | 15 | 0 | 7 | 0 | 5 | 3 | 11 |
| 2.5 | 200 | 0 | 15 | 0 | 7 | 0 | 5 | 4 | 11 |
| 5 | 0 | 20 | - | 10 | - | 6 | - | 14 | - |
| 0 | 50 | 0 | - | 0 | - | 0 | - | 0 | - |
| 0 | 100 | 0 | - | 0 | - | 0 | - | 0 | - |
| 0 | 200 | 0 | - | 0 | - | 0 | - | 0 | - |

(continued)

| Application Rate (g ai/ha) | | BRSNN-NEX | | BRSNW | | BRSRR | | RR-BRSNN | |
|---|---|---|---|---|---|---|---|---|---|
| Halauxifen-methyl | Quinclorac | Obs | Exp | Obs | Exp | Obs | Exp | Obs | Exp |
| 5 | 50 | 3 | 20 | 3 | 10 | 3 | 6 | 15 | 14 |
| 5 | 100 | 5 | 20 | 3 | 10 | 3 | 6 | 8 | 14 |
| 5 | 200 | 5 | 20 | 0 | 10 | 0 | 6 | 8 | 14 |
| 10 | 0 | 23 | - | 14 | - | 10 | - | 21 | - |
| 0 | 50 | 0 | - | 0 | - | 0 | - | 0 | - |
| 0 | 100 | 0 | - | 0 | - | 0 | - | 0 | - |
| 0 | 200 | 0 | - | 0 | - | 0 | - | 0 | - |
| 10 | 50 | 10 | 23 | 4 | 14 | 3 | 10 | 15 | 21 |
| 10 | 100 | 8 | 23 | 7 | 14 | 0 | 10 | 18 | 21 |
| 10 | 200 | 11 | 23 | 6 | 14 | 5 | 10 | 16 | 21 |

Table 35. Reduction in Percent (%) Visual Injury to *Brassica* species from Postemergence Applications of Halauxifen-methyl+ Isoxadifen-ethyl in Greenhouse Trials.

| Application Rate (g ai/ha) | | BRSAG | | BRSJU | | BRSNA | | BRSNN | |
|---|---|---|---|---|---|---|---|---|---|
| Halauxifen-methyl | Isoxadifen-ethyl | Obs | Exp | Obs | Exp | Obs | Exp | Obs | Exp |
| 2.5 | 0 | 6 | - | 4 | - | 5 | - | 12 | - |
| 0 | 5 | 0 | - | 0 | - | 0 | - | 0 | - |
| 0 | 10 | 0 | - | 0 | - | 0 | - | 0 | - |
| 0 | 20 | 0 | - | 0 | - | 0 | - | 0 | - |
| 0 | 40 | 0 | - | 0 | - | 0 | - | 0 | - |
| 2.5 | 5 | 5 | 6 | 5 | 4 | 5 | 5 | 12 | 12 |
| 2.5 | 10 | 4 | 6 | 7 | 4 | 5 | 5 | 9 | 12 |
| 2.5 | 20 | 1 | 6 | 6 | 4 | 5 | 5 | 9 | 12 |
| 2.5 | 40 | 3 | 6 | 8 | 4 | 3 | 5 | 8 | 12 |
| 5 | 0 | 10 | - | 8 | - | 5 | - | 19 | - |
| 0 | 5 | 0 | - | 0 | - | 0 | - | 0 | - |
| 0 | 10 | 0 | - | 0 | - | 0 | - | 0 | - |
| 0 | 20 | 0 | - | 0 | - | 0 | - | 0 | - |
| 0 | 40 | 0 | - | 0 | - | 0 | - | 0 | - |
| 5 | 5 | 5 | 10 | 5 | 8 | 6 | 5 | 18 | 19 |
| 5 | 10 | 9 | 10 | 6 | 8 | 1 | 5 | 19 | 19 |
| 5 | 20 | 6 | 10 | 6 | 8 | 3 | 5 | 14 | 19 |
| 5 | 40 | 4 | 10 | 9 | 8 | 4 | 5 | 13 | 19 |
| 10 | 0 | 16 | - | 5 | - | 10 | - | 21 | - |
| 0 | 5 | 0 | - | 0 | - | 0 | - | 0 | - |

(continued)

| Application Rate (g ai/ha) | | BRSAG | | BRSJU | | BRSNA | | BRSNN | |
|---|---|---|---|---|---|---|---|---|---|
| Halauxifen-methyl | Isoxadifen-ethyl | Obs | Exp | Obs | Exp | Obs | Exp | Obs | Exp |
| 0 | 10 | 0 | - | 0 | - | 0 | - | 0 | - |
| 0 | 20 | 0 | - | 0 | - | 0 | - | 0 | - |
| 0 | 40 | 0 | - | 0 | - | 0 | - | 0 | - |
| 10 | 5 | 16 | 16 | 8 | 5 | 9 | 10 | 19 | 21 |
| 10 | 10 | 8 | 16 | 8 | 5 | 6 | 10 | 20 | 21 |
| 10 | 20 | 11 | 16 | 8 | 5 | 9 | 10 | 18 | 21 |
| 10 | 40 | 7 | 16 | 6 | 5 | 9 | 10 | 16 | 21 |
| Application Rate (g ai/ha) | | BRSNN-NEX | | BRSNW | | BRSRR | | RR-BRSNN | |
| Halauxifen-methyl | Isoxadifen-ethyl | Obs | Exp | Obs | Exp | Obs | Exp | Obs | Exp |
| 2.5 | 0 | 15 | - | 7 | - | 5 | - | 11 | - |
| 0 | 5 | 0 | - | 0 | - | 0 | - | 0 | - |
| 0 | 10 | 0 | - | 0 | - | 0 | - | 0 | - |
| 0 | 20 | 0 | - | 0 | - | 0 | - | 0 | - |
| 0 | 40 | 0 | - | 0 | - | 0 | - | 0 | - |
| 2.5 | 5 | 18 | 15 | 7 | 7 | 9 | 5 | 9 | 11 |
| 2.5 | 10 | 15 | 15 | 8 | 7 | 4 | 5 | 5 | 11 |
| 2.5 | 20 | 11 | 15 | 7 | 7 | 2 | 5 | 8 | 11 |
| 2.5 | 40 | 8 | 15 | 4 | 7 | 4 | 5 | 6 | 11 |
| 5 | 0 | 20 | - | 10 | - | 6 | - | 14 | - |
| 0 | 5 | 0 | - | 0 | - | 0 | - | 0 | - |
| 0 | 10 | 0 | - | 0 | - | 0 | - | 0 | - |
| 0 | 20 | 0 | - | 0 | - | 0 | - | 0 | - |
| 0 | 40 | 0 | - | 0 | - | 0 | - | 0 | - |
| 5 | 5 | 24 | 20 | 12 | 10 | 9 | 6 | 16 | 14 |
| 5 | 10 | 20 | 20 | 6 | 10 | 7 | 6 | 11 | 14 |
| 5 | 20 | 14 | 20 | 6 | 10 | 5 | 6 | 14 | 14 |
| 5 | 40 | 17 | 20 | 13 | 10 | 8 | 6 | 15 | 14 |
| 10 | 0 | 23 | - | 14 | - | 10 | - | 21 | - |
| 0 | 5 | 0 | - | 0 | - | 0 | - | 0 | - |
| 0 | 10 | 0 | - | 0 | - | 0 | - | 0 | - |
| 0 | 20 | 0 | - | 0 | - | 0 | - | 0 | - |
| 0 | 40 | 0 | - | 0 | - | 0 | - | 0 | - |
| 10 | 5 | 29 | 23 | 22 | 14 | 14 | 10 | 18 | 21 |
| 10 | 10 | 25 | 23 | 16 | 14 | 7 | 10 | 13 | 21 |
| 10 | 20 | 23 | 23 | 11 | 14 | 6 | 10 | 14 | 21 |

(continued)

| Application Rate (g ai/ha) | | BRSNN-NEX | | BRSNW | | BRSRR | | RR-BRSNN | |
|---|---|---|---|---|---|---|---|---|---|
| Halauxifen-methyl | Isoxadifen-ethyl | Obs | Exp | Obs | Exp | Obs | Exp | Obs | Exp |
| 10 | 40 | 23 | 23 | 11 | 14 | 6 | 10 | 6 | 21 |

Table 36. Reduction in Percent (%) Visual Injury to *Brassica* species from Postemergence Applications of Halauxifen-methyl + Cloquintocet-mexyl in Greenhouse Trials.

| Application Rate (g ai/ha) | | BRSAG | | BRSJU | | BRSNA | | BRSNN | |
|---|---|---|---|---|---|---|---|---|---|
| Halauxifen-methyl | Cloquintocet-mexyl | Obs | Exp | Obs | Exp | Obs | Exp | Obs | Exp |
| 2.5 | 0 | 6 | - | 4 | - | 5 | - | 12 | - |
| 0 | 5 | 0 | - | 0 | - | 0 | - | 0 | - |
| 0 | 10 | 0 | - | 0 | - | 0 | - | 0 | - |
| 0 | 20 | 0 | - | 0 | - | 0 | - | 0 | - |
| 0 | 40 | 0 | - | 0 | - | 0 | - | 0 | - |
| 2.5 | 5 | 10 | 6 | 9 | 4 | 8 | 5 | 16 | 12 |
| 2.5 | 10 | 8 | 6 | 4 | 4 | 8 | 5 | 12 | 12 |
| 2.5 | 20 | 6 | 6 | 0 | 4 | 5 | 5 | 12 | 12 |
| 2.5 | 40 | 4 | 6 | 5 | 4 | 4 | 5 | 14 | 12 |
| 5 | 0 | 10 | - | 8 | - | 5 | - | 19 | - |
| 0 | 5 | 0 | - | 0 | - | 0 | - | 0 | - |
| 0 | 10 | 0 | - | 0 | - | 0 | - | 0 | - |
| 0 | 20 | 0 | - | 0 | - | 0 | - | 0 | - |
| 0 | 40 | 0 | - | 0 | - | 0 | - | 0 | - |
| 5 | 5 | 9 | 10 | 0 | 8 | 5 | 5 | 12 | 19 |
| 5 | 10 | 8 | 10 | 6 | 8 | 9 | 5 | 16 | 19 |
| 5 | 20 | 10 | 10 | 6 | 8 | 10 | 5 | 12 | 19 |
| 5 | 40 | 8 | 10 | 10 | 8 | 6 | 5 | 15 | 19 |
| 10 | 0 | 16 | - | 5 | - | 10 | - | 21 | - |
| 0 | 5 | 0 | - | 0 | - | 0 | - | 0 | - |
| 0 | 10 | 0 | - | 0 | - | 0 | - | 0 | - |
| 0 | 20 | 0 | - | 0 | - | 0 | - | 0 | - |
| 0 | 40 | 0 | - | 0 | - | 0 | - | 0 | - |
| 10 | 5 | 9 | 16 | 6 | 5 | 4 | 10 | 10 | 21 |
| 10 | 10 | 11 | 16 | 9 | 5 | 5 | 10 | 12 | 21 |
| 10 | 20 | 8 | 16 | 5 | 5 | 4 | 10 | 11 | 21 |
| 10 | 40 | 8 | 16 | 9 | 5 | 4 | 10 | 18 | 21 |

(continued)

| Application Rate (g ai/ha) | | BRSNN-NEX | | BRSNW | | BRSRR | | RR-BRSNN | |
|---|---|---|---|---|---|---|---|---|---|
| Halauxifen-methyl | Cloquintocet-mexyl | Obs | Exp | Obs | Exp | Obs | Exp | Obs | Exp |
| 2.5 | 0 | 15 | - | 7 | - | 5 | - | 11 | - |
| 0 | 5 | 0 | - | 0 | - | 0 | - | 0 | - |
| 0 | 10 | 0 | - | 0 | - | 0 | - | 0 | - |
| 0 | 20 | 0 | - | 0 | - | 0 | - | 0 | - |
| 0 | 40 | 0 | - | 0 | - | 0 | - | 0 | - |
| 2.5 | 5 | 30 | 15 | 10 | 7 | 7 | 5 | 13 | 11 |
| 2.5 | 10 | 25 | 15 | 5 | 7 | 7 | 5 | 6 | 11 |
| 2.5 | 20 | 16 | 15 | 6 | 7 | 5 | 5 | 11 | 11 |
| 2.5 | 40 | 24 | 15 | 6 | 7 | 5 | 5 | 13 | 11 |
| 5 | 0 | 20 | - | 10 | - | 6 | - | 14 | - |
| 0 | 5 | 0 | - | 0 | - | 0 | - | 0 | - |
| 0 | 10 | 0 | - | 0 | - | 0 | - | 0 | - |
| 0 | 20 | 0 | - | 0 | - | 0 | - | 0 | - |
| 0 | 40 | 0 | - | 0 | - | 0 | - | 0 | - |
| 5 | 5 | 28 | 20 | 8 | 10 | 10 | 6 | 10 | 14 |
| 5 | 10 | 26 | 20 | 9 | 10 | 9 | 6 | 14 | 14 |
| 5 | 20 | 26 | 20 | 6 | 10 | 8 | 6 | 12 | 14 |
| 5 | 40 | 28 | 20 | 8 | 10 | 5 | 6 | 14 | 14 |
| 10 | 0 | 23 | - | 14 | - | 10 | - | 21 | - |
| 0 | 5 | 0 | - | 0 | - | 0 | - | 0 | - |
| 0 | 10 | 0 | - | 0 | - | 0 | - | 0 | - |
| 0 | 20 | 0 | - | 0 | - | 0 | - | 0 | - |
| 0 | 40 | 0 | - | 0 | - | 0 | - | 0 | - |
| 10 | 5 | 30 | 23 | 15 | 14 | 11 | 10 | 13 | 21 |
| 10 | 10 | 31 | 23 | 12 | 14 | 10 | 10 | 15 | 21 |
| 10 | 20 | 29 | 23 | 13 | 14 | 1 | 10 | 20 | 21 |
| 10 | 40 | 35 | 23 | 13 | 14 | 3 | 10 | 24 | 21 |

Table 37. Reduction in Percent (%) Visual Injury to *Brassica* species from Postemergence Applications of Halauxifen-methyl + Mefenpyr-diethyl in Greenhouse Trials.

| Application Rate (g ai/ha) | | BRSAG | | BRSJU | | BRSNA | | BRSNN | |
|---|---|---|---|---|---|---|---|---|---|
| Halauxifen-methyl | Mefenpyr-diethyl | Obs | Exp | Obs | Exp | Obs | Exp | Obs | Exp |
| 2.5 | 0 | 6 | - | 4 | - | 5 | - | 12 | - |
| 0 | 5 | 0 | - | 0 | - | 0 | - | 0 | - |
| 0 | 10 | 0 | - | 0 | - | 0 | - | 0 | - |

(continued)

| Application Rate (g ai/ha) | | BRSAG | | BRSJU | | BRSNA | | BRSNN | |
|---|---|---|---|---|---|---|---|---|---|
| Halauxifen-methyl | Mefenpyr-diethyl | Obs | Exp | Obs | Exp | Obs | Exp | Obs | Exp |
| 0 | 20 | 0 | - | 0 | - | 0 | - | 0 | - |
| 0 | 40 | 0 | - | 0 | - | 0 | - | 0 | - |
| 2.5 | 5 | 10 | 6 | 6 | 4 | 0 | 5 | 14 | 12 |
| 2.5 | 10 | 5 | 6 | 6 | 4 | 1 | 5 | 14 | 12 |
| 2.5 | 20 | 6 | 6 | 8 | 4 | 3 | 5 | 11 | 12 |
| 2.5 | 40 | 4 | 6 | 3 | 4 | 3 | 5 | 11 | 12 |
| 5 | 0 | 10 | - | 8 | - | 5 | - | 19 | - |
| 0 | 5 | 0 | - | 0 | - | 0 | - | 0 | - |
| 0 | 10 | 0 | - | 0 | - | 0 | - | 0 | - |
| 0 | 20 | 0 | - | 0 | - | 0 | - | 0 | - |
| 0 | 40 | 0 | - | 0 | - | 0 | - | 0 | - |
| 5 | 5 | 3 | 10 | 5 | 8 | 1 | 5 | 11 | 19 |
| 5 | 10 | 3 | 10 | 5 | 8 | 0 | 5 | 11 | 19 |
| 5 | 20 | 4 | 10 | 3 | 8 | 0 | 5 | 7 | 19 |
| 5 | 40 | 1 | 10 | 1 | 8 | 0 | 5 | 10 | 19 |
| 10 | 0 | 16 | - | 5 | - | 10 | - | 21 | - |
| 0 | 5 | 0 | - | 0 | - | 0 | - | 0 | - |
| 0 | 10 | 0 | - | 0 | - | 0 | - | 0 | - |
| 0 | 20 | 0 | - | 0 | - | 0 | - | 0 | - |
| 0 | 40 | 0 | - | 0 | - | 0 | - | 0 | - |
| 10 | 5 | 16 | 16 | 3 | 5 | 0 | 10 | 18 | 21 |
| 10 | 10 | 13 | 16 | 3 | 5 | 0 | 10 | 18 | 21 |
| 10 | 20 | 13 | 16 | 4 | 5 | 1 | 10 | 17 | 21 |
| 10 | 40 | 10 | 16 | 1 | 5 | 0 | 10 | 13 | 21 |
| Application Rate (g ai/ha) | | BRSNN-NEX | | BRSNW | | BRSRR | | RR-BRSNN | |
| Halauxifen-methyl | Mefenpyr-diethyl | Obs | Exp | Obs | Exp | Obs | Exp | Obs | Exp |
| 2.5 | 0 | 15 | - | 7 | - | 5 | - | 11 | - |
| 0 | 5 | 0 | - | 0 | - | 0 | - | 0 | - |
| 0 | 10 | 0 | - | 0 | - | 0 | - | 0 | - |
| 0 | 20 | 0 | - | 0 | - | 0 | - | 0 | - |
| 0 | 40 | 0 | - | 0 | - | 0 | - | 0 | - |
| 2.5 | 5 | 21 | 15 | 11 | 7 | 3 | 5 | 9 | 11 |
| 2.5 | 10 | 20 | 15 | 13 | 7 | 0 | 5 | 6 | 11 |
| 2.5 | 20 | 19 | 15 | 6 | 7 | 2 | 5 | 4 | 11 |
| 2.5 | 40 | 18 | 15 | 12 | 7 | 11 | 5 | 8 | 11 |

(continued)

| Application Rate (g ai/ha) | | BRSNN-NEX | | BRSNW | | BRSRR | | RR-BRSNN | |
|---|---|---|---|---|---|---|---|---|---|
| Halauxifen-methyl | Mefenpyr-diethyl | Obs | Exp | Obs | Exp | Obs | Exp | Obs | Exp |
| 5 | 0 | 20 | - | 10 | - | 6 | - | 14 | - |
| 0 | 5 | 0 | - | 0 | - | 0 | - | 0 | - |
| 0 | 10 | 0 | - | 0 | - | 0 | - | 0 | - |
| 0 | 20 | 0 | - | 0 | - | 0 | - | 0 | - |
| 0 | 40 | 0 | - | 0 | - | 0 | - | 0 | - |
| 5 | 5 | 26 | 20 | 10 | 10 | 5 | 6 | 9 | 14 |
| 5 | 10 | 25 | 20 | 8 | 10 | 3 | 6 | 11 | 14 |
| 5 | 20 | 23 | 20 | 13 | 10 | 1 | 6 | 8 | 14 |
| 5 | 40 | 24 | 20 | 10 | 10 | 4 | 6 | 6 | 14 |
| 10 | 0 | 23 | - | 14 | - | 10 | - | 21 | - |
| 0 | 5 | 0 | - | 0 | - | 0 | - | 0 | - |
| 0 | 10 | 0 | - | 0 | - | 0 | - | 0 | - |
| 0 | 20 | 0 | - | 0 | - | 0 | - | 0 | - |
| 0 | 40 | 0 | - | 0 | - | 0 | - | 0 | - |
| 10 | 5 | 28 | 23 | 11 | 14 | 3 | 10 | 16 | 21 |
| 10 | 10 | 29 | 23 | 8 | 14 | 5 | 10 | 16 | 21 |
| 10 | 20 | 26 | 23 | 5 | 14 | 1 | 10 | 7 | 21 |
| 10 | 40 | 28 | 23 | 5 | 14 | 4 | 10 | 5 | 21 |

Table 38. Reduction in Percent (%) Visual Injury to *Brassica* species from Postemergence Applications of Halauxifen-methyl + Clopyralid-olamine + Isoxadifen-ethyl in Greenhouse Trials.

| Application Rate (g ai/ha) | | | BRSAG | | BRSJU | | BRSNA | | BRSNN | |
|---|---|---|---|---|---|---|---|---|---|---|
| Halauxifen-methyl | Clopyralid | Isoxadifen-ethyl | Obs | Exp | Obs | Exp | Obs | Exp | Obs | Exp |
| 2.5 | 0 | 0 | 6 | - | 4 | - | 5 | - | 12 | - |
| 5 | 0 | 0 | 10 | - | 8 | - | 5 | - | 19 | - |
| 10 | 0 | 0 | 16 | - | 5 | - | 10 | - | 21 | - |
| 0 | 50 | 0 | 0 | - | 0 | - | 0 | - | 2 | - |
| 0 | 100 | 0 | 0 | - | 0 | - | 0 | - | 0 | - |
| 0 | 200 | 0 | 0 | - | 0 | - | 0 | - | 0 | - |
| 0 | 0 | 5 | 0 | - | 0 | - | 0 | - | 0 | - |
| 0 | 0 | 10 | 0 | - | 0 | - | 0 | - | 0 | - |
| 0 | 0 | 20 | 0 | - | 0 | - | 0 | - | 0 | - |
| 0 | 0 | 40 | 0 | - | 0 | - | 0 | - | 0 | - |
| 2.5 | 50 | 5 | 0 | 6 | 0 | 4 | 0 | 5 | 0 | 12 |
| 2.5 | 50 | 10 | 0 | 6 | 0 | 4 | 0 | 5 | 0 | 12 |

(continued)

| Application Rate (g ai/ha) | | | BRSAG | | BRSJU | | BRSNA | | BRSNN | |
|---|---|---|---|---|---|---|---|---|---|---|
| Halauxifen-methyl | Clopyralid | Isoxadifen-ethyl | Obs | Exp | Obs | Exp | Obs | Exp | Obs | Exp |
| 2.5 | 50 | 20 | 2 | 6 | 0 | 4 | 0 | 5 | 0 | 12 |
| 2.5 | 50 | 40 | 2 | 6 | 0 | 4 | 0 | 5 | 0 | 12 |
| 2.5 | 100 | 5 | 0 | 6 | 0 | 4 | 0 | 5 | 2 | 12 |
| 2.5 | 100 | 10 | 2 | 6 | 0 | 4 | 0 | 5 | 0 | 12 |
| 2.5 | 100 | 20 | 0 | 6 | 0 | 4 | 0 | 5 | 0 | 12 |
| 2.5 | 100 | 40 | 0 | 6 | 0 | 4 | 0 | 5 | 0 | 12 |
| 2.5 | 200 | 5 | 3 | 6 | 0 | 4 | 0 | 5 | 0 | 12 |
| 2.5 | 200 | 10 | 3 | 6 | 0 | 4 | 0 | 5 | 2 | 12 |
| 2.5 | 200 | 20 | 0 | 6 | 0 | 4 | 0 | 5 | 2 | 12 |
| 2.5 | 200 | 40 | 0 | 6 | 2 | 4 | 3 | 5 | 0 | 12 |
| 5 | 50 | 5 | 5 | 10 | 0 | 8 | 2 | 5 | 5 | 19 |
| 5 | 50 | 10 | 6 | 10 | 0 | 8 | 0 | 5 | 3 | 19 |
| 5 | 50 | 20 | 2 | 10 | 0 | 8 | 2 | 5 | 0 | 19 |
| 5 | 50 | 40 | 3 | 10 | 0 | 8 | 3 | 5 | 4 | 19 |
| 5 | 100 | 5 | 3 | 10 | 0 | 8 | 0 | 5 | 5 | 19 |
| 5 | 100 | 10 | 3 | 10 | 3 | 8 | 0 | 5 | 5 | 19 |
| 5 | 100 | 20 | 0 | 10 | 3 | 8 | 0 | 5 | 4 | 19 |
| 5 | 100 | 40 | 0 | 10 | 0 | 8 | 0 | 5 | 3 | 19 |
| 5 | 200 | 5 | 2 | 10 | 0 | 8 | 0 | 5 | 0 | 19 |
| 5 | 200 | 10 | 0 | 10 | 0 | 8 | 0 | 5 | 0 | 19 |
| 5 | 200 | 20 | 0 | 10 | 0 | 8 | 0 | 5 | 0 | 19 |
| 5 | 200 | 40 | 5 | 10 | 0 | 8 | 0 | 5 | 8 | 19 |
| 10 | 50 | 5 | 5 | 16 | 0 | 5 | 0 | 10 | 10 | 21 |
| 10 | 50 | 10 | 3 | 16 | 0 | 5 | 0 | 10 | 11 | 21 |
| 10 | 50 | 20 | 3 | 16 | 0 | 5 | 3 | 10 | 8 | 21 |
| 10 | 50 | 40 | 0 | 16 | 4 | 5 | 4 | 10 | 6 | 21 |
| 10 | 100 | 5 | 0 | 16 | 0 | 5 | 0 | 10 | 5 | 21 |
| 10 | 100 | 10 | 0 | 16 | 0 | 5 | 0 | 10 | 3 | 21 |
| 10 | 100 | 20 | 0 | 16 | 0 | 5 | 0 | 10 | 3 | 21 |
| 10 | 100 | 40 | 0 | 16 | 0 | 5 | 3 | 10 | 5 | 21 |
| 10 | 200 | 5 | 0 | 16 | 5 | 5 | 0 | 10 | 0 | 21 |
| 10 | 200 | 10 | 0 | 16 | 0 | 5 | 0 | 10 | 6 | 21 |
| 10 | 200 | 20 | 0 | 16 | 0 | 5 | 2 | 10 | 4 | 21 |
| 10 | 200 | 40 | 0 | 16 | 3 | 5 | 3 | 10 | 0 | 21 |

(continued)

| Application Rate (g ai/ha) | | | BRSNN-NEX | | BRSNW | | BRSRR | | RR-BRSNN | |
|---|---|---|---|---|---|---|---|---|---|---|
| Halauxifen-methyl | Clopyralid | Isoxadifen-ethyl | Obs | Exp | Obs | Exp | Obs | Exp | Obs | Exp |
| 2.5 | 0 | 0 | 15 | - | 7 | - | 5 | - | 11 | - |
| 5 | 0 | 0 | 20 | - | 10 | - | 6 | - | 14 | - |
| 10 | 0 | 0 | 23 | - | 14 | - | 10 | - | 21 | - |
| 0 | 50 | 0 | 0 | - | 0 | - | 0 | - | 0 | - |
| 0 | 100 | 0 | 0 | - | 0 | - | 0 | - | 0 | - |
| 0 | 200 | 0 | 0 | - | 0 | - | 0 | - | 0 | - |
| 0 | 0 | 5 | 0 | - | 0 | - | 0 | - | 0 | - |
| 0 | 0 | 10 | 0 | - | 0 | - | 0 | - | 0 | - |
| 0 | 0 | 20 | 0 | - | 0 | - | 0 | - | 0 | - |
| 0 | 0 | 40 | 0 | - | 0 | - | 0 | - | 0 | - |
| 2.5 | 50 | 5 | 3 | 15 | 0 | 7 | 0 | 5 | 3 | 11 |
| 2.5 | 50 | 10 | 0 | 15 | 0 | 7 | 0 | 5 | 0 | 11 |
| 2.5 | 50 | 20 | 0 | 15 | 0 | 7 | 0 | 5 | 0 | 11 |
| 2.5 | 50 | 40 | 0 | 15 | 0 | 7 | 0 | 5 | 0 | 11 |
| 2.5 | 100 | 5 | 2 | 15 | 0 | 7 | 0 | 5 | 3 | 11 |
| 2.5 | 100 | 10 | 0 | 15 | 2 | 7 | 0 | 5 | 0 | 11 |
| 2.5 | 100 | 20 | 2 | 15 | 0 | 7 | 2 | 5 | 2 | 11 |
| 2.5 | 100 | 40 | 3 | 15 | 0 | 7 | 3 | 5 | 0 | 11 |
| 2.5 | 200 | 5 | 4 | 15 | 2 | 7 | 0 | 5 | 0 | 11 |
| 2.5 | 200 | 10 | 4 | 15 | 5 | 7 | 4 | 5 | 3 | 11 |
| 2.5 | 200 | 20 | 2 | 15 | 3 | 7 | 3 | 5 | 0 | 11 |
| 2.5 | 200 | 40 | 2 | 15 | 0 | 7 | 0 | 5 | 0 | 11 |
| 5 | 50 | 5 | 11 | 20 | 3 | 10 | 0 | 6 | 5 | 14 |
| 5 | 50 | 10 | 8 | 20 | 4 | 10 | 0 | 6 | 3 | 14 |
| 5 | 50 | 20 | 8 | 20 | 0 | 10 | 0 | 6 | 4 | 14 |
| 5 | 50 | 40 | 6 | 20 | 2 | 10 | 0 | 6 | 8 | 14 |
| 5 | 100 | 5 | 5 | 20 | 3 | 10 | 0 | 6 | 5 | 14 |
| 5 | 100 | 10 | 8 | 20 | 3 | 10 | 0 | 6 | 4 | 14 |
| 5 | 100 | 20 | 4 | 20 | 3 | 10 | 0 | 6 | 4 | 14 |
| 5 | 100 | 40 | 0 | 20 | 0 | 10 | 0 | 6 | 3 | 14 |
| 5 | 200 | 5 | 3 | 20 | 2 | 10 | 0 | 6 | 0 | 14 |
| 5 | 200 | 10 | 2 | 20 | 2 | 10 | 2 | 6 | 3 | 14 |
| 5 | 200 | 20 | 2 | 20 | 0 | 10 | 0 | 6 | 3 | 14 |
| 5 | 200 | 40 | 0 | 20 | 0 | 10 | 5 | 6 | 4 | 14 |
| 10 | 50 | 5 | 16 | 23 | 5 | 14 | 2 | 10 | 8 | 21 |
| 10 | 50 | 10 | 18 | 23 | 5 | 14 | 0 | 10 | 8 | 21 |

(continued)

| Application Rate (g ai/ha) | | | BRSNN-NEX | | BRSNW | | BRSRR | | RR-BRSNN | |
|---|---|---|---|---|---|---|---|---|---|---|
| Halauxifen-methyl | Clopyralid | Isoxadifen-ethyl | Obs | Exp | Obs | Exp | Obs | Exp | Obs | Exp |
| 10 | 50 | 20 | 13 | 23 | 5 | 14 | 0 | 10 | 8 | 21 |
| 10 | 50 | 40 | 11 | 23 | 7 | 14 | 4 | 10 | 6 | 21 |
| 10 | 100 | 5 | 8 | 23 | 5 | 14 | 0 | 10 | 6 | 21 |
| 10 | 100 | 10 | 10 | 23 | 0 | 14 | 0 | 10 | 5 | 21 |
| 10 | 100 | 20 | 6 | 23 | 0 | 14 | 0 | 10 | 9 | 21 |
| 10 | 100 | 40 | 6 | 23 | 0 | 14 | 4 | 10 | 2 | 21 |
| 10 | 200 | 5 | 11 | 23 | 2 | 14 | 0 | 10 | 8 | 21 |
| 10 | 200 | 10 | 5 | 23 | 0 | 14 | 0 | 10 | 4 | 21 |
| 10 | 200 | 20 | 3 | 23 | 3 | 14 | 3 | 10 | 2 | 21 |
| 10 | 200 | 40 | 5 | 23 | 3 | 14 | 3 | 10 | 3 | 21 |

Table 39. Reduction in Percent (%) Visual Injury to *Brassica* species from Postemergence Applications of Halauxifen-methyl + Quinclorac + Isoxadifen-ethyl in Greenhouse Trials.

| Application Rate (g ai/ha) | | | BRSAG | | BRSJU | | BRSNA | | BRSNN | |
|---|---|---|---|---|---|---|---|---|---|---|
| Halauxifen-methyl | Quinclorac | Isoxadifen-ethyl | Obs | Exp | Obs | Exp | Obs | Exp | Obs | Exp |
| 2.5 | 0 | 0 | 6 | - | 4 | - | 5 | - | 12 | - |
| 5 | 0 | 0 | 10 | - | 8 | - | 5 | - | 19 | - |
| 10 | 0 | 0 | 16 | - | 5 | - | 10 | - | 21 | - |
| 0 | 50 | 0 | 0 | - | 0 | - | 0 | - | 0 | - |
| 0 | 100 | 0 | 0 | - | 0 | - | 0 | - | 0 | - |
| 0 | 200 | 0 | 0 | - | 0 | - | 0 | - | 0 | - |
| 0 | 0 | 5 | 0 | - | 0 | - | 0 | - | 0 | - |
| 0 | 0 | 10 | 0 | - | 0 | - | 0 | - | 0 | - |
| 0 | 0 | 20 | 0 | - | 0 | - | 0 | - | 0 | - |
| 0 | 0 | 40 | 0 | - | 0 | - | 0 | - | 0 | - |
| 2.5 | 50 | 5 | 0 | 6 | 0 | 4 | 0 | 5 | 0 | 12 |
| 2.5 | 50 | 10 | 0 | 6 | 0 | 4 | 0 | 5 | 0 | 12 |
| 2.5 | 50 | 20 | 0 | 6 | 3 | 4 | 0 | 5 | 0 | 12 |
| 2.5 | 50 | 40 | 0 | 6 | 4 | 4 | 0 | 5 | 0 | 12 |
| 2.5 | 100 | 5 | 0 | 6 | 0 | 4 | 0 | 5 | 0 | 12 |
| 2.5 | 100 | 10 | 0 | 6 | 3 | 4 | 0 | 5 | 0 | 12 |
| 2.5 | 100 | 20 | 0 | 6 | 0 | 4 | 0 | 5 | 0 | 12 |
| 2.5 | 100 | 40 | 0 | 6 | 0 | 4 | 0 | 5 | 0 | 12 |
| 2.5 | 200 | 5 | 0 | 6 | 0 | 4 | 0 | 5 | 0 | 12 |
| 2.5 | 200 | 10 | 0 | 6 | 0 | 4 | 0 | 5 | 0 | 12 |

(continued)

| Application Rate (g ai/ha) | | | BRSAG | | BRSJU | | BRSNA | | BRSNN | |
|---|---|---|---|---|---|---|---|---|---|---|
| Halauxifen-methyl | Quinclorac | Isoxadifen-ethyl | Obs | Exp | Obs | Exp | Obs | Exp | Obs | Exp |
| 2.5 | 200 | 20 | 0 | 6 | 0 | 4 | 0 | 5 | 0 | 12 |
| 2.5 | 200 | 40 | 0 | 6 | 0 | 4 | 0 | 5 | 0 | 12 |
| 5 | 50 | 5 | 0 | 10 | 0 | 8 | 0 | 5 | 2 | 19 |
| 5 | 50 | 10 | 0 | 10 | 0 | 8 | 0 | 5 | 0 | 19 |
| 5 | 50 | 20 | 0 | 10 | 0 | 8 | 0 | 5 | 0 | 19 |
| 5 | 50 | 40 | 0 | 10 | 0 | 8 | 0 | 5 | 0 | 19 |
| 5 | 100 | 5 | 0 | 10 | 0 | 8 | 0 | 5 | 0 | 19 |
| 5 | 100 | 10 | 0 | 10 | 0 | 8 | 0 | 5 | 0 | 19 |
| 5 | 100 | 20 | 0 | 10 | 0 | 8 | 0 | 5 | 0 | 19 |
| 5 | 100 | 40 | 0 | 10 | 0 | 8 | 0 | 5 | 0 | 19 |
| 5 | 200 | 5 | 0 | 10 | 0 | 8 | 0 | 5 | 0 | 19 |
| 5 | 200 | 10 | 0 | 10 | 0 | 8 | 0 | 5 | 0 | 19 |
| 5 | 200 | 20 | 0 | 10 | 0 | 8 | 0 | 5 | 0 | 19 |
| 5 | 200 | 40 | 0 | 10 | 0 | 8 | 0 | 5 | 0 | 19 |
| 10 | 50 | 5 | 0 | 16 | 0 | 5 | 0 | 10 | 2 | 21 |
| 10 | 50 | 10 | 0 | 16 | 0 | 5 | 0 | 10 | 3 | 21 |
| 10 | 50 | 20 | 0 | 16 | 0 | 5 | 0 | 10 | 0 | 21 |
| 10 | 50 | 40 | 0 | 16 | 0 | 5 | 0 | 10 | 0 | 21 |
| 10 | 100 | 5 | 0 | 16 | 0 | 5 | 0 | 10 | 2 | 21 |
| 10 | 100 | 10 | 0 | 16 | 0 | 5 | 0 | 10 | 0 | 21 |
| 10 | 100 | 20 | 0 | 16 | 0 | 5 | 0 | 10 | 0 | 21 |
| 10 | 100 | 40 | 0 | 16 | 0 | 5 | 0 | 10 | 0 | 21 |
| 10 | 200 | 5 | 0 | 16 | 0 | 5 | 0 | 10 | 4 | 21 |
| 10 | 200 | 10 | 0 | 16 | 0 | 5 | 0 | 10 | 0 | 21 |
| 10 | 200 | 20 | 0 | 16 | 0 | 5 | 0 | 10 | 0 | 21 |
| 10 | 200 | 40 | 0 | 16 | 0 | 5 | 0 | 10 | 0 | 21 |
| Application Rate (g ai/ha) | | | BRSNN-NEX | | BRSNW | | BRSRR | | RR-BRSNN | |
| Halauxifen-methyl | Quinclorac | Isoxadifen-ethyl | Obs | Exp | Obs | Exp | Obs | Exp | Obs | Exp |
| 2.5 | 0 | 0 | 15 | - | 7 | - | 5 | - | 11 | - |
| 5 | 0 | 0 | 20 | - | 10 | - | 6 | - | 14 | - |
| 10 | 0 | 0 | 23 | - | 14 | - | 10 | - | 21 | - |
| 0 | 50 | 0 | 0 | - | 0 | - | 0 | - | 0 | - |
| 0 | 100 | 0 | 0 | - | 0 | - | 0 | - | 0 | - |
| 0 | 200 | 0 | 0 | - | 0 | - | 0 | - | 0 | - |
| 0 | 0 | 5 | 0 | - | 0 | - | 0 | - | 0 | - |

(continued)

| Application Rate (g ai/ha) | | | BRSNN-NEX | | BRSNW | | BRSRR | | RR-BRSNN | |
|---|---|---|---|---|---|---|---|---|---|---|
| Halauxifen-methyl | Quinclorac | Isoxadifen-ethyl | Obs | Exp | Obs | Exp | Obs | Exp | Obs | Exp |
| 0 | 0 | 10 | 0 | - | 0 | - | 0 | - | 0 | - |
| 0 | 0 | 20 | 0 | - | 0 | - | 0 | - | 0 | - |
| 0 | 0 | 40 | 0 | - | 0 | - | 0 | - | 0 | - |
| 2.5 | 50 | 5 | 0 | 15 | 0 | 7 | 5 | 5 | 0 | 11 |
| 2.5 | 50 | 10 | 0 | 15 | 0 | 7 | 5 | 5 | 0 | 11 |
| 2.5 | 50 | 20 | 1 | 15 | 0 | 7 | 3 | 5 | 0 | 11 |
| 2.5 | 50 | 40 | 2 | 15 | 0 | 7 | 0 | 5 | 0 | 11 |
| 2.5 | 100 | 5 | 0 | 15 | 0 | 7 | 0 | 5 | 0 | 11 |
| 2.5 | 100 | 10 | 0 | 15 | 0 | 7 | 4 | 5 | 0 | 11 |
| 2.5 | 100 | 20 | 0 | 15 | 0 | 7 | 3 | 5 | 0 | 11 |
| 2.5 | 100 | 40 | 0 | 15 | 0 | 7 | 3 | 5 | 0 | 11 |
| 2.5 | 200 | 5 | 0 | 15 | 0 | 7 | 0 | 5 | 0 | 11 |
| 2.5 | 200 | 10 | 0 | 15 | 0 | 7 | 2 | 5 | 0 | 11 |
| 2.5 | 200 | 20 | 0 | 15 | 0 | 7 | 0 | 5 | 0 | 11 |
| 2.5 | 200 | 40 | 0 | 15 | 0 | 7 | 0 | 5 | 0 | 11 |
| 5 | 50 | 5 | 3 | 20 | 3 | 10 | 0 | 6 | 0 | 14 |
| 5 | 50 | 10 | 2 | 20 | 2 | 10 | 0 | 6 | 0 | 14 |
| 5 | 50 | 20 | 0 | 20 | 0 | 10 | 0 | 6 | 0 | 14 |
| 5 | 50 | 40 | 0 | 20 | 0 | 10 | 0 | 6 | 0 | 14 |
| 5 | 100 | 5 | 0 | 20 | 0 | 10 | 0 | 6 | 0 | 14 |
| 5 | 100 | 10 | 0 | 20 | 0 | 10 | 0 | 6 | 0 | 14 |
| 5 | 100 | 20 | 0 | 20 | 0 | 10 | 0 | 6 | 0 | 14 |
| 5 | 100 | 40 | 0 | 20 | 0 | 10 | 0 | 6 | 0 | 14 |
| 5 | 200 | 5 | 0 | 20 | 0 | 10 | 0 | 6 | 0 | 14 |
| 5 | 200 | 10 | 0 | 20 | 0 | 10 | 0 | 6 | 0 | 14 |
| 5 | 200 | 20 | 0 | 20 | 0 | 10 | 0 | 6 | 0 | 14 |
| 5 | 200 | 40 | 0 | 20 | 0 | 10 | 0 | 6 | 0 | 14 |
| 10 | 50 | 5 | 3 | 23 | 0 | 14 | 0 | 10 | 0 | 21 |
| 10 | 50 | 10 | 3 | 23 | 0 | 14 | 0 | 10 | 0 | 21 |
| 10 | 50 | 20 | 0 | 23 | 0 | 14 | 0 | 10 | 0 | 21 |
| 10 | 50 | 40 | 0 | 23 | 0 | 14 | 0 | 10 | 0 | 21 |
| 10 | 100 | 5 | 0 | 23 | 0 | 14 | 0 | 10 | 0 | 21 |
| 10 | 100 | 10 | 0 | 23 | 0 | 14 | 0 | 10 | 0 | 21 |
| 10 | 100 | 20 | 0 | 23 | 0 | 14 | 0 | 10 | 0 | 21 |
| 10 | 100 | 40 | 0 | 23 | 0 | 14 | 0 | 10 | 0 | 21 |
| 10 | 200 | 5 | 6 | 23 | 0 | 14 | 4 | 10 | 5 | 21 |

(continued)

| Application Rate (g ai/ha) | | | BRSNN-NEX | | BRSNW | | BRSRR | | RR-BRSNN | |
|---|---|---|---|---|---|---|---|---|---|---|
| Halauxifen-methyl | Quinclorac | Isoxadifen-ethyl | Obs | Exp | Obs | Exp | Obs | Exp | Obs | Exp |
| 10 | 200 | 10 | 0 | 23 | 0 | 14 | 0 | 10 | 2 | 21 |
| 10 | 200 | 20 | 3 | 23 | 0 | 14 | 2 | 10 | 0 | 21 |
| 10 | 200 | 40 | 0 | 23 | 0 | 14 | 0 | 10 | 3 | 21 |

Table 40. Reduction in Percent (%) Visual Injury to *Brassica* species from Postemergence Applications of Halauxifen-methyl + Clopyralid-olamine + Quniclorac in Greenhouse Trials.

| Application Rate (g ai/ha) | | | BRSAG | | BRSJU | | BRSNA | | BRSNN | |
|---|---|---|---|---|---|---|---|---|---|---|
| Halauxifen-methyl | Clopyralid-olamine | Quinclorac | Obs | Exp | Obs | Exp | Obs | Exp | Obs | Exp |
| 2.5 | 0 | 0 | 6 | - | 4 | - | 5 | - | 12 | - |
| 5 | 0 | 0 | 10 | - | 8 | - | 5 | - | 19 | - |
| 10 | 0 | 0 | 16 | - | 5 | - | 10 | - | 21 | - |
| 0 | 50 | 0 | 0 | - | 0 | - | 0 | - | 2 | - |
| 0 | 100 | 0 | 0 | - | 0 | - | 0 | - | 0 | - |
| 0 | 200 | 0 | 0 | - | 0 | - | 0 | - | 0 | - |
| 0 | 0 | 50 | 0 | - | 0 | - | 0 | - | 0 | - |
| 0 | 0 | 100 | 0 | - | 0 | - | 0 | - | 0 | - |
| 0 | 0 | 200 | 0 | - | 0 | - | 0 | - | 0 | - |
| 2.5 | 50 | 50 | 3 | 6 | 0 | 4 | 0 | 5 | 2 | 12 |
| 2.5 | 50 | 100 | 4 | 6 | 0 | 4 | 0 | 5 | 5 | 12 |
| 2.5 | 50 | 200 | 4 | 6 | 0 | 4 | 0 | 5 | 5 | 12 |
| 2.5 | 100 | 50 | 3 | 6 | 0 | 4 | 0 | 5 | 5 | 12 |
| 2.5 | 100 | 100 | 2 | 6 | 0 | 4 | 0 | 5 | 4 | 12 |
| 2.5 | 100 | 200 | 2 | 6 | 3 | 4 | 3 | 5 | 3 | 12 |
| 2.5 | 200 | 50 | 3 | 6 | 3 | 4 | 3 | 5 | 4 | 12 |
| 2.5 | 200 | 100 | 0 | 6 | 2 | 4 | 0 | 5 | 4 | 12 |
| 2.5 | 200 | 200 | 0 | 6 | 0 | 4 | 0 | 5 | 4 | 12 |
| 5 | 50 | 50 | 5 | 10 | 0 | 8 | 0 | 5 | 5 | 19 |
| 5 | 50 | 100 | 6 | 10 | 0 | 8 | 0 | 5 | 6 | 19 |
| 5 | 50 | 200 | 5 | 10 | 0 | 8 | 4 | 5 | 4 | 19 |
| 5 | 100 | 50 | 4 | 10 | 0 | 8 | 0 | 5 | 3 | 19 |
| 5 | 100 | 100 | 4 | 10 | 0 | 8 | 0 | 5 | 4 | 19 |
| 5 | 100 | 200 | 4 | 10 | 2 | 8 | 0 | 5 | 5 | 19 |
| 5 | 200 | 50 | 4 | 10 | 0 | 8 | 0 | 5 | 3 | 19 |
| 5 | 200 | 100 | 3 | 10 | 6 | 8 | 0 | 5 | 4 | 19 |
| 5 | 200 | 200 | 5 | 10 | 4 | 8 | 0 | 5 | 4 | 19 |

(continued)

| Application Rate (g ai/ha) | | | BRSAG | | BRSJU | | BRSNA | | BRSNN | |
|---|---|---|---|---|---|---|---|---|---|---|
| Halauxifen-methyl | Clopyralid-olamine | Quinclorac | Obs | Exp | Obs | Exp | Obs | Exp | Obs | Exp |
| 10 | 50 | 50 | 5 | 16 | 3 | 5 | 0 | 10 | 10 | 21 |
| 10 | 50 | 100 | 9 | 16 | 6 | 5 | 0 | 10 | 9 | 21 |
| 10 | 50 | 200 | 5 | 16 | 0 | 5 | 0 | 10 | 15 | 21 |
| 10 | 100 | 50 | 6 | 16 | 4 | 5 | 0 | 10 | 5 | 21 |
| 10 | 100 | 100 | 6 | 16 | 0 | 5 | 0 | 10 | 10 | 21 |
| 10 | 100 | 200 | 6 | 16 | 2 | 5 | 5 | 10 | 8 | 21 |
| 10 | 200 | 50 | 6 | 16 | 0 | 5 | 0 | 10 | 4 | 21 |
| 10 | 200 | 100 | 8 | 16 | 4 | 5 | 0 | 10 | 9 | 21 |
| 10 | 200 | 200 | 6 | 16 | 0 | 5 | 4 | 10 | 9 | 21 |
| Application Rate (g ai/ha) | | | BRSNN-NEX | | BRSNW | | BRSRR | | RR-BRSNN | |
| Halauxifen-methyl | Clopyralid-olamine | Quinclorac | Obs | Exp | Obs | Exp | Obs | Exp | Obs | Exp |
| 2.5 | 0 | 0 | 15 | - | 7 | - | 5 | - | 11 | - |
| 5 | 0 | 0 | 20 | - | 10 | - | 6 | - | 14 | - |
| 10 | 0 | 0 | 23 | - | 14 | - | 10 | - | 21 | - |
| 0 | 50 | 0 | 0 | - | 0 | - | 0 | - | 0 | - |
| 0 | 100 | 0 | 0 | - | 0 | - | 0 | - | 0 | - |
| 0 | 200 | 0 | 0 | - | 0 | - | 0 | - | 0 | - |
| 0 | 0 | 50 | 0 | - | 0 | - | 0 | - | 0 | - |
| 0 | 0 | 100 | 0 | - | 0 | - | 0 | - | 0 | - |
| 0 | 0 | 200 | 0 | - | 0 | - | 0 | - | 0 | - |
| 2.5 | 50 | 50 | 0 | 15 | 0 | 7 | 0 | 5 | 3 | 11 |
| 2.5 | 50 | 100 | 2 | 15 | 0 | 7 | 0 | 5 | 4 | 11 |
| 2.5 | 50 | 200 | 3 | 15 | 0 | 7 | 0 | 5 | 4 | 11 |
| 2.5 | 100 | 50 | 2 | 15 | 0 | 7 | 0 | 5 | 5 | 11 |
| 2.5 | 100 | 100 | 3 | 15 | 0 | 7 | 0 | 5 | 4 | 11 |
| 2.5 | 100 | 200 | 0 | 15 | 0 | 7 | 2 | 5 | 4 | 11 |
| 2.5 | 200 | 50 | 0 | 15 | 0 | 7 | 3 | 5 | 3 | 11 |
| 2.5 | 200 | 100 | 0 | 15 | 0 | 7 | 0 | 5 | 4 | 11 |
| 2.5 | 200 | 200 | 0 | 15 | 0 | 7 | 0 | 5 | 5 | 11 |
| 5 | 50 | 50 | 3 | 20 | 0 | 10 | 0 | 6 | 8 | 14 |
| 5 | 50 | 100 | 0 | 20 | 2 | 10 | 3 | 6 | 6 | 14 |
| 5 | 50 | 200 | 3 | 20 | 0 | 10 | 0 | 6 | 5 | 14 |
| 5 | 100 | 50 | 0 | 20 | 2 | 10 | 0 | 6 | 5 | 14 |
| 5 | 100 | 100 | 3 | 20 | 0 | 10 | 0 | 6 | 5 | 14 |
| 5 | 100 | 200 | 0 | 20 | 2 | 10 | 0 | 6 | 5 | 14 |

(continued)

| Application Rate (g ai/ha) | | | BRSNN-NEX | | BRSNW | | BRSRR | | RR-BRSNN | |
|---|---|---|---|---|---|---|---|---|---|---|
| Halauxifen-methyl | Clopyralid-olamine | Quinclorac | Obs | Exp | Obs | Exp | Obs | Exp | Obs | Exp |
| 5 | 200 | 50 | 0 | 20 | 0 | 10 | 0 | 6 | 2 | 14 |
| 5 | 200 | 100 | 4 | 20 | 0 | 10 | 3 | 6 | 5 | 14 |
| 5 | 200 | 200 | 0 | 20 | 3 | 10 | 0 | 6 | 4 | 14 |
| 10 | 50 | 50 | 4 | 23 | 3 | 14 | 0 | 10 | 8 | 21 |
| 10 | 50 | 100 | 5 | 23 | 3 | 14 | 3 | 10 | 14 | 21 |
| 10 | 50 | 200 | 7 | 23 | 3 | 14 | 5 | 10 | 11 | 21 |
| 10 | 100 | 50 | 6 | 23 | 0 | 14 | 0 | 10 | 9 | 21 |
| 10 | 100 | 100 | 5 | 23 | 0 | 14 | 0 | 10 | 8 | 21 |
| 10 | 100 | 200 | 5 | 23 | 3 | 14 | 3 | 10 | 9 | 21 |
| 10 | 200 | 50 | 5 | 23 | 0 | 14 | 3 | 10 | 8 | 21 |
| 10 | 200 | 100 | 7 | 23 | 4 | 14 | 3 | 10 | 9 | 21 |
| 10 | 200 | 200 | 6 | 23 | 5 | 14 | 5 | 10 | 10 | 21 |

Table 41. Reduction in Percent (%) Visual Injury to *Brassica* species from Postemergence Applications of Halauxifen-methyl + Clopyralid-olamine + Quniclorac + Isoxadifen-ethyl in Greenhouse Trials.

| Application Rate (g ai/ha) | | | | BRSAG | | BRSJU | | BRSNA | | BRSNN | |
|---|---|---|---|---|---|---|---|---|---|---|---|
| Halauxifen-methyl | Clopyralid-olamine | Quinclorac | Isoxadifen-ethyl | Obs | Exp | Obs | Exp | Obs | Exp | Obs | Exp |
| 2.5 | 0 | 0 | 0 | 6 | - | 4 | - | 5 | - | 12 | - |
| 5 | 0 | 0 | 0 | 10 | - | 8 | - | 5 | - | 19 | - |
| 10 | 0 | 0 | 0 | 16 | - | 5 | - | 10 | - | 21 | - |
| 0 | 50 | 0 | 0 | 0 | - | 0 | - | 0 | - | 2 | - |
| 0 | 100 | 0 | 0 | 0 | - | 0 | - | 0 | - | 0 | - |
| 0 | 200 | 0 | 0 | 0 | - | 0 | - | 0 | - | 0 | - |
| 0 | 0 | 50 | 0 | 0 | - | 0 | - | 0 | - | 0 | - |
| 0 | 0 | 100 | 0 | 0 | - | 0 | - | 0 | - | 0 | - |
| 0 | 0 | 200 | 0 | 0 | - | 0 | - | 0 | - | 0 | - |
| 0 | 0 | 0 | 5 | 0 | - | 0 | - | 0 | - | 0 | - |
| 0 | 0 | 0 | 10 | 0 | - | 0 | - | 0 | - | 0 | - |
| 0 | 0 | 0 | 20 | 0 | - | 0 | - | 0 | - | 0 | - |
| 0 | 0 | 0 | 40 | 0 | - | 0 | - | 0 | - | 0 | - |
| 2.5 | 50 | 50 | 5 | 0 | 6 | 0 | 4 | 0 | 5 | 0 | 12 |
| 2.5 | 50 | 50 | 10 | 0 | 6 | 0 | 4 | 2 | 5 | 0 | 12 |
| 2.5 | 50 | 50 | 20 | 0 | 6 | 0 | 4 | 2 | 5 | 0 | 12 |
| 2.5 | 50 | 50 | 40 | 0 | 6 | 0 | 4 | 0 | 5 | 0 | 12 |
| 2.5 | 100 | 100 | 5 | 0 | 6 | 0 | 4 | 0 | 5 | 0 | 12 |
| 2.5 | 100 | 100 | 10 | 0 | 6 | 0 | 4 | 0 | 5 | 0 | 12 |
| 2.5 | 100 | 100 | 20 | 0 | 6 | 0 | 4 | 0 | 5 | 0 | 12 |
| 2.5 | 100 | 100 | 40 | 0 | 6 | 0 | 4 | 0 | 5 | 0 | 12 |
| 2.5 | 200 | 200 | 5 | 0 | 6 | 0 | 4 | 0 | 5 | 0 | 12 |
| 2.5 | 200 | 200 | 10 | 0 | 6 | 0 | 4 | 0 | 5 | 0 | 12 |

(continued)

| Application Rate (g ai/ha) | | | | BRSAG | | BRSJU | | BRSNA | | BRSNN | |
|---|---|---|---|---|---|---|---|---|---|---|---|
| Halauxifen-methyl | Clopyralid-olamine | Quinclorac | Isoxadifen-ethyl | Obs | Exp | Obs | Exp | Obs | Exp | Obs | Exp |
| 2.5 | 200 | 200 | 20 | 0 | 6 | 0 | 4 | 0 | 5 | 0 | 12 |
| 2.5 | 200 | 200 | 40 | 0 | 6 | 0 | 4 | 0 | 5 | 0 | 12 |
| 5 | 50 | 50 | 5 | 0 | 10 | 3 | 8 | 0 | 5 | 2 | 19 |
| 5 | 50 | 50 | 10 | 0 | 10 | 0 | 8 | 0 | 5 | 0 | 19 |
| 5 | 50 | 50 | 20 | 0 | 10 | 0 | 8 | 0 | 5 | 0 | 19 |
| 5 | 50 | 50 | 40 | 0 | 10 | 0 | 8 | 0 | 5 | 0 | 19 |
| 5 | 100 | 100 | 5 | 0 | 10 | 0 | 8 | 0 | 5 | 0 | 19 |
| 5 | 100 | 100 | 10 | 0 | 10 | 0 | 8 | 0 | 5 | 0 | 19 |
| 5 | 100 | 100 | 20 | 0 | 10 | 0 | 8 | 0 | 5 | 0 | 19 |
| 5 | 100 | 100 | 40 | 0 | 10 | 0 | 8 | 0 | 5 | 0 | 19 |
| 5 | 200 | 200 | 5 | 0 | 10 | 0 | 8 | 0 | 5 | 0 | 19 |
| 5 | 200 | 200 | 10 | 0 | 10 | 0 | 8 | 0 | 5 | 0 | 19 |
| 5 | 200 | 200 | 20 | 0 | 10 | 0 | 8 | 0 | 5 | 0 | 19 |
| 5 | 200 | 200 | 40 | 0 | 10 | 0 | 8 | 0 | 5 | 0 | 19 |
| 10 | 50 | 50 | 5 | 0 | 16 | 0 | 5 | 2 | 10 | 3 | 21 |
| 10 | 50 | 50 | 10 | 0 | 16 | 0 | 5 | 2 | 10 | 0 | 21 |
| 10 | 50 | 50 | 20 | 0 | 16 | 0 | 5 | 0 | 10 | 0 | 21 |
| 10 | 50 | 50 | 40 | 0 | 16 | 0 | 5 | 0 | 10 | 0 | 21 |
| 10 | 100 | 100 | 5 | 0 | 16 | 0 | 5 | 0 | 10 | 0 | 21 |
| 10 | 100 | 100 | 10 | 0 | 16 | 0 | 5 | 0 | 10 | 0 | 21 |
| 10 | 100 | 100 | 20 | 0 | 16 | 0 | 5 | 0 | 10 | 0 | 21 |
| 10 | 100 | 100 | 40 | 0 | 16 | 0 | 5 | 0 | 10 | 0 | 21 |
| 10 | 200 | 200 | 5 | 0 | 16 | 0 | 5 | 0 | 10 | 0 | 21 |

(continued)

| Application Rate (g ai/ha) | | | | BRSAG | | BRSJU | | BRSNA | | BRSNN | |
|---|---|---|---|---|---|---|---|---|---|---|---|
| Halauxifen-methyl | Clopyralid-olamine | Quinclorac | Isoxadifen-ethyl | Obs | Exp | Obs | Exp | Obs | Exp | Obs | Exp |
| 10 | 200 | 200 | 10 | 0 | 16 | 0 | 5 | 0 | 10 | 0 | 21 |
| 10 | 200 | 200 | 20 | 0 | 16 | 0 | 5 | 0 | 10 | 0 | 21 |
| 10 | 200 | 200 | 40 | 0 | 16 | 0 | 5 | 0 | 10 | 0 | 21 |
| Application Rate (g ai/ha) | | | | BRSNN-NEX | | BRSNW | | BRSRR | | RR-BRSNN | |
| Halauxifen-methyl | Clopyralid-olamine | Quinclorac | Isoxadifen-ethyl | Obs | Exp | Obs | Exp | Obs | Exp | Obs | Exp |
| 2.5 | 0 | 0 | 0 | 15 | - | 7 | - | 5 | - | 11 | - |
| 5 | 0 | 0 | 0 | 20 | - | 10 | - | 6 | - | 14 | - |
| 10 | 0 | 0 | 0 | 23 | - | 14 | - | 10 | - | 21 | - |
| 0 | 50 | 0 | 0 | 0 | - | 0 | - | 0 | - | 0 | - |
| 0 | 100 | 0 | 0 | 0 | - | 0 | - | 0 | - | 0 | - |
| 0 | 200 | 0 | 0 | 0 | - | 0 | - | 0 | - | 0 | - |
| 0 | 0 | 50 | 0 | 0 | - | 0 | - | 0 | - | 0 | - |
| 0 | 0 | 100 | 0 | 0 | - | 0 | - | 0 | - | 0 | - |
| 0 | 0 | 200 | 0 | 0 | - | 0 | - | 0 | - | 0 | - |
| 0 | 0 | 0 | 5 | 0 | - | 0 | - | 0 | - | 0 | - |
| 0 | 0 | 0 | 10 | 0 | - | 0 | - | 0 | - | 0 | - |
| 0 | 0 | 0 | 20 | 0 | - | 0 | - | 0 | - | 0 | - |
| 0 | 0 | 0 | 40 | 0 | - | 0 | - | 0 | - | 0 | - |
| 2.5 | 50 | 50 | 5 | 0 | 15 | 0 | 7 | 0 | 5 | 0 | 11 |
| 2.5 | 50 | 50 | 10 | 0 | 15 | 0 | 7 | 0 | 5 | 0 | 11 |
| 2.5 | 50 | 50 | 20 | 0 | 15 | 0 | 7 | 0 | 5 | 0 | 11 |
| 2.5 | 50 | 50 | 40 | 0 | 15 | 0 | 7 | 0 | 5 | 0 | 11 |
| 2.5 | 100 | 100 | 5 | 0 | 15 | 0 | 7 | 0 | 5 | 0 | 11 |

(continued)

| Application Rate (g ai/ha) | | | | BRSNN-NEX | | BRSNW | | BRSRR | | RR-BRSNN | |
|---|---|---|---|---|---|---|---|---|---|---|---|
| Halauxifen-methyl | Clopyralid-olamine | Quinclorac | Isoxadifen-ethyl | Obs | Exp | Obs | Exp | Obs | Exp | Obs | Exp |
| 2.5 | 100 | 100 | 10 | 0 | 15 | 0 | 7 | 0 | 5 | 0 | 11 |
| 2.5 | 100 | 100 | 20 | 0 | 15 | 0 | 7 | 0 | 5 | 0 | 11 |
| 2.5 | 100 | 100 | 40 | 0 | 15 | 0 | 7 | 0 | 5 | 0 | 11 |
| 2.5 | 200 | 200 | 5 | 0 | 15 | 0 | 7 | 0 | 5 | 0 | 11 |
| 2.5 | 200 | 200 | 10 | 0 | 15 | 0 | 7 | 0 | 5 | 0 | 11 |
| 2.5 | 200 | 200 | 20 | 0 | 15 | 0 | 7 | 0 | 5 | 0 | 11 |
| 2.5 | 200 | 200 | 40 | 0 | 15 | 0 | 7 | 0 | 5 | 0 | 11 |
| 5 | 50 | 50 | 5 | 0 | 20 | 2 | 10 | 2 | 6 | 5 | 14 |
| 5 | 50 | 50 | 10 | 0 | 20 | 0 | 10 | 0 | 6 | 2 | 14 |
| 5 | 50 | 50 | 20 | 0 | 20 | 0 | 10 | 0 | 6 | 0 | 14 |
| 5 | 50 | 50 | 40 | 0 | 20 | 0 | 10 | 0 | 6 | 2 | 14 |
| 5 | 100 | 100 | 5 | 0 | 20 | 0 | 10 | 0 | 6 | 0 | 14 |
| 5 | 100 | 100 | 10 | 0 | 20 | 0 | 10 | 0 | 6 | 0 | 14 |
| 5 | 100 | 100 | 20 | 0 | 20 | 0 | 10 | 0 | 6 | 0 | 14 |
| 5 | 100 | 100 | 40 | 0 | 20 | 0 | 10 | 0 | 6 | 0 | 14 |
| 5 | 200 | 200 | 5 | 0 | 20 | 0 | 10 | 0 | 6 | 0 | 14 |
| 5 | 200 | 200 | 10 | 0 | 20 | 0 | 10 | 0 | 6 | 0 | 14 |
| 5 | 200 | 200 | 20 | 0 | 20 | 0 | 10 | 0 | 6 | 0 | 14 |
| 5 | 200 | 200 | 40 | 0 | 20 | 0 | 10 | 0 | 6 | 0 | 14 |
| 10 | 50 | 50 | 5 | 3 | 23 | 2 | 14 | 3 | 10 | 3 | 21 |
| 10 | 50 | 50 | 10 | 3 | 23 | 0 | 14 | 0 | 10 | 3 | 21 |
| 10 | 50 | 50 | 20 | 2 | 23 | 0 | 14 | 0 | 10 | 3 | 21 |
| 10 | 50 | 50 | 40 | 0 | 23 | 0 | 14 | 0 | 10 | 3 | 21 |

(continued)

| Application Rate (g ai/ha) | | | | BRSNN-NEX | | BRSNW | | BRSRR | | RR-BRSNN | |
|---|---|---|---|---|---|---|---|---|---|---|---|
| Halauxifen-methyl | Clopyralid-olamine | Quinclorac | Isoxadifen-ethyl | Obs | Exp | Obs | Exp | Obs | Exp | Obs | Exp |
| 10 | 100 | 100 | 5 | 2 | 23 | 0 | 14 | 0 | 10 | 4 | 21 |
| 10 | 100 | 100 | 10 | 0 | 23 | 0 | 14 | 0 | 10 | 0 | 21 |
| 10 | 100 | 100 | 20 | 0 | 23 | 0 | 14 | 0 | 10 | 0 | 21 |
| 10 | 100 | 100 | 40 | 0 | 23 | 0 | 14 | 0 | 10 | 0 | 21 |
| 10 | 200 | 200 | 5 | 0 | 23 | 0 | 14 | 0 | 10 | 0 | 21 |
| 10 | 200 | 200 | 10 | 0 | 23 | 0 | 14 | 0 | 10 | 0 | 21 |
| 10 | 200 | 200 | 20 | 0 | 23 | 0 | 14 | 3 | 10 | 2 | 21 |
| 10 | 200 | 200 | 40 | 0 | 23 | 0 | 14 | 3 | 10 | 0 | 21 |

## Claims

1. A safened herbicidal composition for use in *Brassica* species susceptible to injury by halauxifen or an agriculturally acceptable salt or ester thereof comprising:

    a) a herbicidally effective amount of halauxifen or an agriculturally acceptable salt or ester thereof; and
    b) a safener comprising one or more of:

        i. one or more herbicide[s] capable of safening the halauxifen to the *Brassica* species, or an agriculturally acceptable salt or ester thereof which is/are selected from the group consisting of quinclorac, agriculturally acceptable salts, esters, and mixtures thereof;
        ii. a herbicide safener capable of safening the halauxifen to the *Brassica* species, or an agriculturally acceptable salt or ester thereof which is selected from the group consisting of isoxadifen, mefenpyr, agriculturally acceptable salts, esters, and mixtures thereof;
        iii. a mixture of:

            (i) one or more herbicide[s], selected from the group consisting of quinclorac, agriculturally acceptable salts, esters, and combinations thereof; and
            (ii) a herbicide safener selected from the group consisting of cloquintocet, isoxadifen, mefenpyr, agriculturally acceptable salts, esters, and mixtures thereof; or

        iv. a mixture of:

            (i) one or more herbicide[s], selected from the group consisting of clopyralid, quinclorac, agriculturally acceptable salts, esters, and combinations thereof; and
            (ii) a herbicide safener selected from the group consisting of isoxadifen, mefenpyr, agriculturally acceptable salts, esters, and mixtures thereof.

2. A method for safening *Brassica* species susceptible to injury from halauxifen or an agriculturally acceptable salt or ester thereof, comprising applying to the *Brassica* species, contacting the vegetation, or area adjacent thereto with a herbicidal composition comprising:

    a) a herbicidally effective amount of halauxifen, or an agriculturally acceptable salt or ester thereof; and
    b) a safener comprising one or more of:

        i. one or more herbicide[s] capable of safening the halauxifen to the *Brassica* species, or an agriculturally acceptable salt or ester thereof which is/are selected from the group consisting of clopyralid, quinclorac, agriculturally acceptable salts, esters, and combinations thereof;
        ii. a herbicide safener capable of safening the halauxifen to the *Brassica* species, or an agriculturally acceptable salt or ester thereof which is selected from the group consisting of isoxadifen, cloquintocet, mefenpyr, agriculturally acceptable salts, esters, and mixtures thereof; or
        iii. a mixture of:

            (i) the one or more herbicide[s] capable of safening the halauxifen to the *Brassica* species, or an agriculturally acceptable salt or ester thereof which is/are selected from the group consisting of clopyralid, quinclorac, agriculturally acceptable salts, esters, and combinations thereof; and
            (ii) a herbicide safener capable of safening the halauxifen to the *Brassica* species, or an agriculturally acceptable salt or ester thereof.

3. The composition of claim 1 or the method of claim 2, wherein (a) is halauxifen or halauxifen-methyl.

4. The method of any of Claims 2-3, wherein (i) is selected from a group consisting of clopyralid, quinclorac, agriculturally acceptable salts, esters, and mixtures thereof.

5. The composition of any of Claims 1 and 3, wherein (i) is quinclorac or an agriculturally acceptable salt or ester thereof, or clopyralid or an agriculturally acceptable salt or ester thereof and quinclorac or an agriculturally acceptable salt or ester thereof.

**6.** The method of any of Claims 2-3, wherein (i) is clopyralid or an agriculturally acceptable salt or ester thereof, quinclorac or an agriculturally acceptable salt or ester thereof, or clopyralid or an agriculturally acceptable salt or ester thereof and quinclorac or an agriculturally acceptable salt or ester thereof.

**7.** The composition of any of Claims 1, 3, and 5 or the method of any of Claims 2, 3, 4 and 6, wherein the weight ratio of (a) to (i) is from 1:300 to 1:1.2 or from about 1:200 to about 1:2 or from about 1:80 to about 1:5.

**8.** The composition of any of Claims 1, 3, and 5 or the method of the method of any of Claims 2, 3, 4 and 6, wherein the weight ratio of (a) to (ii) is from about 1:50 to about 10:1 or from about 1:36 to about 5:1 or from about 1:16 to about 2:1.

**9.** The composition of any of Claims 1, 3, and 5, wherein the weight ratio of (a) to (i) to (ii) is from about 1-25 of (a) to about 1.2-300 of (i) to about 1-50 of (ii) or from about 1-5 of (a) to about 2-200 of (i) to about 1-36 of (ii) or from about 1-2 of (a) to about 5-80 of (i) to about 1-16 of (ii).

**10.** The method of any of Claims 2, 3, 4 and 6, wherein the weight ratio of (a) to (i) to (ii) is from 1:300:50 to 25:1.2:1 or from about 1:200:36 to about 5:2:1 or from about 1:80:16 to about 2:5:1.

**11.** The method of any of Claims 2, 3, 4, 6-8 and 10, wherein the safened herbicidal composition further comprises an agriculturally acceptable adjuvant or carrier.

**12.** The method of any of Claims 2, 3, 4, 6-8, 10 and 11, wherein the (a) and (b) are applied pre-emergently or post-emergently to the *Brassica* species or the undesirable vegetation.

**13.** The method of any of Claims 2, 3, 4, 6-8, and 10-12, wherein the *Brassica* species is 5-enolpyruvylshikimate-3-phosphate (EPSP) synthase inhibitor-tolerant, glutamine synthetase inhibitor-tolerant, synthetic auxin-tolerant, acetyl CoA carboxylase (ACCase) inhibitor-tolerant, acetolactate synthase (ALS) inhibitor-tolerant, 4-hydroxyphenyl-pyruvate dioxygenase (HPPD) inhibitor-tolerant, protoporphyrinogen oxidase (PPO) inhibitor-tolerant, or photosystem II inhibitor-tolerant, preferably wherein the 5-enolpyruvylshikimate-3-phosphate (EPSP) synthase inhibitor-tolerant *Brassica* species is glyphosate-tolerant, or wherein the glutamine synthetase inhibitor-tolerant *Brassica* species is glufosinate-tolerant, or wherein the synthetic auxin-tolerant Brassica species is dicamba-tolerant, phenoxy auxin-tolerant, or pyridyloxy auxin-tolerant, or wherein the acetyl CoA carboxylase (ACCase) inhibitor-tolerant *Brassica* species is aryloxyphenoxypropionate-tolerant, or wherein the acetolactate synthase (ALS) inhibitor-tolerant *Brassica* species is imidazolinone-tolerant, sulfonylurea-tolerant, pyrimidinylthiobenzoate-tolerant, triazolopyrimidine-tolerant, or sulfonylaminocarbonyltriazolinone-tolerant, or wherein the photosystem II inhibitor-tolerant *Brassica* species is triazine-tolerant or bromoxynil-tolerant.

**14.** The method of any of Claims 2, 3, 4, 6-8, and 10-12, wherein the *Brassica* species comprises multiple or stacked traits conferring tolerance to multiple chemistries and/or multiple modes of action or wherein the *Brassica* species is selected from a group consisting of all varieties of canola and oilseed rape (*Brassica napus,* BRSNN), forage brassica, garden brassica and seed producing brassica, spring rape or Spring Argentine rape (*Brassica napus,* BRSNS), winter oilseed rape (*Brassica napus,* BRSNW), Roundup Ready® canola (*Brassica napus,* RR-BRSNN), Nexera™ canola *(Brassica napus,* BRSNN-NEX), stem kale (*Brassica oleracea* var. acephala subvar. medullosa, BRSOM), Aparima Gold swede (*Brassica* sp., BRSSS), rutabaga (*Brassica napus* var. napobrassica, BRSNA), turnip or Polish canola (*Brassica rapa,* BRSRR), kale/Chinese kale (*Brassica alboglabra,* BRSAG), and Juncea canola or brown mustard (*Brassica juncea,* BRSJU).

## Patentansprüche

**1.** Mit einem Safener versehene herbizide Zusammensetzung zur Verwendung in *Brassica*-Arten, die gegenüber Verletzung durch Halauxifen oder ein landwirtschaftlich unbedenkliches Salz oder einen landwirtschaftlich unbedenklichen Ester davon empfindlich sind, umfassend:

a) eine herbizid wirksame Menge an Halauxifen oder eines landwirtschaftlich unbedenkliches Salzes oder Esters davon und
b) einen Safener, umfassend einen oder mehrere der Folgenden:

I. ein oder mehrere Herbizide, die dazu fähig sind, das Halauxifen für die *Brassica*-Arten unschädlich zu machen, oder ein landwirtschaftlich unbedenkliches Salz oder einen landwirtschaftlich unbedenklichen Ester davon, ausgewählt aus der aus Quinclorac, landwirtschaftlich unbedenklichen Salzen, Estern und Mischungen davon bestehenden Gruppe,

II. einen Herbizid-Safener, der dazu fähig sind, das Halauxifen für die *Brassica*-Arten unschädlich zu machen, oder ein landwirtschaftlich unbedenkliches Salz oder einen landwirtschaftlich unbedenklichen Ester davon, ausgewählt aus der aus Isoxadifen, Mefenpyr, landwirtschaftlich unbedenklichen Salzen, Estern und Mischungen davon bestehenden Gruppe,

III. eine Mischung von:

(i) einem oder mehreren aus der aus Quinclorac, landwirtschaftlich unbedenklichen Salzen, Estern und Kombinationen davon bestehenden Gruppe ausgewählten Herbiziden und

(ii) einem aus der aus Cloquintocet, Isoxadifen, Mefenpyr, landwirtschaftlich unbedenklichen Salzen, Estern und Mischungen davon bestehenden Gruppe ausgewählten Herbizid-Safener, oder

IV. eine Mischung von:

(i) einem oder mehreren aus der aus Clopyralid, Quinclorac, landwirtschaftlich unbedenklichen Salzen, Estern und Kombinationen davon bestehenden Gruppe ausgewählten Herbiziden und

(ii) einem aus der aus Isoxadifen, Mefenpyr, landwirtschaftlich unbedenklichen Salzen, Estern und Mischungen davon bestehenden Gruppe ausgewählten Herbizid-Safener.

**2.** Verfahren zum Schützen von *Brassica*-Arten, die gegenüber Verletzung durch Halauxifen oder ein landwirtschaftlich unbedenkliches Salz oder einen landwirtschaftlich unbedenklichen Ester davon empfindlich sind, umfassend das Ausbringen einer herbiziden Zusammensetzung auf die *Brassica*-Arten oder das Inkontaktbringen der Vegetation oder der dieser benachbarten Fläche damit, wobei die herbizide Zusammensetzung Folgendes umfasst:

a) eine herbizid wirksame Menge an Halauxifen oder eines landwirtschaftlich unbedenkliches Salzes oder Esters davon und

b) einen Safener, umfassend einen oder mehrere der Folgenden:

I. ein oder mehrere Herbizide, die dazu fähig sind, das Halauxifen für die *Brassica*-Arten unschädlich zu machen, oder ein landwirtschaftlich unbedenkliches Salz oder einen landwirtschaftlich unbedenklichen Ester davon, ausgewählt aus der aus Clopyralid, Quinclorac, landwirtschaftlich unbedenklichen Salzen, Estern und Kombinationen davon bestehenden Gruppe,

II. einen Herbizid-Safener, der dazu fähig sind, das Halauxifen für die *Brassica*-Arten unschädlich zu machen, oder ein landwirtschaftlich unbedenkliches Salz oder einen landwirtschaftlich unbedenklichen Ester davon, ausgewählt aus der aus Isoxadifen, Cloquintocet, Mefenpyr, landwirtschaftlich unbedenklichen Salzen, Estern und Mischungen davon bestehenden Gruppe,

III. eine Mischung von:

(i) dem einen oder den mehreren Herbizide, die dazu fähig sind, das Halauxifen für die *Brassica*-Arten unschädlich zu machen, oder eines landwirtschaftlich unbedenklichen Salzes oder eines landwirtschaftlich unbedenklichen Esters davon, ausgewählt aus der aus Clopyralid, Quinclorac, landwirtschaftlich unbedenklichen Salzen, Estern und Kombinationen davon bestehenden Gruppe, un

(ii) einem Herbizid-Safener, der dazu fähig sind, das Halauxifen für die *Brassica*-Arten unschädlich zu machen, oder einem landwirtschaftlich unbedenklichen Salz oder einem landwirtschaftlich unbedenklichen Ester davon.

**3.** Zusammensetzung nach Anspruch 1 oder Verfahren nach Anspruch 2, wobei es sich bei (a) um Halauxifen oder Halauxifen-methyl handelt.

**4.** Verfahren nach Anspruch 2 oder 3, wobei (i) aus der aus Clopyralid, Quinclorac, landwirtschaftlich unbedenklichen Salzen, Estern und Mischungen davon bestehenden Gruppe ausgewählt ist.

**5.** Zusammensetzung nach Anspruch 1 oder 3, wobei es sich bei (i) um Quinclorac oder ein landwirtschaftlich unbedenkliches Salz oder einen an landwirtschaftlich unbedenklichen Ester davon oder um Clopyralid oder ein landwirtschaftlich unbedenkliches Salz oder einen landwirtschaftlich unbedenklichen Ester davon und Quinclorac oder ein

landwirtschaftlich unbedenkliches Salz oder einen landwirtschaftlich unbedenklichen Ester davon handelt.

**6.** Verfahren nach Anspruch 2 oder 3, wobei es sich bei (i) um Clopyralid oder ein landwirtschaftlich unbedenkliches Salz oder einen landwirtschaftlich unbedenklichen Ester davon, um Quinclorac oder ein landwirtschaftlich unbedenkliches Salz oder einen landwirtschaftlich unbedenklichen Ester davon oder um Clopyralid oder ein landwirtschaftlich unbedenkliches Salz oder einen landwirtschaftlich unbedenklichen Ester davon und Quinclorac oder ein landwirtschaftlich unbedenkliches Salz oder einen landwirtschaftlich unbedenklichen Ester davon handelt.

**7.** Zusammensetzung nach einem der Ansprüche 1, 3 und 5 oder Verfahren nach einem der Ansprüche 2, 3, 4 und 6, wobei das Gewichtsverhältnis von (a) zu (i) 1:300 bis 1:1,2 oder etwa 1:200 bis etwa 1:2 oder etwa 1:80 bis etwa 1:5 beträgt.

**8.** Zusammensetzung nach einem der Ansprüche 1, 3 und 5 oder Verfahren nach einem der Ansprüche 2, 3, 4 und 6, wobei das Gewichtsverhältnis von (a) zu (ii) etwa 1:50 bis etwa 10:1 oder etwa 1:36 bis etwa 5:1 oder etwa 1:16 bis etwa 2:1 beträgt.

**9.** Zusammensetzung nach einem der Ansprüche 1, 3 und 5, wobei das Gewichtsverhältnis von (a) zu (i) zu (ii) etwa 1-25 (a) zu etwa 1,2-300 (i) zu etwa 1-50 (ii) oder etwa 1-5 (a) zu etwa 2-200 (i) zu etwa 1-36 (ii) oder etwa 1- 2 (a) zu etwa 5-80 (i) zu etwa 1-16 (ii) beträgt.

**10.** Verfahren nach einem der Ansprüche 2, 3, 4 und 6, wobei das Gewichtsverhältnis von (a) zu (i) zu (ii) 1:300:50 bis 25:1.2:1 oder etwa 1:200:36 bis etwa 5:2:1 oder etwa 1:80:16 bis etwa 2:5:1 beträgt.

**11.** Verfahren nach einem der Ansprüche 2, 3, 4, 6-8 und 10, wobei die mit einem Safener versehene herbizide Zusammensetzung weiterhin ein landwirtschaftlich unbedenkliches Adjuvans oder einen landwirtschaftlich unbedenklichen Träger umfasst.

**12.** Verfahren nach einem der Ansprüche 2, 3, 4, 6-8, 10 und 11, wobei (a) und (b) vor dem Auflaufen oder nach dem Auflaufen auf die Brassica-Arten oder die unerwünschte Vegetation ausgebracht werden.

**13.** Verfahren nach einem der Ansprüche 2, 3, 4, 6-8 und 10-12, wobei die *Brassica-Art* gegenüber 5-Enolpyruvylshikimat-3-phosphat(EPSP)synthasehemmern tolerant, gegenüber Glutaminsynthetasehemmern tolerant, gegenüber synthetischen Auxinen tolerant, gegenüber Acetyl-CoA-Carboxylase(ACCase)-Inhibitoren tolerant, gegenüber Acetolactatsynthase(ALS)-Inhibitoren tolerant, gegenüber 4-Hydroxyphenylpyruvatdioxygenase(HPPD)-Inhibitoren tolerant, gegenüber Protoporphyrinogenoxidase(PPO)-Inhibitoren tolerant oder gegenüber Photosystem-II-Inhibitoren tolerant ist, wobei die gegenüber 5-Enolpyruvylshikimat-3-phosphat(EPSP)-synthasehemmern tolerante *Brassica*-Art vorzugsweise gegenüber Glyphosat tolerant ist oder wobei die gegenüber Glutaminsynthetashemmern tolerante *Brassica*-Art vorzugsweise gegenüber Glufosinat tolerant ist oder wobei die gegenüber synthetischen Auxinen tolerante *Brassica*-Art vorzugsweise gegenüber Dicamba tolerant, gegenüber Phenoxyauxin tolerant oder gegenüber Pyridyloxyauxin tolerant ist oder wobei die gegenüber Acetyl-CoA-Carboxylase(ACCase)-Inhibitoren tolerante *Brassica*-Art vorzugsweise gegenüber Aryloxyphenoxypropionat tolerant ist oder wobei die gegenüber Acetolactatsynthase(ALS)-Inhibitoren tolerante *Brassica*-Art vorzugsweise gegenüber Imidazolinon tolerant ist, gegenüber Sulfonylharnstoff tolerant ist, gegenüber Pyrimidinylthiobenzoat tolerant ist, gegenüber Triazolopyrimidin tolerant ist oder gegenüber Sulfonylaminocarbonyltriazolinon tolerant ist oder wobei die gegenüber Photosystem-II-Inhibitoren tolerante *Brassica*-Art vorzugsweise gegenüber Triazin tolerant ist oder gegenüber Bromoxynil tolerant ist.

**14.** Verfahren nach einem der Ansprüche 2, 3, 4, 6-8, and 10-12, wobei die *Brassica-Art* mehrere oder kombinierte Merkmale ("stacked traits") umfasst, die Toleranz gegenüber mehreren chemischen Mechanismen und/oder mehreren Wirkweisen verleihen, oder wobei die *Brassica*-Art ausgewählt ist aus einer Gruppe, die aus allen Sorten von Canola und Raps (*Brassica napus,* BRSNN), Futter-Brassica, Garten-Brassica und samenproduzierenden Brassica, Sommerraps oder argentinischer Sommerraps (*Brassica napus,* BRSNS), Winterraps (*Brassica napus,* BRSNW), Roundup Ready®-Canola (*Brassica napus,* RR-BRSNN), Nexera™-Canola (*Brassica napus,* BRSNN-NEX), Markstammkohl (*Brassica oleracea* var. acephala subvar. medullosa, BRSOM), Aparima Gold Rübe *(Brassica* sp., BRSSS), Steckrübe (*Brassica napus* var. napobrassica, BRSNA), Rübsen oder polnischer Canola (*Brassica rapa,* BRSRR), Kai-lan oder chinesischer Brokkoli (*Brassica alboglabra,* BRSAG) und Juncea-Canola oder brauner Senf (*Brassica juncea,* BRSJU) besteht.

## Revendications

1. Composition herbicide phytoprotectrice pour une utilisation dans l'espèce *Brassica* susceptible d'une lésion par l'halauxifène ou un sel ou un ester acceptable sur le plan agricole correspondant comprenant :

   a) une quantité efficace sur le plan herbicide d'halauxifène ou d'un sel ou d'un ester acceptable sur le plan agricole correspondant ; et
   b) un phytoprotecteur comprenant l'un ou plusieurs parmi :

      i. un ou plusieurs herbicides capables de phytoprotéger l'halauxifène à l'espèce *Brassica,* ou un sel ou un ester acceptable sur le plan agricole correspondant qui est/sont choisis dans le groupe constitué par quinclorac, des sels, des esters et des mélanges acceptables sur le plan agricole correspondants;
      ii. un phytoprotecteur herbicide capable de phytoprotéger l'halauxifène à l'espèce *Brassica,* ou un sel ou un ester acceptable sur le plan agricole correspondant qui est choisi dans le groupe constitué par isoxadifène, méfenpyr, des sels, des esters et des mélanges acceptables sur le plan agricole correspondants;
      iii. un mélange de :

         (i) un ou plusieurs herbicides choisis dans le groupe constitué par quinclorac, des sels, des esters et des mélanges acceptables sur le plan agricole correspondants ;
         (ii) un phytoprotecteur herbicide choisi dans le groupe constitué par cloquintocet, isoxadifène, méfenpyr, des sels, des esters et des mélanges acceptables sur le plan agricole correspondants ; ou

      iv. un mélange de :

         (i) un ou plusieurs herbicides choisis dans le groupe constitué par clopyralyd, quinclorac, des sels, des esters et des mélanges acceptables sur le plan agricole correspondants ; et
         (ii) un phytoprotecteur herbicide choisi dans le groupe constitué par isoxadifène, méfenpyr, des sels, des esters et des mélanges acceptables sur le plan agricole correspondants.

2. Procédé pour la phytoprotection de l'espèce *Brassica* susceptible d'une lésion par l'halauxifène ou un sel ou un ester acceptable sur le plan agricole correspondant, comprenant l'application sur l'espèce *Brassica,* la mise en contact de la végétation, ou une zone adjacente à celle-ci, avec une composition herbicide comprenant :

   a) une quantité efficace sur le plan herbicide d'halauxifène ou d'un sel ou d'un ester acceptable sur le plan agricole correspondant ; et
   b) un phytoprotecteur comprenant l'un ou plusieurs parmi :

      i. un ou plusieurs herbicides capables de phytoprotéger l'halauxifène à l'espèce *Brassica,* ou un sel ou un ester acceptable sur le plan agricole correspondant qui est/sont choisis dans le groupe constitué par clopyralid, quinclorac, des sels, des esters et des mélanges acceptables sur le plan agricole correspondants ;
      ii. un phytoprotecteur herbicide capable de phytoprotéger l'halauxifène à l'espèce *Brassica,* ou un sel ou un ester acceptable sur le plan agricole correspondant qui est choisi dans le groupe constitué par isoxadifène, cloquintocet, méfenpyr, des sels, des esters et des mélanges acceptables sur le plan agricole correspondants ;
      iii. un mélange de :

         (i) l'herbicide ou les herbicides capables de phytoprotéger l'halauxifène à l'espèce *Brassica,* ou un sel ou un ester acceptable sur le plan agricole correspondant qui est/sont choisis dans le groupe constitué par clopyralid, quinclorac, des sels, des esters et des mélanges acceptables sur le plan agricole correspondants ; et
         (ii) un phytoprotecteur herbicide capable de phytoprotéger l'halauxifène à l'espèce *Brassica,* ou un sel ou un ester acceptable sur le plan agricole correspondant.

3. Composition selon la revendication 1 ou procédé selon la revendication 2, (a) étant l'halauxifène ou l'halauxifène-méthyle.

4. Composition selon l'une quelconque des revendications 2-3, (i) étant choisi parmi un groupe constitué par clopyralid, quinclorac, des sels, des esters et des mélanges acceptables sur le plan agricole correspondants.

5. Composition selon l'une quelconque des revendications 1 et 3, (i) étant quinclorac ou un sel ou un ester acceptable sur le plan agricole correspondant, ou clopyralid ou un sel ou un ester acceptable sur le plan agricole correspondant et quinclorac ou un sel ou un ester acceptable sur le plan agricole correspondant.

6. Composition selon l'une quelconque des revendications 2-3, (i) étant clopyralid ou un sel ou un ester acceptable sur le plan agricole correspondant, quinclorac ou un sel ou un ester acceptable sur le plan agricole correspondant, ou clopyralid ou un sel ou un ester acceptable sur le plan agricole correspondant et quinclorac ou un sel ou un ester acceptable sur le plan agricole correspondant.

7. Composition selon l'une quelconque des revendications 1, 3 et 5 ou procédé selon l'une quelconque des revendications 2, 3, 4 et 6, le rapport en poids de (a) sur (i) étant de 1 : 300 à 1 : 1,2 ou d'environ 1 : 200 à environ 1 : 2 ou d'environ 1 : 80 à environ 1 : 5.

8. Composition selon l'une quelconque des revendications 1, 3 et 5 ou procédé du procédé selon l'une quelconque des revendications 2, 3, 4 et 6, le rapport en poids de (a) sur (ii) étant d'environ 1 : 50 à environ 10 : 1 ou d'environ 1 : 36 à environ 5 : 1 ou d'environ 1 : 16 à environ 2 : 1.

9. Composition selon l'une quelconque des revendications 1, 3 et 5, le rapport en poids de (a) sur (i) sur (ii) étant d'environ 1 à 25 de (a) à environ 1,2 à 200 de (i) à environ 1 à 50 de (ii) ou d'environ 1 à 5 de (a) à environ 2 à 200 de (i) à environ 1 à 36 de (ii) ou d'environ 1 à 2 de (a) à environ 5 à 80 de (i) à environ 1 à 16 de (ii).

10. Procédé selon l'une quelconque des revendications 2, 3, 4 et 6, le rapport en poids de (a) sur (i) sur (ii) étant de 1 : 300 : 50 à 25 : 1,2 : 1 ou d'environ 1 : 200 : 36 à environ 5 : 2 : 1 ou d'environ 1 : 80 : 16 à environ 2 : 5 : 1.

11. Procédé selon l'une quelconque des revendications 2, 3, 4, 6 à 8 et 10, la composition herbicide phytoprotectrice comprenant en outre un adjuvant ou un support acceptable sur le plan agricole.

12. Procédé selon l'une quelconque des revendications 2, 3, 4, 6 à 8, 10 et 11, les (a) et (b) étant appliqués de manière pré-émergente ou post-émergente sur l'espèce *Brassica* ou la végétation indésirable.

13. Procédé selon l'une quelconque des revendications 2, 3, 4, 6 à 8, et 10 à 12, l'espèce *Brassica* étant tolérante à un inhibiteur de 5-énolpyruvylshikimate-3-phosphate (EPSP) synthase, tolérante à un inhibiteur de glutamine synthétase, tolérante à une auxine synthétique, tolérante à un inhibiteur de acétyl-CoA-carboxylase (ACCase), tolérante à un inhibiteur d'acétolactate synthase (ALS), tolérante à un inhibiteur de 4-hydroxyphényl-pyruvate dioxygénase (HPPD), tolérante à un inhibiteur de protoporphyrinogène oxydase (PPO) ou tolérante à un inhibiteur du photosystème II, préférablement l'espèce *Brassica* tolérante à un inhibiteur de 5-énolpyruvylshikimate-3-phosphate (EPSP) synthase étant tolérante au glyphosate ou, l'espèce *Brassica* tolérante à un inhibiteur de glutamine synthétase étant tolérante au glufosinate, ou l'espèce *Brassica* tolérante à une auxine synthétique étant tolérante au dicamba, tolérante à une phénoxy auxine ou tolérante à une pyridinyloxy auxine, l'espèce *Brassica* tolérante à un inhibiteur de acétyl-CoA-carboxylase (ACCase) étant tolérante à un aryloxyphénoxypropionate, ou l'espèce *Brassica* tolérante à un inhibiteur d'acétolactate synthase (ALS) étant tolérante à une imidazolinone, tolérante à une sulfonylurée, tolérante à un pyrimidinylthiobenzoate, tolérante à une triazolopyrimidine, ou tolérante à une sulfonylaminocarbonyltriazolinone, ou l'espèce *Brassica* tolérante à un inhibiteur du photosystème II étant tolérante à une triazine ou tolérante au bromoxynil.

14. Procédé selon l'une quelconque des revendications 2, 3, 4, 6 à 8, et 10 à 12, l'espèce *Brassica* comprenant des trais multiples ou empilés conférant une tolérance à plusieurs classes chimiques et/ou plusieurs modes d'action ou, l'espèce *Brassica* étant choisie dans un groupe constitué par toutes les variétés de canola et de colza (*Brassica napus,* BRSNN), de brassica fourragère, de brassica de jardin et de brassica productrice de graines, de colza de printemps ou de colza argentin de printemps (*Brassica napus,* BRSNS), de colza d'hiver (*Brassica napus,* BRSNW), de canola Roundup Ready® (*Brassica napus,* RR-BRSNN), canola Nexera™ (*Brassica napus,* BRSNN-NEX), de chou frisé (*Brassica oleracea* var. acephala subvar. medullosa, BRSOM), de chou-navet Aparima Gold *(Brassica sp.,* BRSSS), de rutabaga (*Brassica napus* var. napobrassica, BRSNA), de navet ou canola polonais (*Brassica rapa,* BRSRR), de chou frisé/chou chinois (*Brassica alboglabra,* BRSAG) et de canola Juncea ou moutarde brune (*Brassica juncea,* BRSJU).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2007082098 A2
- WO 2011144683 A1
- US 7314849 B2
- US 4902340 A


### Non-patent literature cited in the description


- McCutcheon's Detergents and Emulsifiers Annual. MC Publishing Corporation, 1998
- Encyclopedia of Surfactants. Chemical Publishing Company, vol. I-III, 1980-81
- *Weeds,* 1967, vol. 15, 20-22